# EUROPÄISCHE PATENTSCHRIFT

(11) **EP 0 525 572 B1**
(45) Veröffentlichungstag und Bekanntmachung des Hinweises auf die Patenterteilung: **04.09.1996**
(21) Anmeldenummer: 92112360.0
(22) Anmeldetag: 20.07.1992
(51) Int. Cl.: C09B 62/20, C09B 62/02, C09B 62/44

(54) **Reaktivfarbstoffe**
Reactive dyes
Colorants réactifs

(30) Priorität: 31.07.1991 DE 4125266
(43) Veröffentlichungstag der Anmeldung: 03.02.1993
(73) Patentinhaber: BAYER AG, 51368 Leverkusen (DE)
(72) Erfinder: Reddig, Wolfram, Dr., W-5060 Bergisch Gladbach 2 (DE); Herd, Karl-Josef, Dr., W-5068 Odenthal-Holz (DE)

(56) Entgegenhaltungen:
- DYES AND PIGMENTS, Band 14, Nr. 4, 1990, Seiten 239-263, Barking, Essex, GB; F. LEHR: "Synthesis and application of reactive dyes with heterocyclic reactive systems"

## Beschreibung

Gegenstand der Erfindung sind Reaktivfarbstoffe der Formel 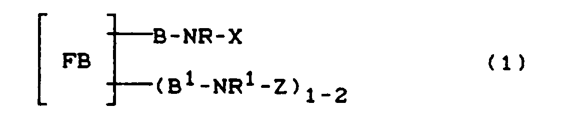 insbesondere Farbstoffe der Formel 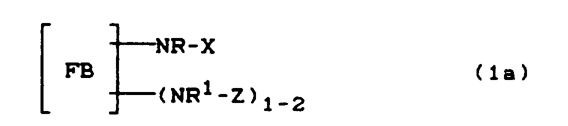 mit
- FB =: der Rest eines Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,
- B bzw. B¹=: unabhängig voneinander direkte Bindung oder Brückenglied an ein Ring C-Atom eines aromatischcarbocyclischen oder an ein Ring-C- oder -N-Atom eines aromatisch-heterocyclischen Ringes in FB,
- X =: 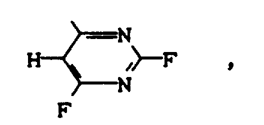
- Z =: heterocyclischer faserreaktiver Rest und
- R, R¹ =: unabhängig voneinander H, gegebenenfalls substituiertes C₁-C₆-Alkyl (bevorzugte Substituenten: Halogen, OH, COOH, SO₃H, OSO₃H).

Geeignete Brückenglieder B und B¹, die gleich oder verschieden sein können, sind beispielsweise 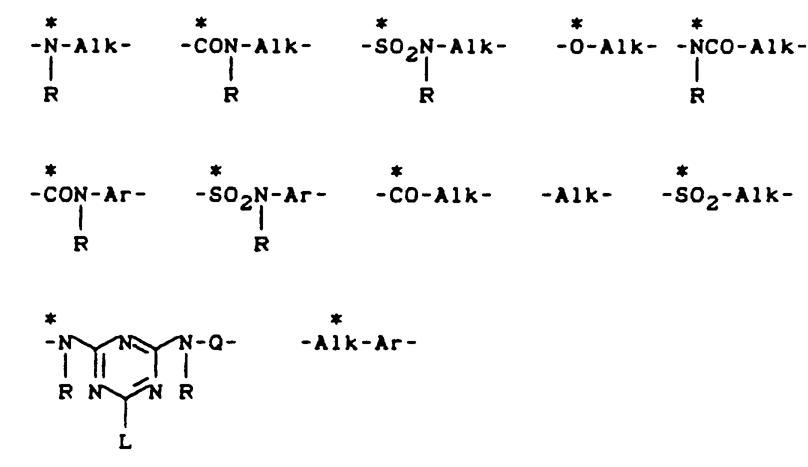 wobei der Stern die Verknüpfungsstelle mit FB markiert,
- R: die obengenannte Bedeutung hat,
- Alk: gegebenenfalls durch Heteroatome oder Heteroatome wie N, O oder S enthaltende Gruppierungen unterbrochenes, geradkettiges oder verzweigtes C₁-C₆-Alkylen,
- Ar: gegebenenfalls substituiertes Phenylen oder Naphthylen oder Rest eines Diphenyls oder Stilbens,
- Q: Alk oder Ar oder 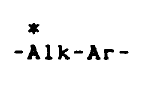 Alk oder Ar weitere Substituenten, beispielsweise F, Cl, Br, C₁-C₄-Alkyl, C₁-C₄-Alkoxy, Carboxy oder Sulfo enthalten können und
- L: F, Cl, Br,gegebenenfalls substituiertes Amino, OH, C₁-C₄-Alkoxy, gegebenenfalls substituiertes Phenoxy, C₁-C₄-Alkylthio bedeutet.

Geeignete faserreaktive Reste Z, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- odor asymmetrischen odor symmetrischen Triazinring, oder an ein derartiges Ringsystem, welches einen odor mehrere ankondensierte aromatisch-carbocyclische Ringe aufweist, bspw. ein Chinolin-, Phthalazin-, Cinnolin-, Chinazolin-, Chinoxalin-, Acridin-, Phenazin- oder Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-(N₃), Rhodanido, Thiolethor, Oxyether, Sulfinsäure und Sulfonsäure.

Im einzelnen sind beispielsweise zu nennen:

2,4-Difluortriazinyl-6-, 2,4-Dichlortriazinyl-6-, Mono-halogen-sym.-triazinylreste, insbesondere Monochlor- und Monofluortriazinylreste, die durch Alkyl, Aryl, Amino, Monoalkylamino, Dialkylmmino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, C₁-C₄-Alkoxy, Vinylsulfonyl-C₂-C₄-Alkoxy, substituierte Alkylsulfonyl-C₂-C₄-Alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Vinylsulfonyl, substituiertes Alkylsulfonyl, Hydroxy, Amino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluortriazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophnyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluortriazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Dioulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied 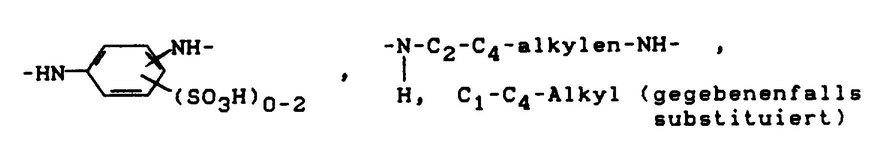 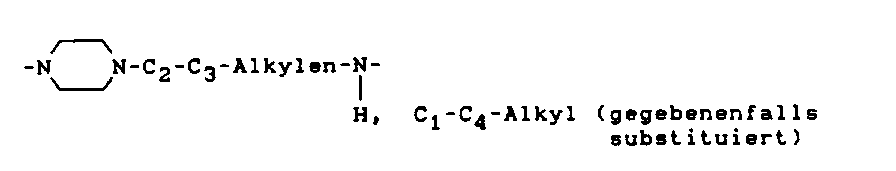 oder im Falle der Sulfatoethylsulfonyl- bzw. Vinylsulfonylgruppe über ein Brückenglied

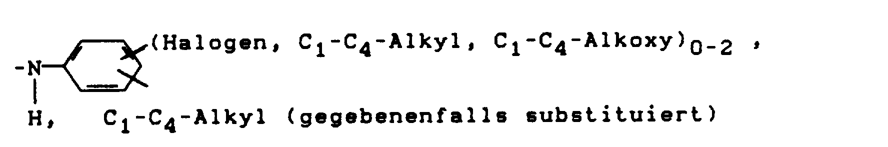

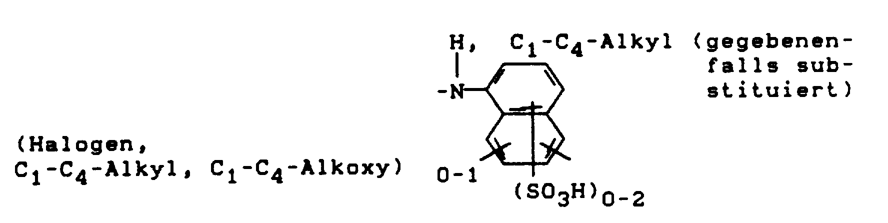

Bevorzugte Substituenten für C₁-C₄-Alkyl sind: COOH, Cl, OH, SO₃H und OSO₃H.

Beispiele für derartig verknüpfte Reste sind:

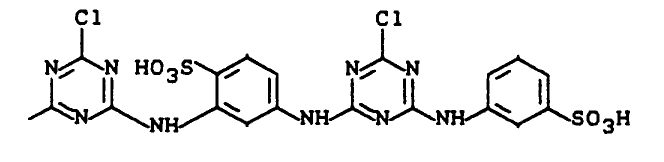

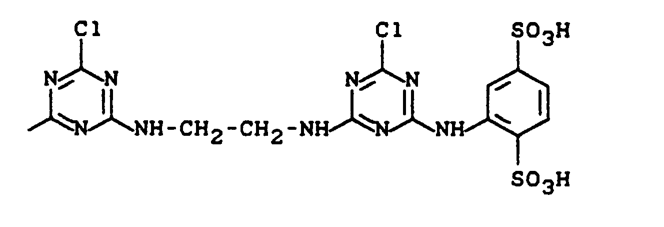

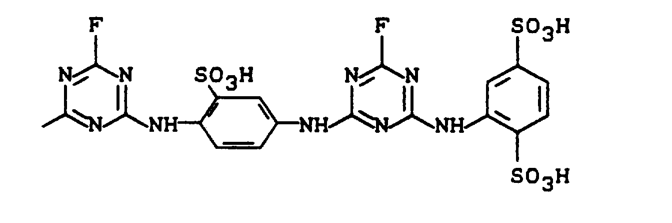

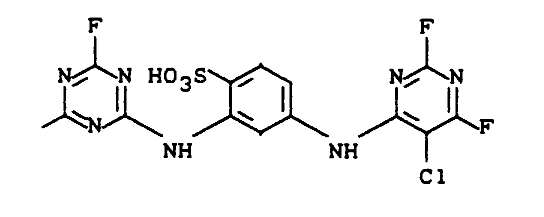

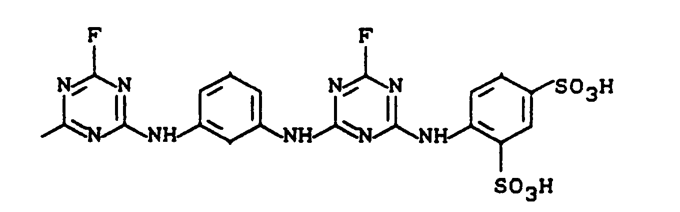

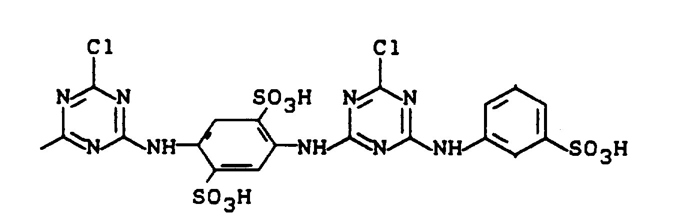

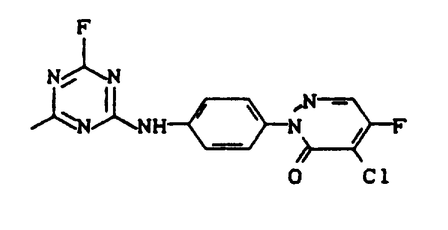

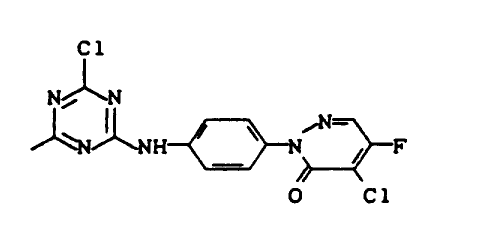

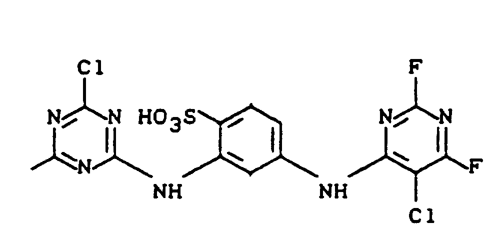

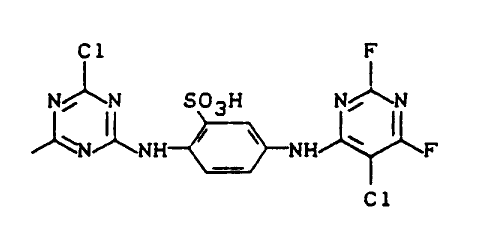

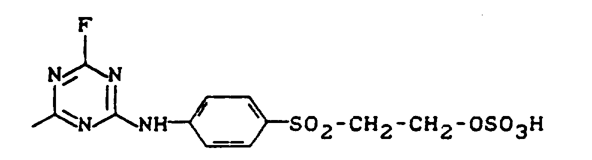

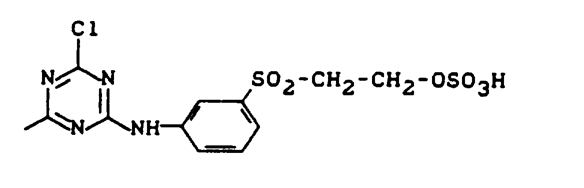

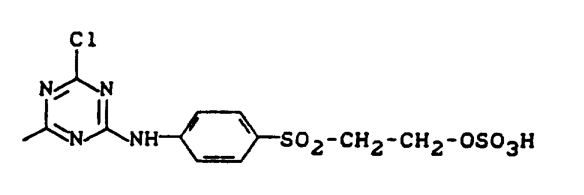

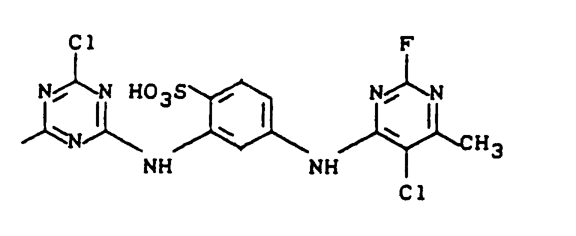

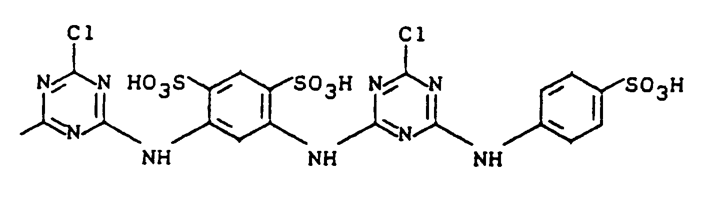

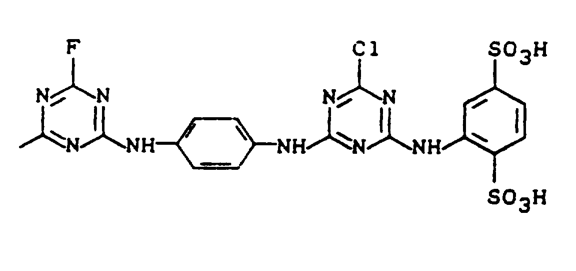

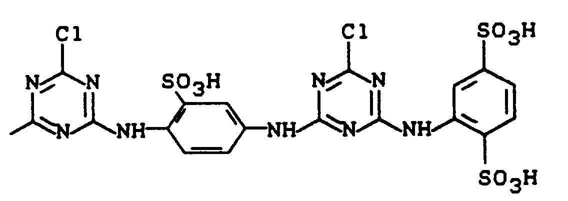

Weitere faserreaktive Reste sind:

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methyl sulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Metylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl-oder -4- oder -5-sulfonyl-, N-Oxid des 4-Chlor- oder 4-Nitrochinolin-5-carbonyl.

Bevorzugt sind Reaktivfarbstoffe der Formel (1), worin FB der Rest eines Mono- oder Disazofarbstoffes oder eines Metallkomplexazofarbstoffes ist.

In diesem Falle sind die Reste- -B-N(R)-X und -B¹-N(R¹)-Z an verschiedene oder gleiche Reste von Ausgangskomponenten, d.h. Diazo- und Kupplungskomponenten, gebunden. Vorzugsweise sind die Reste -B-N(R)-X und -B'-N(R')-Z an je eine Komponente, Diazokomponente oder Kupplungskomponente, gebunden. Die Reaktivfarbstoffe haben dann z.B. die Formel 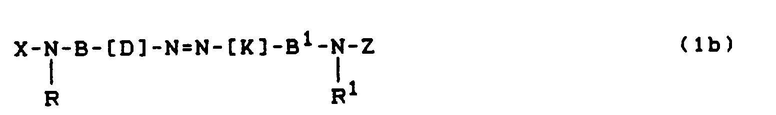 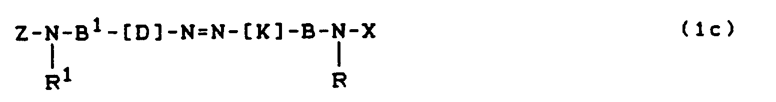 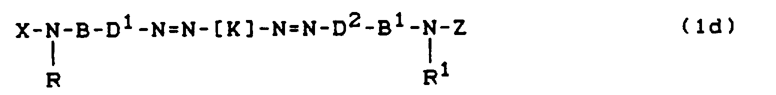 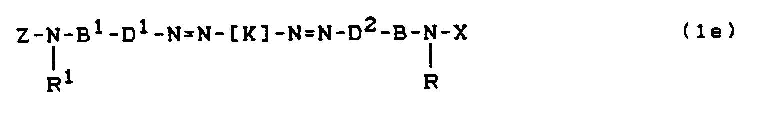 worin -K- in Formeln (1d) und (1e) für den Rest einer zweifach kuppelnden Kupplungskomponente steht.

Wenn beide Reste -B-N(R)-X und -B¹-N(R¹)-Z an den gleichen Rest einer Ausgangskomponente D oder K gebunden sind, so ist dies insbesondere der Rest der Kupplungskomponente K. Die Reaktivfarbstoffe entsprechen dann der Formel 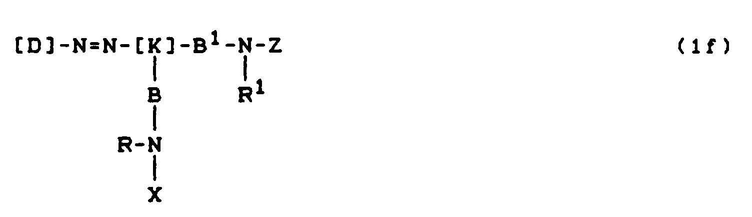 worin
- D, D¹, D² =: Rest einer Diazokomponente der Benzol- oder Naphthalinreihe,
- K =: Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

Die Reste D, D¹, D² und K können dabei mit weiteren Azogruppen oder mit azogruppenhaltigen Resten und ebenso, wie es für den Rest FB der Formel (1) weiter oben aufgeführt ist, substituiert sein, wobei X, Z, B, B¹, R und R¹ die oben angegebenen Bedeutungen haben.

Beispiele für D, D¹ und D² sind vorzugsweise gegebenenfalls durch SO₃H, Chlor, C₁-C₄-Alkoxy, C₁-C₄-Alkyl, Carbalkoxy oder Sulfonamido substituiertes Phenyl bzw. Phenylen, gegebenenfalls durch SO₃H, Chlor, C₁-C₄-Alkoxy oder C₁-C₄-Alkyl substituiertes Naphthyl bzw. Naphthylen, gegebenenfalls durch SO₃H substituiertes 4-(Phenylazo)phenyl und gegebenenfalls durch SO₃H substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl (bzw. carboxy)-pyrazolon-, einen 6-Hydroxy-2-pyridon- oder einen gegebenenfalls C₁-C₄-Alkyl- bzw. C₁-C₄-Alkoxy-ringsubstituierten Acetessigsäurearylid-Rest.

K kann die üblichen Substituenten, insbesondere Sulfonsäuregruppen aufweisen.

Ferner sind in Betracht zu ziehen, Reaktivfarbstoffe der Formel (1b) bis (1f), worin die Reste D, D¹, D² und K noch einen weiteren Reaktivrest enthalten können. Somit sind auch tri-und tetrareaktive Farbstoffe umfaßt, wobei jedoch mindestens ein Reaktivrest der 2,6-Difluor-4-pyrimidinyl-Rest ist. Die zusätzlichen, in D oder K eingeschlossenen Reaktivreste können, wie Z und X, über Aminogruppen, oder in anderer Weise, z.B. durch eine direkte Bindung an D bzw. K gebunden sein. Die obigen Erläuterungen gelten sinngemäß auch für die Metallkomplexe der Mono-und Disazofarbstoffe (1b - 1f).

Im besonderen bevorzugt sind erfindungsgemäße Reaktivfarbstoffe der Formel (1) bzw. (1a) - (1f), worin Z ein Rest der Formel 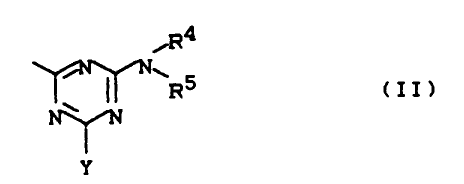 ist,
worin R⁴ und R⁵ unabhängig voneinander Wasserstoff, C₁₋ ₄-Alkyl, das gegebenenfalls substituiert ist durch Halogen, Cyan, C₁₋₄-Alkoxy, Hydroxy, Carboxy, Sulfo oder Sulfato, Benzyl, Phenethyl, Cyclohexyl, Phenyl oder - NHCH₂CH₂OCH₂CH₂-SO₂M (M = -CH=CH₂ oder -CH₂CH₂-V mit V = alkalisch eliminierbarer Rest); Phenyl, das gegebenenfalls substituiert ist durch Halogen, Nitro, Cyan, Trifluormethyl, Sulfamoyl, Carbamoyl, C₁₋₄-Alkyl, C₁₋₄-Alkoxy, C₁₋₄-Alkanoylamino, Benzoylamino, Ureido, Hydroxy, Carboxy, Sulfomethyl oder Sulfo, oder Naphthyl, das gegebenenfalls substituiert ist durch Halogen, Nitro, C₁₋₄-Alkoxy, C₁₋₄-Alkanoylamino, Hydroxy, Carboxy oder Sulfo, ist,
oder worin R⁴ und R⁵ zusammen mit dem Aminostickstoffatom einen Morpholino-, Piperidino- oder Piperazinorest bilden, und worin Y = Cl, F oder gegebenenfalls substituierter Pyridiniumrest ist.

Bevorzugt sind dabei Farbstoffe mit Y = F. Im Rahmen der Farbstoffe mit Y = Cl sind solche bevorzugt, bei denen -NR⁴R⁵ die oben angegebene Bedeutung hat aber nicht

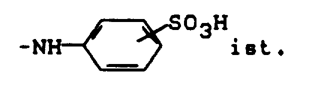

Weiterhin besonders bevorzugt sind die erfindungsgemäßen Farbstoffe, worin X und Z beide für den 2,6-Difluor-4-pyrimidinyl-Rest stehen.

Weiterhin bevorzugt sind Farbstoffe der Formel (1), in denen
- Z: für 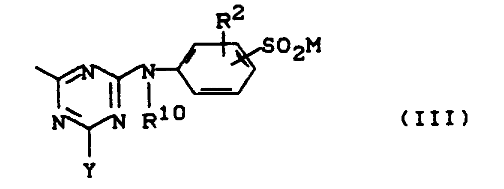 steht, worin
- Y =: Cl, F oder gegebenenfalls substituierter Pyridiniumrest ist,
- M =: CH=CH₂ oder CH₂CH₂-V, worin
- V =: alkalisch eliminierbarer Rest, z.B. OSO₃H, SSO₃H, OCOCH₃, OPO₃H₂, OSO₂CH₃, SCN, NHSO₂CH₃, Cl, Br, F, OCOC₆H₅, OSO₂-C₆H₄,[N(CH₃)₃]⁺Anion⁻ oder gegebenenfalls substituierter Pyridinium-Rest (Substituenten insbesondere gegebenenfalls substituiertes C₁-C₄-Alkyl, COOH, SO₃H, CN, Carbonamid) und
- R² =: H, Cl, Br, C₁-C₄-Alkyl, C₁-C₄-Alkoxy, CO₂H oder SO₃H
- R¹⁰ =: H, gegebenenfalls substituiertes C₁-C₆-Alkyl.

Bevorzugte Substituenten von R¹⁰ sind Halogen, OH, CO₂H, SO₃H, OSO₃H.

Bevorzugt sind Reaktivfarbstoffe der Formel 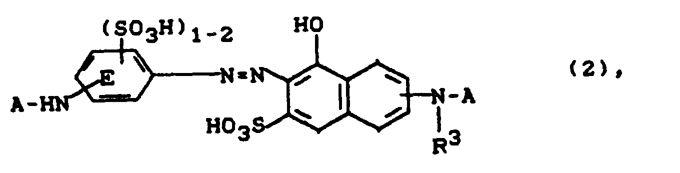 worin beide Reste A = X oder ein A = X und das andere A = Z ist, und X und Z die unter Formel (1) angegebenen Bedeutungen haben, R³ Wasserstoff, Methyl oder Ethyl ist, und der Benzolring E gegebenenfalls weitersubstituiert ist.

Bevorzugt sind ebenfalls Reaktivfarbstoffe der Formel 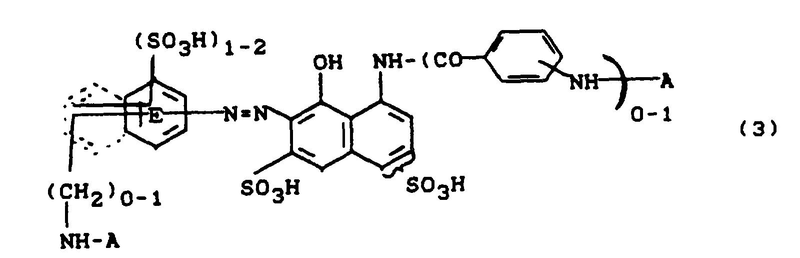 worin A und der Benzolring E die oben angegebene Bedeutung haben.

Bevorzugt sind insbesondere Reaktivfarbstoffe der Formel (2), worin der Benzolring E nicht weitersubstituiert ist, sowie Reaktivfarbstoffe der Formel (3), worin der Benzolring E nicht weitersubstituiert ist.

Bevorzugt sind ferner Reaktivfarbstoffe der Formel 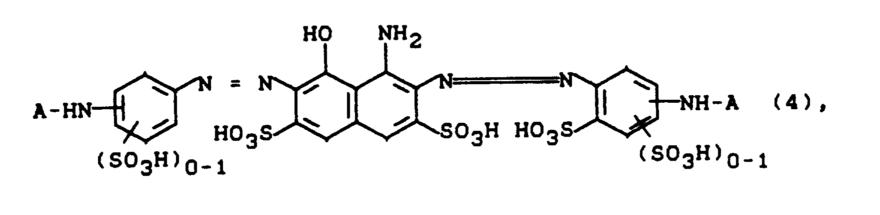 worin A die oben angegebene Bedeutung hat.

Außer den weiter oben beschriebenen Reaktivfarbstoffen der Formeln (2), (3) und (4) sind als weitere wertvolle Vertreter die Reaktivfarbstoffe der folgenden Formeln zu nennen: 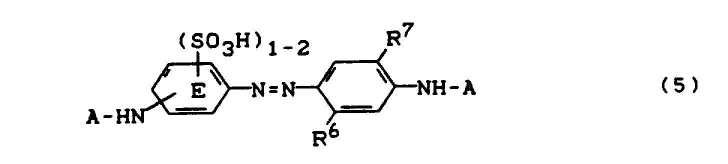 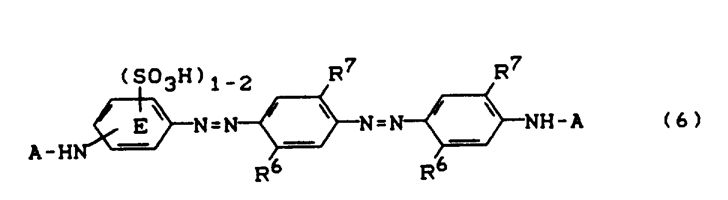 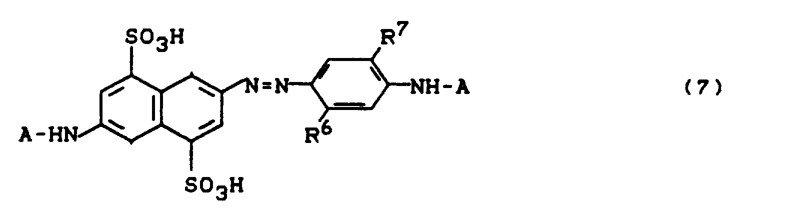 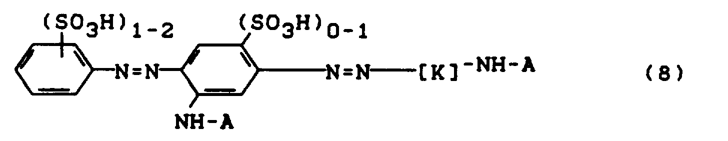 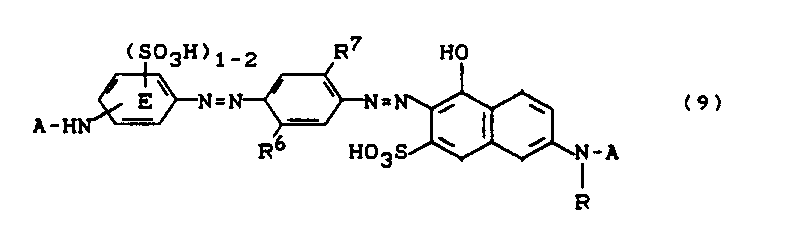 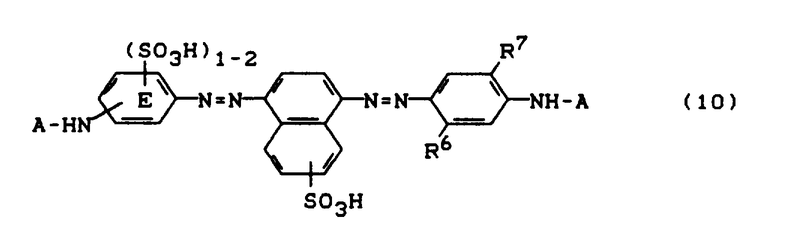 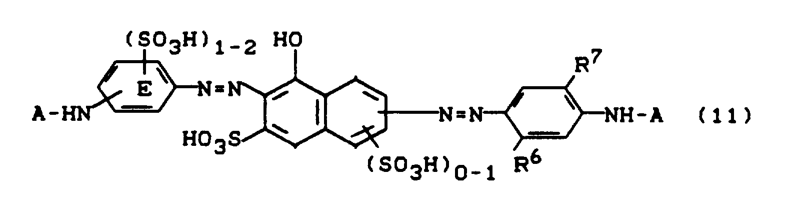 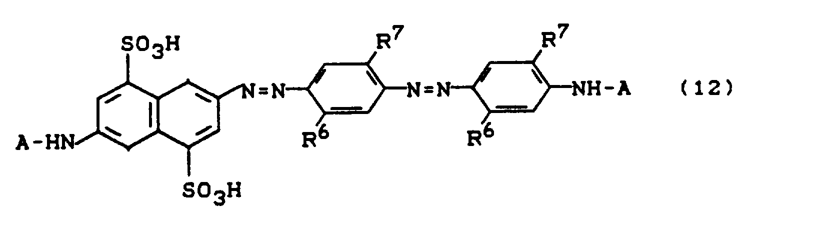 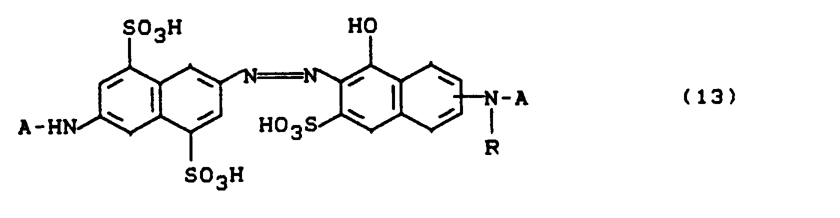 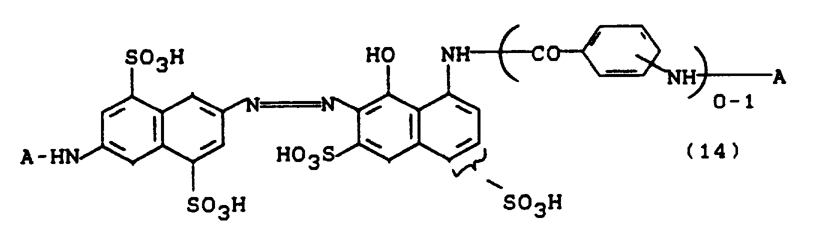 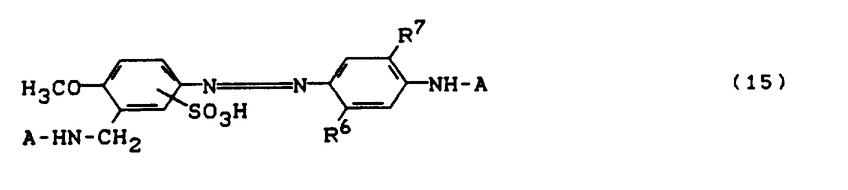 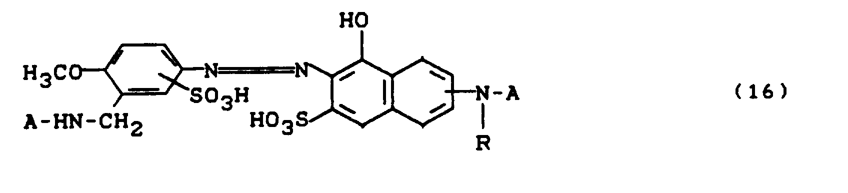 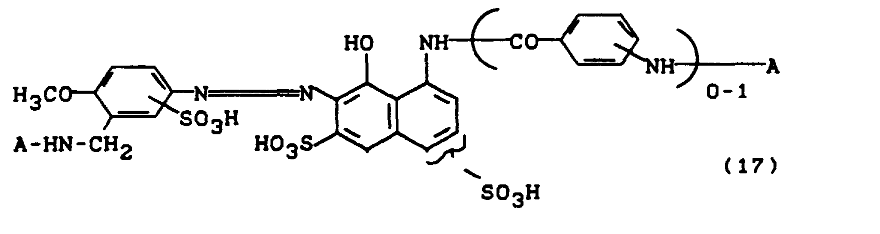 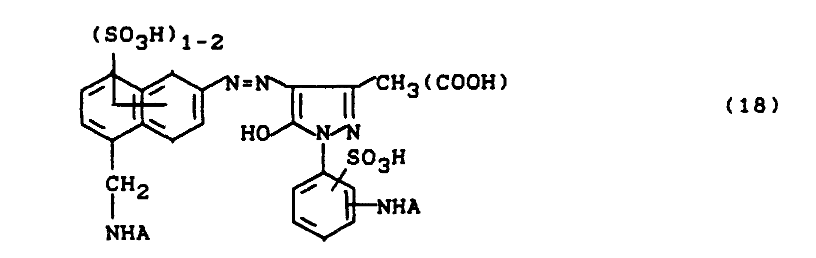 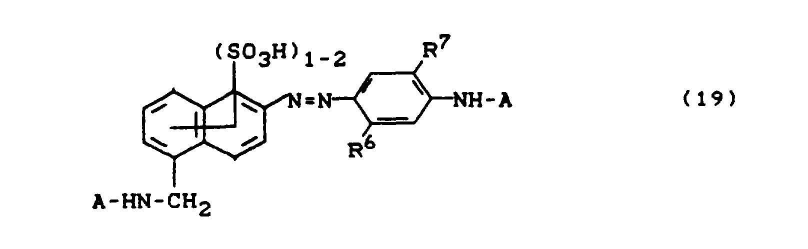 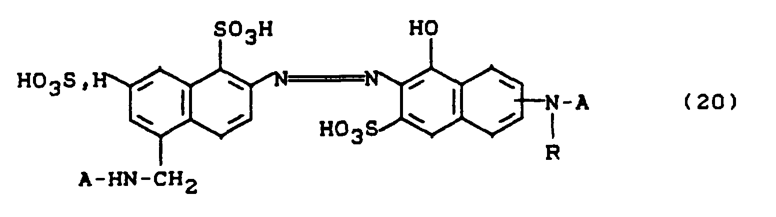 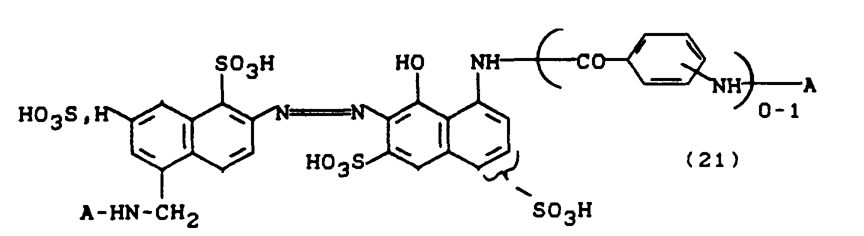 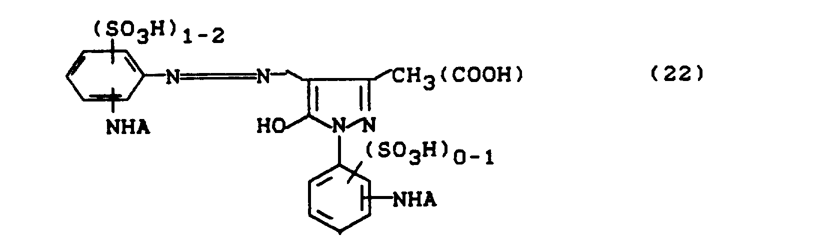 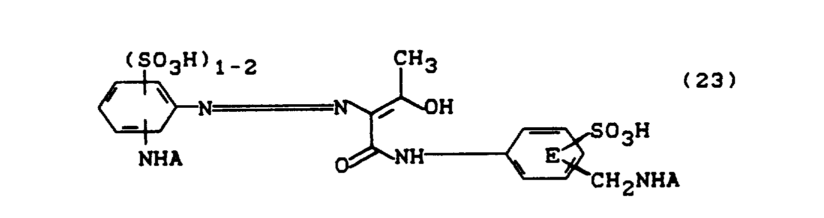 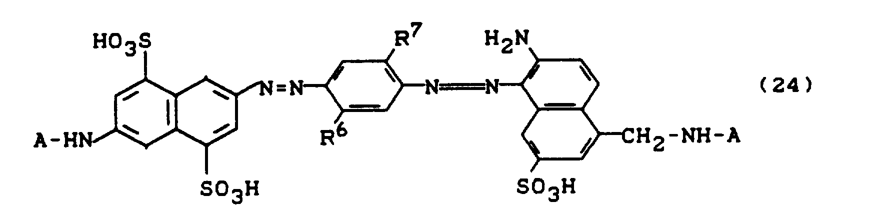 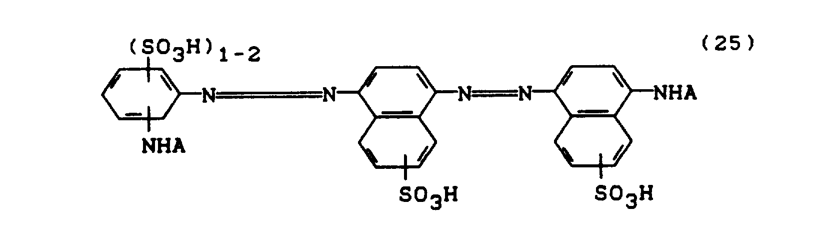 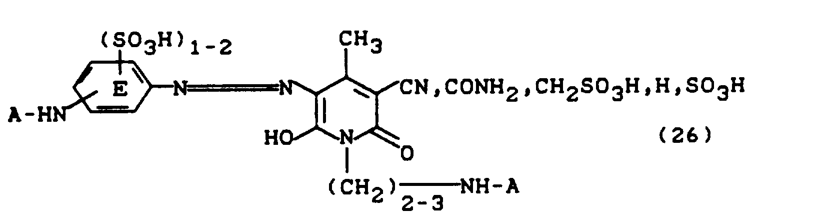 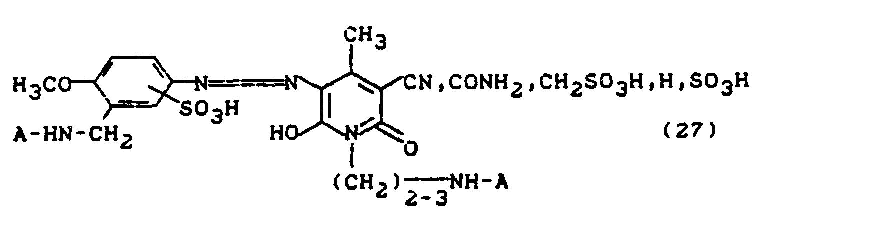 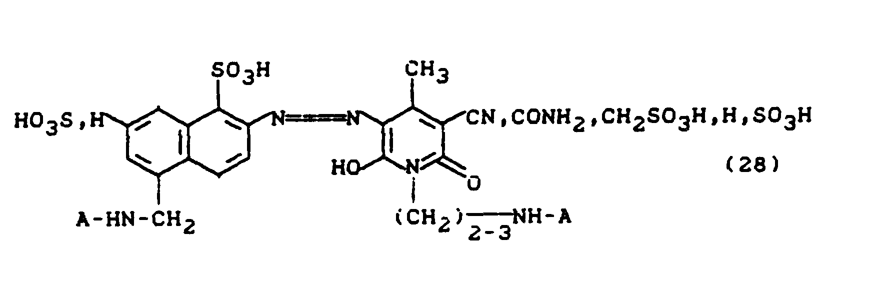 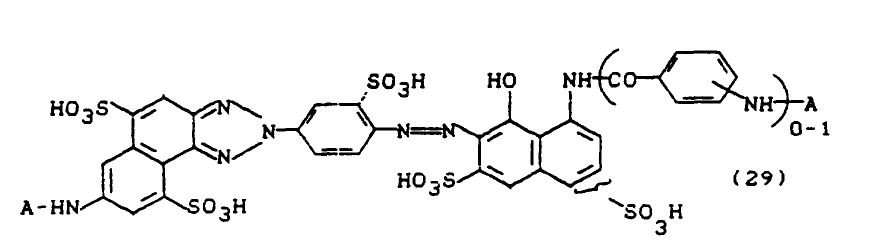 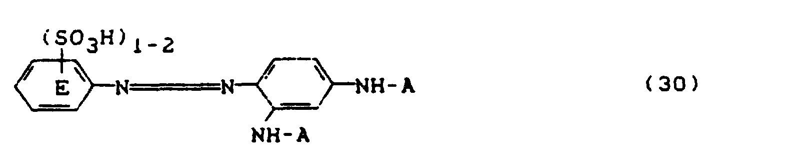 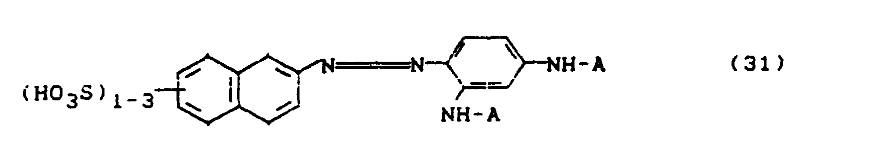 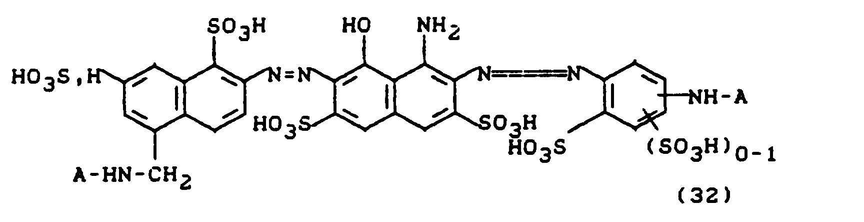 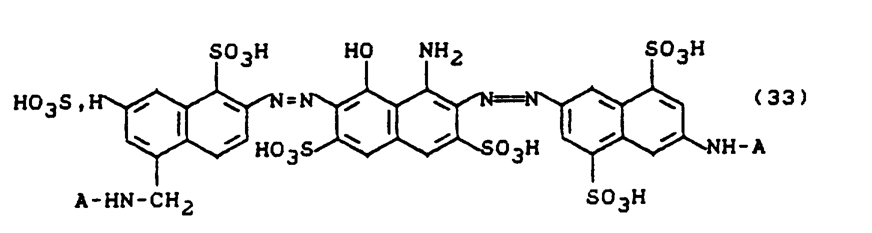 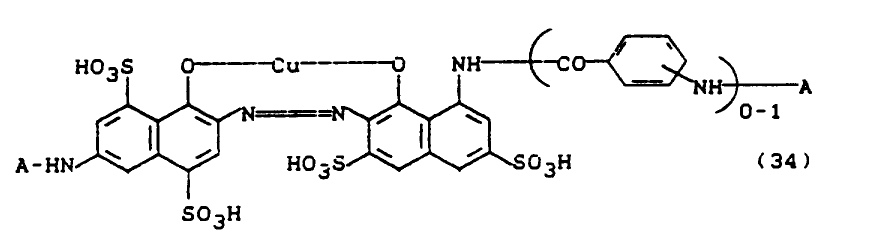 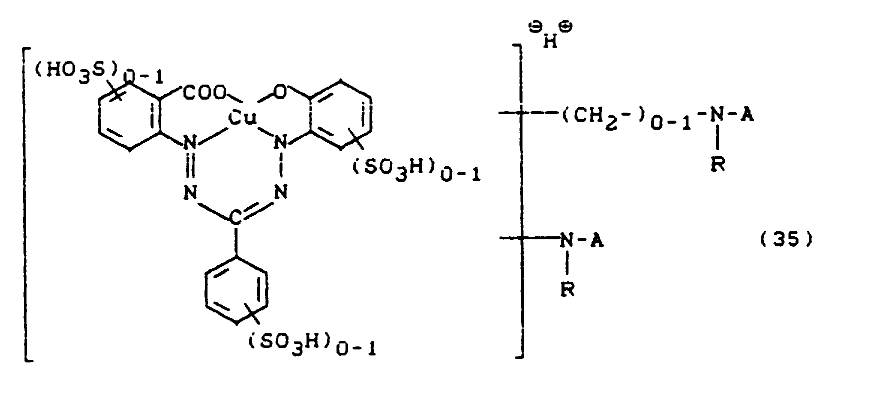 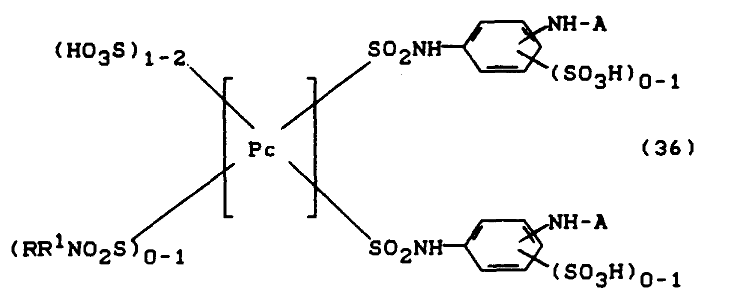 worin Pc für einen Cu- oder Ni-Phthalocyaninrest steht und die Gesamtzahl der Substituenten am Pc-Gerüst maximal 4 beträgt; R und R¹ die obengenannte Bedeutung besitzen, 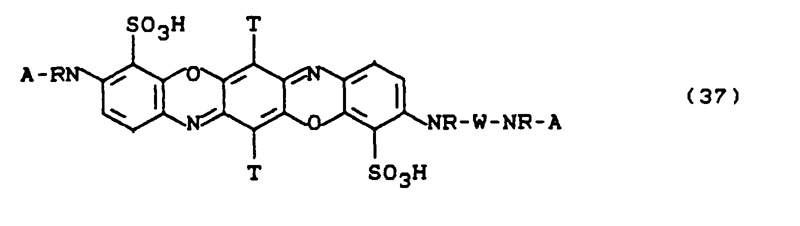 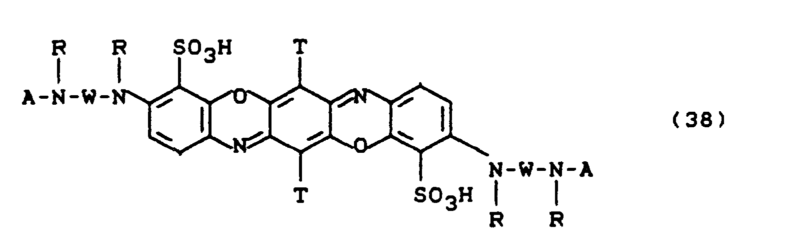 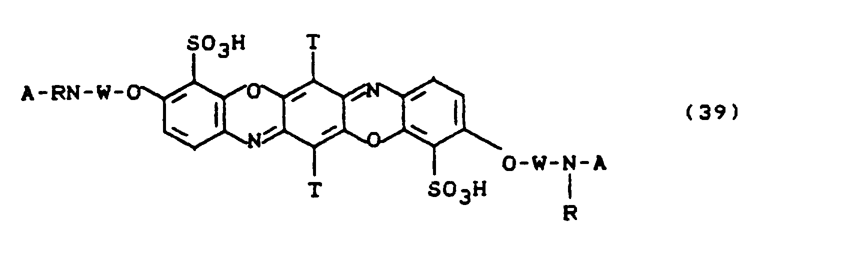 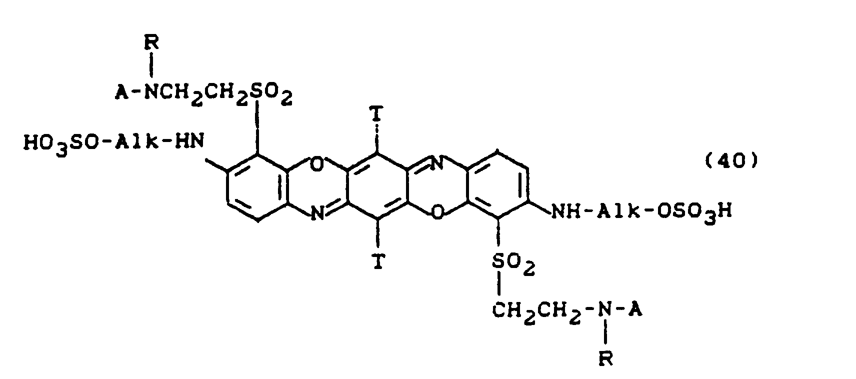 wobei T = Cl, Br, OCH₃ und A, E, R und Alk die oben angegebenen Bedeutungen haben,
- R₆ =: H, C₁-C₄-Alkyl, C₁-C₄-Alkoxy, Acylamino, insbesondere C₁-C₄-Alkylcarbonylamino, C₁-C₄-Alkylsulfonylamino, Aminocarbonylamino, gegebenenfalls substituiertes Phenylcarbonylamino, Cl, Br
- R₇ =: H, C₁-C₄-Alkyl, C₁-C₄-Alkoxy, OH, SO₃H.
- W =: aliphatisches Brückenglied, insbesondere C₂-C₄-Alkylen.

In den bevorzugten Reaktivfarbstoffen der Formeln (2) und (3) sind die Benzolringe E vorzugsweise ebenfalls nicht weitersubstituiert; als Diazokomponenten werden in diesem Falle vor allem die 1,3-Phenylen-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet. Der Rest R₃ in Formel (2) ist insbesondere Wasserstoff, Methyl oder Ethyl.

Bevorzugt sind vor allem Reaktivfarbstoffe der Formeln (2) bis (40), worin A ein unsubstituierter oder substituierter Aminofluor-s-triazin-Rest ist, wobei -NR₄R₅ vorzugsweise steht für: -NH₂, Morpholino, N-β-Hydroxyethylamino, N,N-Di-β-hydroxyethylamino, β-Sulfoethylamino, Phenylamino, das gegebenenfalls im Phenylkern substituiert ist durch Chlor, Methyl, Ethyl, Methoxy, Ethoxy, Acetylamino, Hydroxy, Carboxy, Sulfomethyl oder Sulfo, N-C₁₋₄-Alkyl-N-phenylamino, das gegebenenfalls im Phenylkern substituiert ist durch Chlor, Methyl oder Ethyl, N-Sulfo-C₁₋₄-alkyl-N-phenylamino, das gegebenenfalls im Phenylkern substituiert ist durch Chlor, Methyl oder Ethyl, N-Hydroxy-C₁₋₄-alkyl-N-phenylamino oder Sulfonaphthylamino ist, und der zweite Reaktivrest A für den 6-Fluor-5-chlorpyrimidyl-(4)-Rest steht, wie z.B. Farbstoffe der Formel (41)

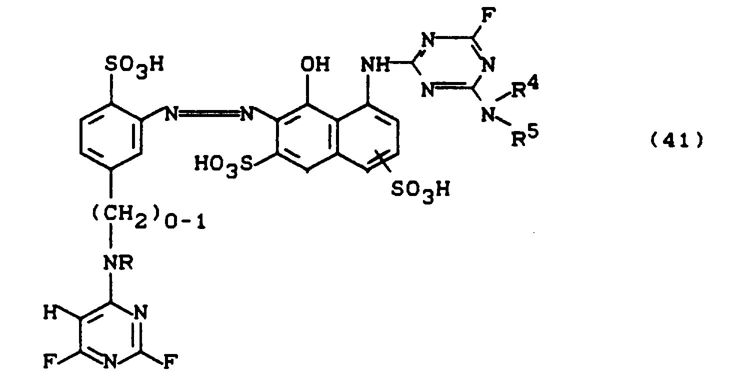

Bevorzugt sind Farbstoffe (2) bis (40), in denen beide Reste A für X stehen, sowie solche, in denen ein Rest A für X und der andere für 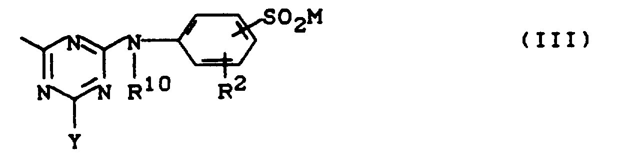 steht.

Ein Verfahren zur Herstellung der Farbstoffe (1) besteht darin, daß man Farbstoffe 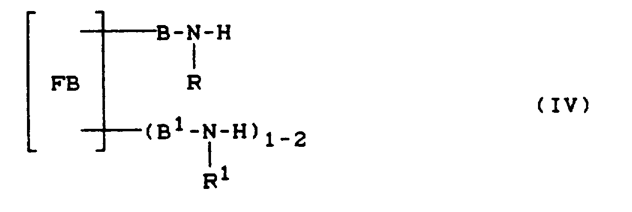 bzw. die entsprechenden Farbstoffvorprodukte mit 1 bis 2 Mol einer Reaktivkomponente 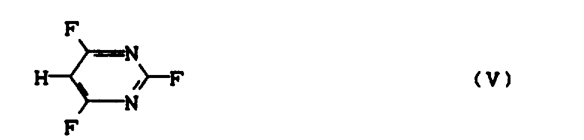 und gegebenenfalls 1 bis 2 Mol einer Reaktivkomponente

Z - Hal (VI)

worin Hal = Cl, Br oder F, umsetzt und im Falle der Verwendung von Vorprodukten diese anschließend in die gewünschten Endfarbstoffe überführt und gegebenenfalls weitere Umwandlungsreaktionen anschließt.

Bei der Herstellung der bevorzugten Azofarbstoffe müssen die Diazokomponenten und die Kupplungskomponenten zusammen zwei Aminogruppen -N(R)H und -N(R¹)H, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduzieren in die NH₂-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Halogentriazin- oder Halogenpyrimidinrestes etc. eintritt, muß ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z.B. die nachträgliche Umsetzung eines Dihalogentriazinylrestes mit einem Amin in Betracht. Welche Reaktion bei der Herstellung eines sekundären Kondensationsproduktes aus Amin HNR⁴R⁵, 2,4,6-Trihalogen-s-triazin und Diaminobenzolsulfonsäure zweckmäßigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen. Die wichtigsten Verfahrensvarianten sind in den Ausführungsbeispielen dargestellt.

Geeignete Ausgangsverbindungen für die Herstellung von Mono- oder Polyazofarbstoffen (1) sind beispielsweise:

### Diazokomponenten (D, D¹ und D²)

1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponenten in Frage, z.B. 1-Acetylamino-3-aminobenzol-4-sulfonsäure oder 1-Acetylamino-4-aminobenzol-3-sulfonsäure.

Falls die beiden Reste -B-N(R)-X und -B¹-N(R¹)-Z in Formel (1) an die gleiche Komponente, z.B. die Kupplungskomponente gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3-oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7-oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminobenzol-3,4'-disulfonsäure, 3-Methoxy-4-amino-6-methyl-azobenzol-2',4'-disulfonsäure oder 3-Methoxy-4-amino-6-methylazobenzol-2',5'-disulfonsäure.

### Kupplungskomponenten (K)

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynapahthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoethyl-3-cyan-4-methyl-6-hydroxypyridon-(2), 1-γ-Aminopropyl-3-sulfomethyl-4-methyl-6-hydroxypyridon-(2), 1,3-Diaminobenzol.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wäßriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wäßriger Alkalihydroxide, -carbonat oder -bicarbonate neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die durch Quarternierung mit Pyridinen entstehende Ladung wird, in Abhängigkeit der Isolierungsbedingungen, durch ein Gegenion z.B. Chlorid, Fluorid oder Sulfat ausgeglichen; oder die Farbstoffe bilden innere Salze mit Sulfo- oder Carboxylgruppen.

Alle Farbstoffe, insbesondere solche die in letzter Stufe mit Pyridinen umgesetzt werden, können je nach Reaktionsbedingungen als Gemische der β-Sulfatoethylsulfonylfarbstoffe und deren eliminierten Form dem Vinylsulfon vorliegen. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

### Färbevorschriften

Die in den folgenden Beispielen angegebenen Färbungen werden unter folgenden Bedingungen durchgeführt:

### Färbevorschrift 1

2 Teile des Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3 %igen kochenden Lösung eines ionenfreien Waschmittels, spült und trocknet.

### Färbevorschrift 2

4 Teile des Reaktivfarbstoffes werden in 50 Teilen Wasser gelöst. Dazu gibt man 50 Teile einer Lösung, die pro Liter 5 g Natriumhydroxid und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 h bei Raumtemperatur gelagert. Danach wird die gefärbte Ware gespült, während einer Viertelstunde mit einem nichtionogenen Waschmittel kochend geseift, nochmals gespült und getrocknet.

### Beispiel 1

a) 0,2 Mol 1-Amino-8-hydroxynaphthalin-3,6-disulfonsäure werden in 350 ml Wasser bei pH 6,5 gelöst und mit 350 g Eis auf 0°C abgekühlt. 0,21 Mol 2,4,6-Trifluor-1,3,5-triazin (Cyanurfluorid) werden zugegeben und der pH mit Na₂CO₃-Lösung zwischen 3,5 und 4 gehalten. Nach 5 Minuten setzt man 0,2 Mol Morpholin zu und stellt den pH mit Sodalösung auf 7 ein. Die Temperatur steigt dabei auf ca. 10°C an.
b) 0,2 Mol 2,6-Difluor-4-(3'-amino-4'-sulfophenyl)-pyrimidin (aus 2,4-Diaminobenzolsulfonsäure und 2,4,6-Trifluorpyrimidin hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0°C gerührt. Überschüssiges Natriumnitrit wird mit Amidosulfonsäure vernichtet und die so erhaltene Diazotierung zur Lösung der Kupplungskomponente a) gegeben. Mit Sodalösung wird ein pH von 6-7 eingestellt.

Nach beendeter Kupplung wird der Farbstoff ausgesalzen, isoliert, getrocknet und gemahlen. Der so erhaltene Farbstoff der Formel 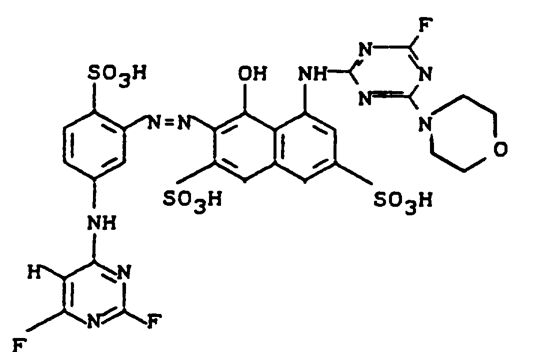 λₘₐₓ = 515 und 532 nm (H₂O)
färbt Baumwolle in klaren roten Tönen.

### Beispiel 2

a) 0,2 Mol 1,4-Diaminobenzoldisulfonsäure-2,5 werden in 500 ml Wasser mit konz. Natronlauge neutral gelöst. Man heizt auf 50°C auf und gibt 0,3 Mol 2,4,6-Trifluorpyrimidin zu. Durch gleichzeitige Zugabe von Sodalösung (20 g/100 ml) wird pH 7 gehalten. Die Reaktion ist nach 3 Std. beendet. Man kühlt auf 0°C ab und gibt 55 ml 30 %ige HCl zu. Innerhalb von 30 Minuten tropft man bei 0°C-5°C 47 ml Natriumnitritlösung (30 g/100 ml) ein. Die Diazotierung rührt 30 Minuten bei 0-5°C nach. Anschließend wird überschüssiges Nitrit mit Amidosulfonsäure zerstört.
b) 0,2 Mol 6-Amino-1-naphthol-3-sulfonsäure werden in 600 ml Wasser unter Zusatz von 38 ml 11 %iger Lithiumhydroxydlösung bei pH 7-7,5 gelöst. In 30 Minuten tropft man 0,21 Mol Cyanurfluorid zu. Man hält dabei durch gleichzeitiges Eintropfen von 11 %iger Lithiumhydroxidlösung einen pH-Wert von 3,7-4,1. Man rührt 5 Minuten nach und gibt 0,2 Mol Morpholin zu. Mit Sodalösung (20 g/100 ml) stellt man pH 7 ein. T = 5-8°C. Man rührt 15 Minuten nach und tropft innerhalb von 1 Stunde obige Diazotierung a) zu. Mit 1 molarer Nariumhydrogencarbonatlösung wird ein pH-Wert von 5,5-6,5 gehalten. Nach beendeter Kupplung salzt man mit NaCl aus, isoliert und trocknet. Der Farbstoff der Formel 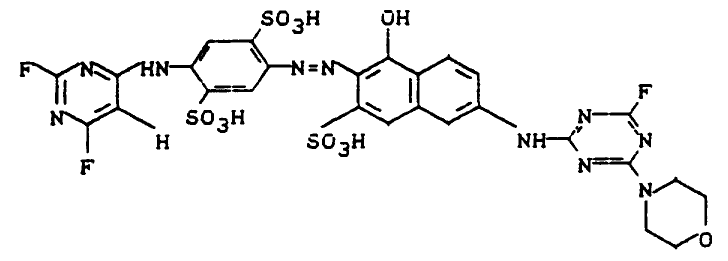 färbt Baumwolle in roten Tönen.

Die Farbstoffe der folgenden Beispiele 3-31 der allgemeinen Formel 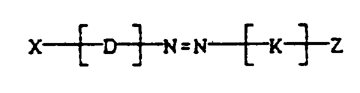 lassen sich auf analoger Weise herstellen unter Verwendung der aufgeführten Diazo- bzw. Kupplungskomponenten und Amine. Sie färben Baumwolle in den aufgeführten Farbtönen.

X hat die in Formel (1) angegebene Bedeutung.

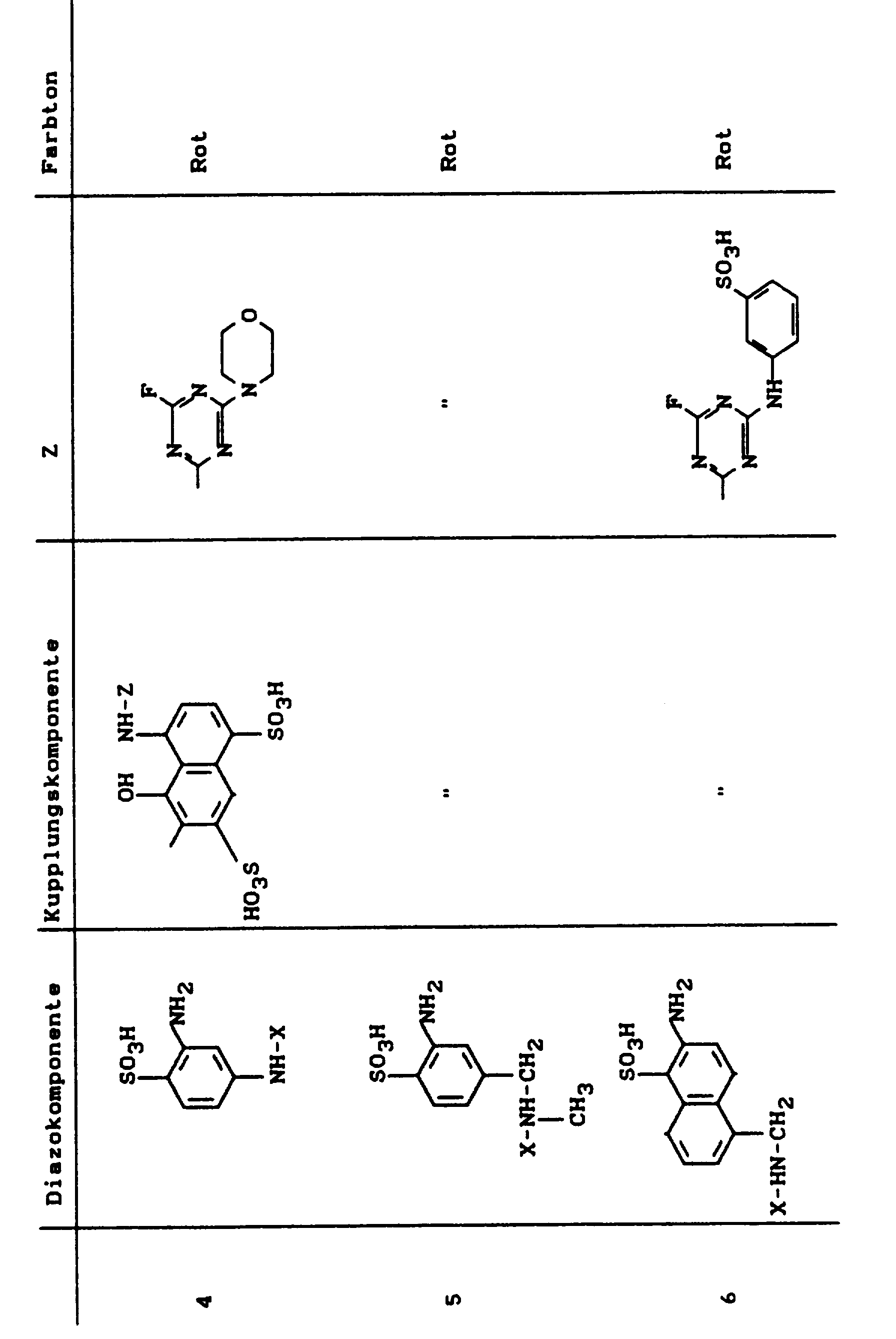

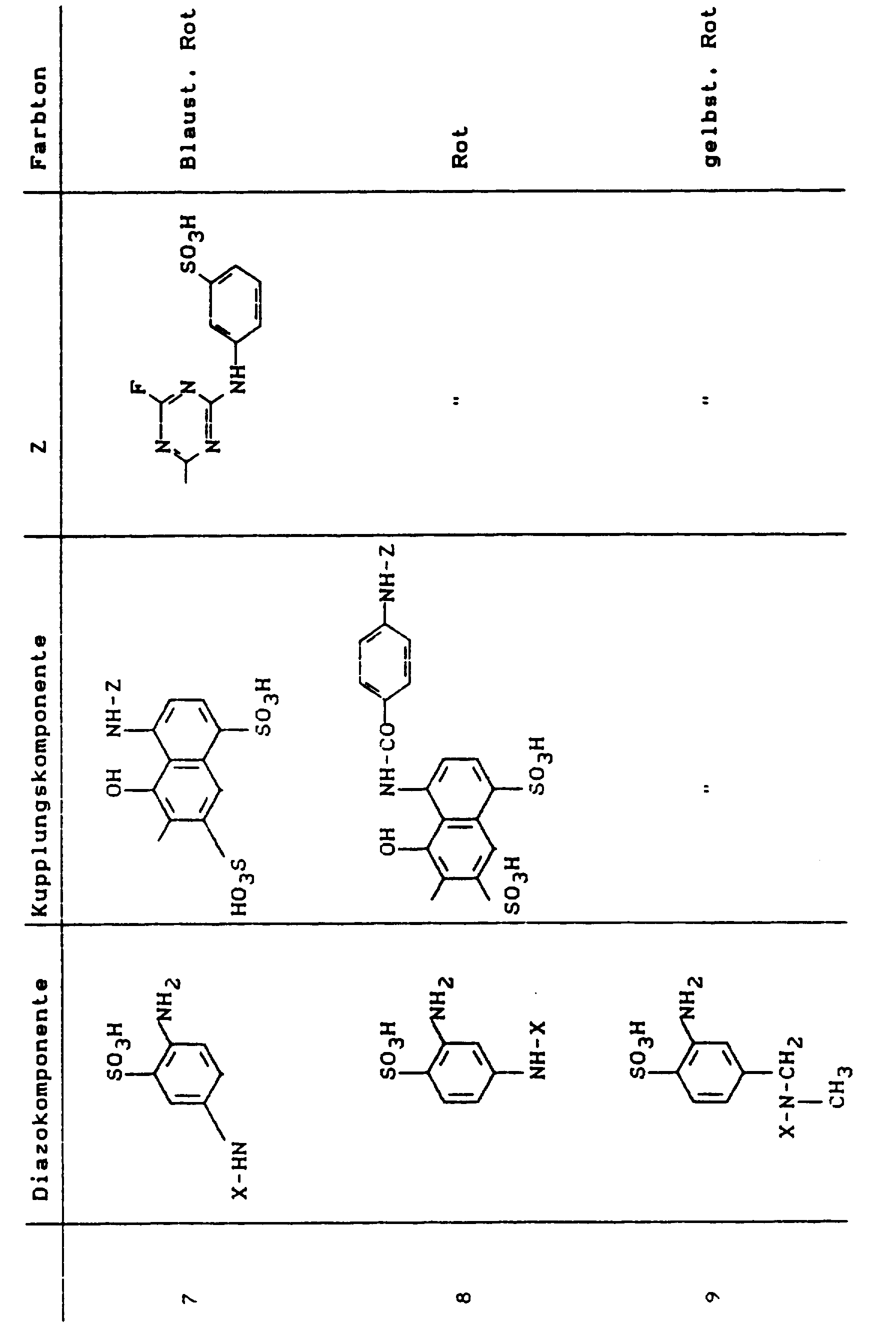

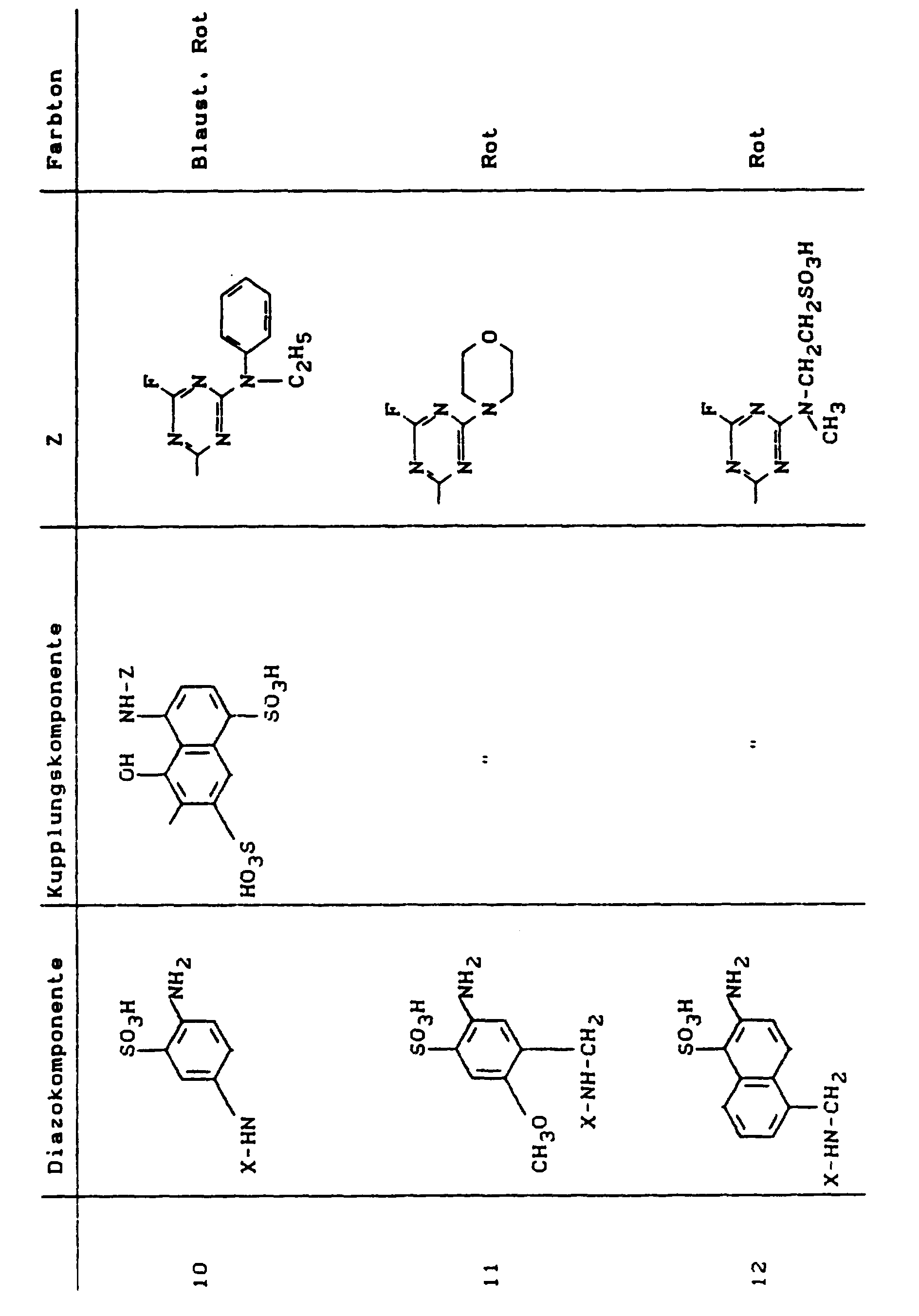

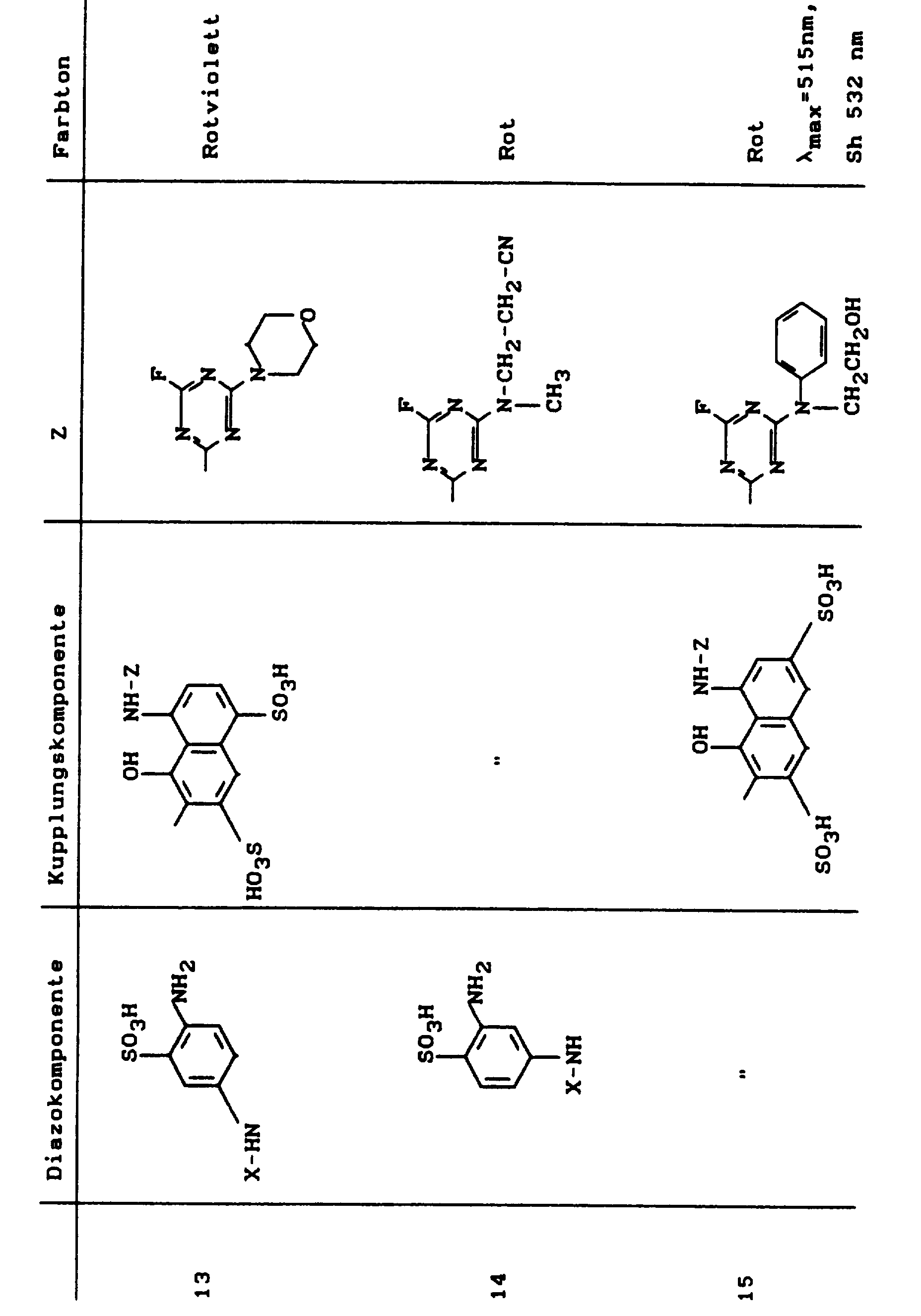

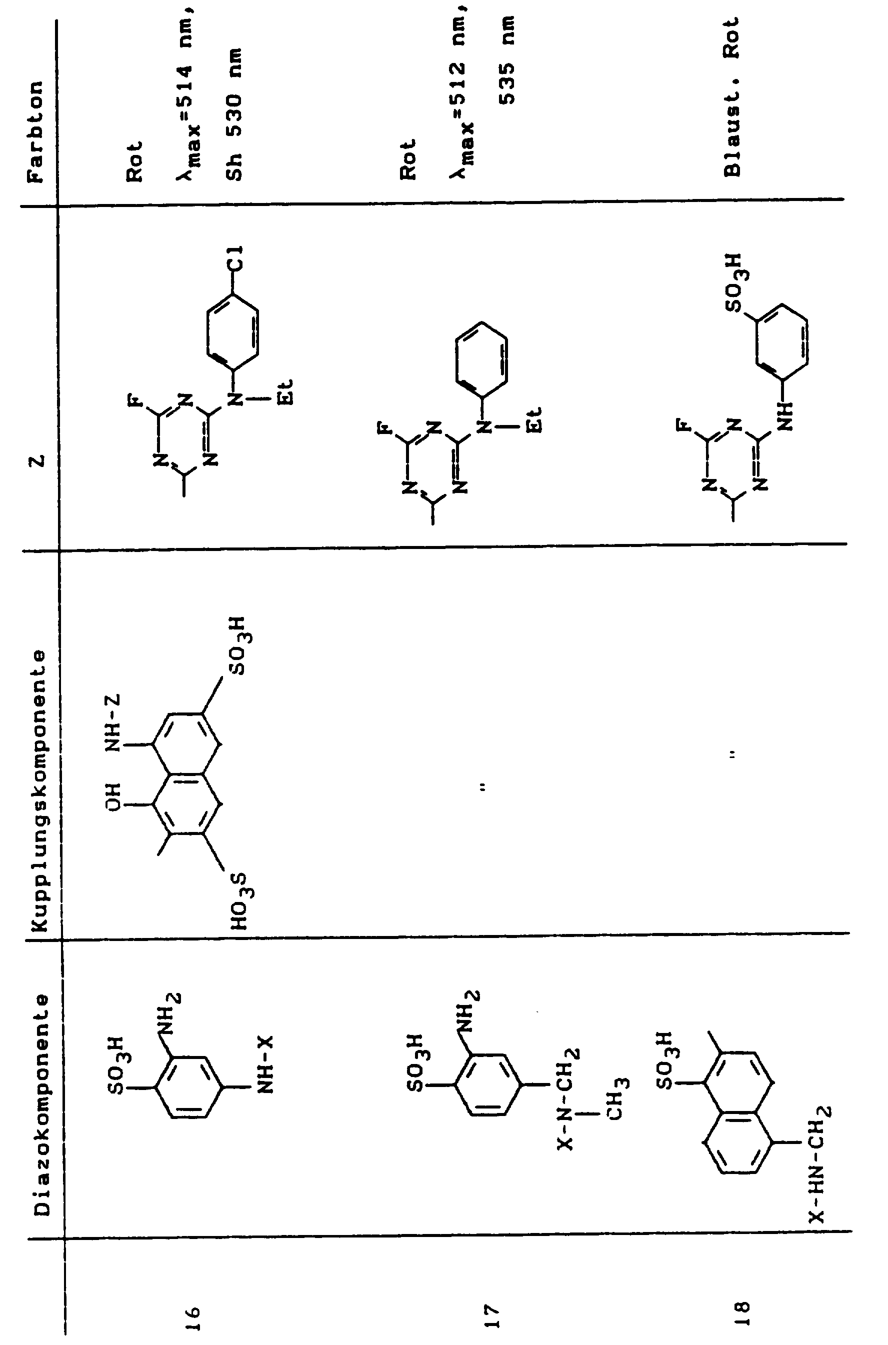

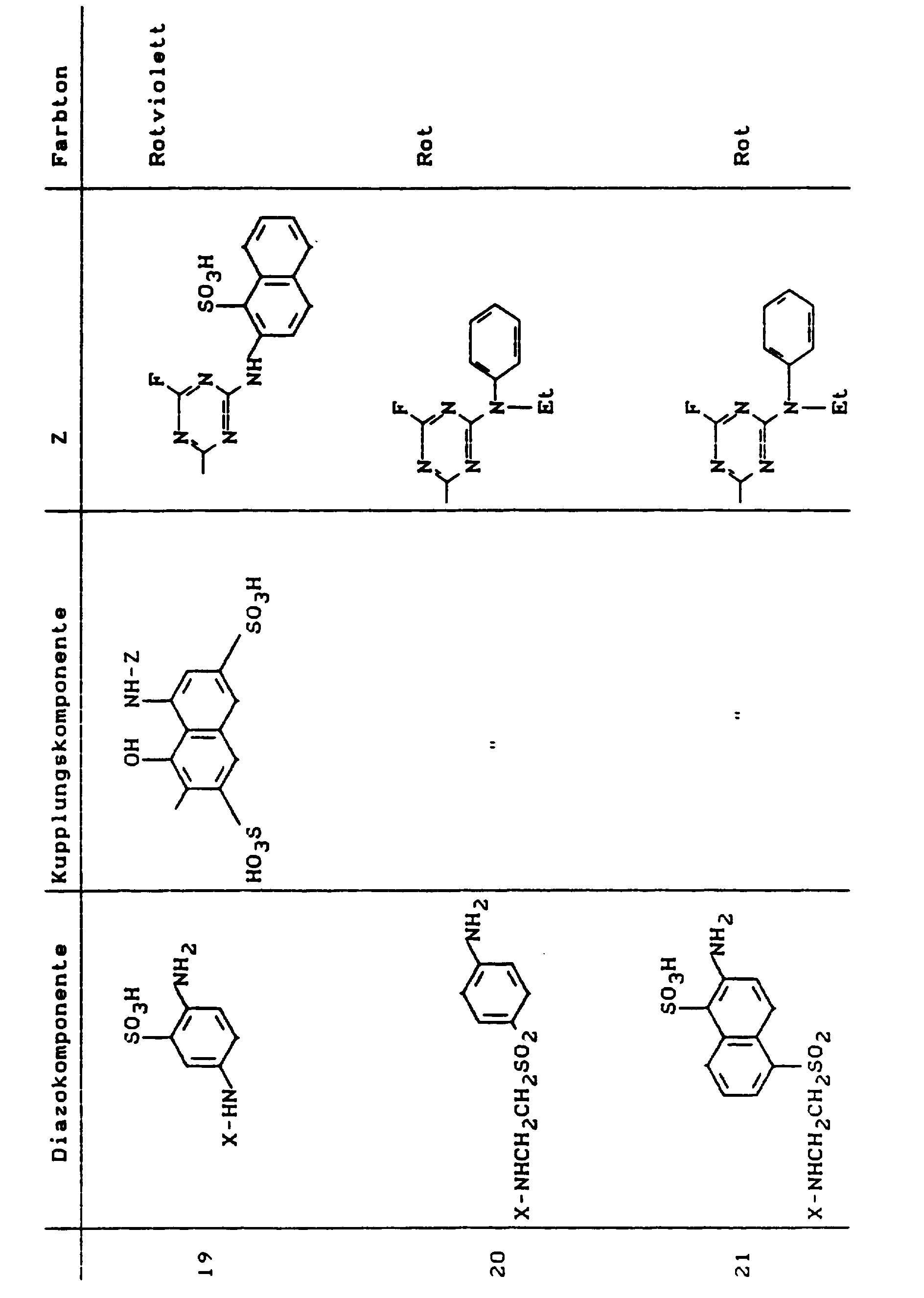

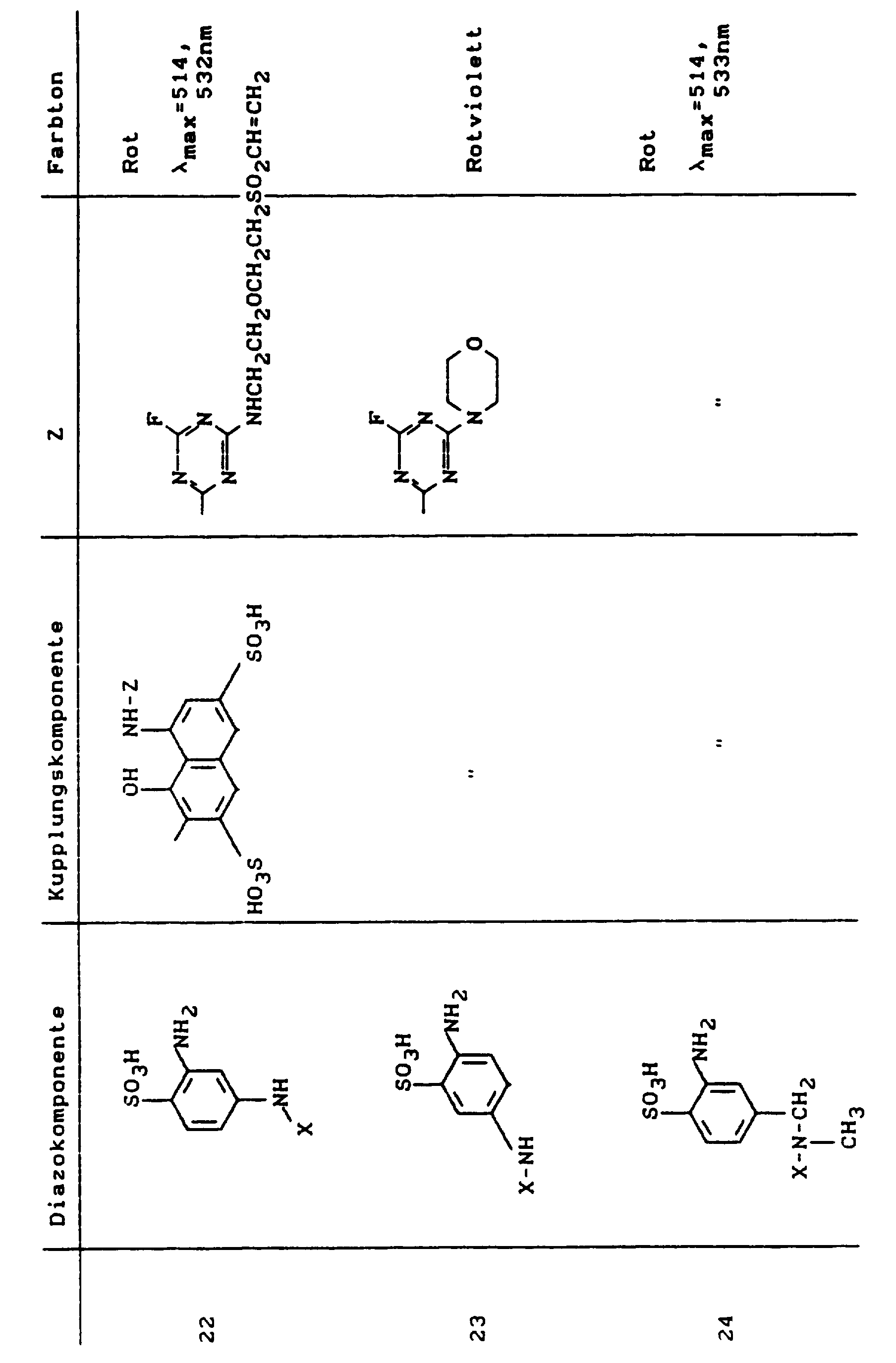

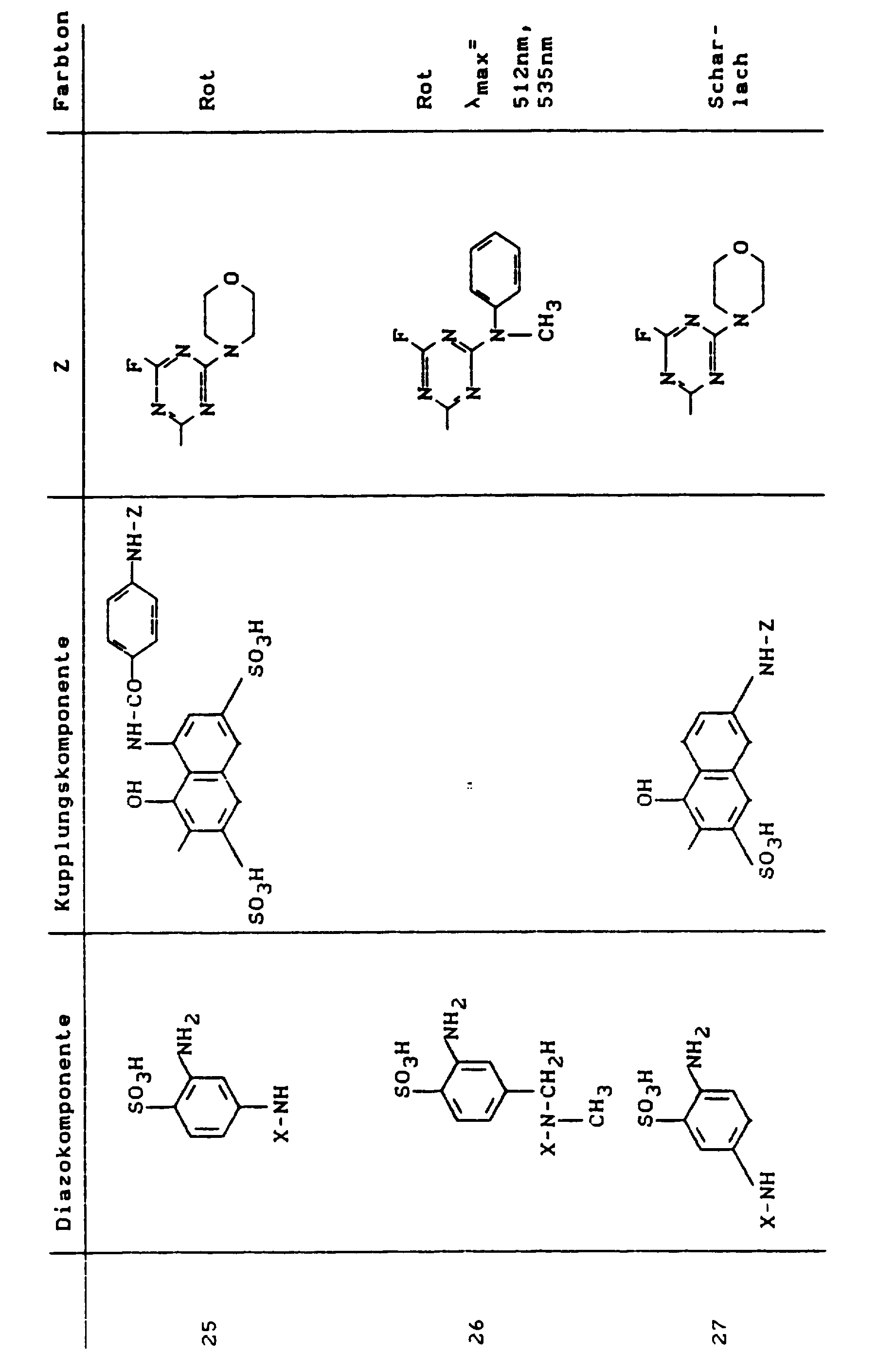

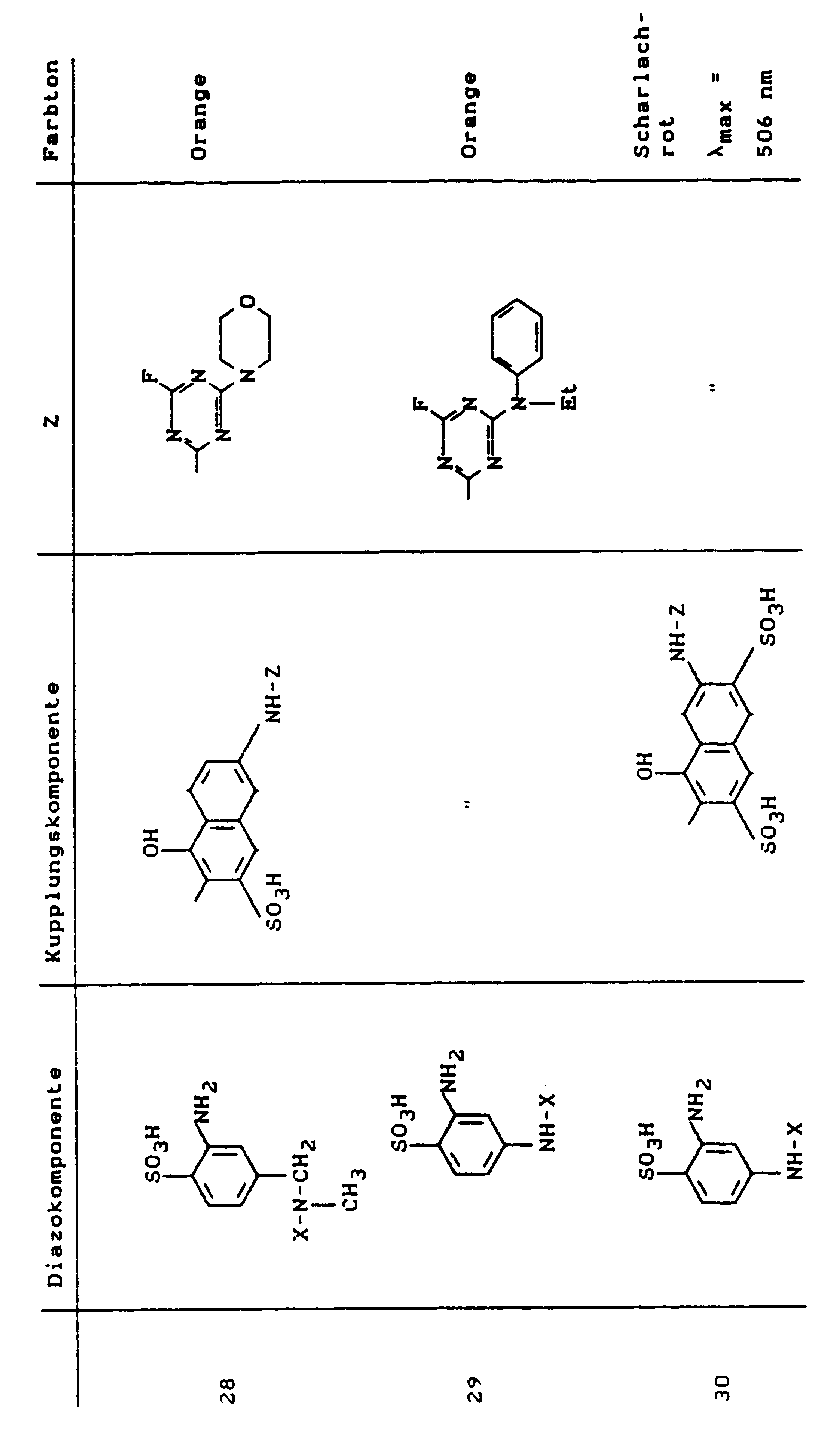

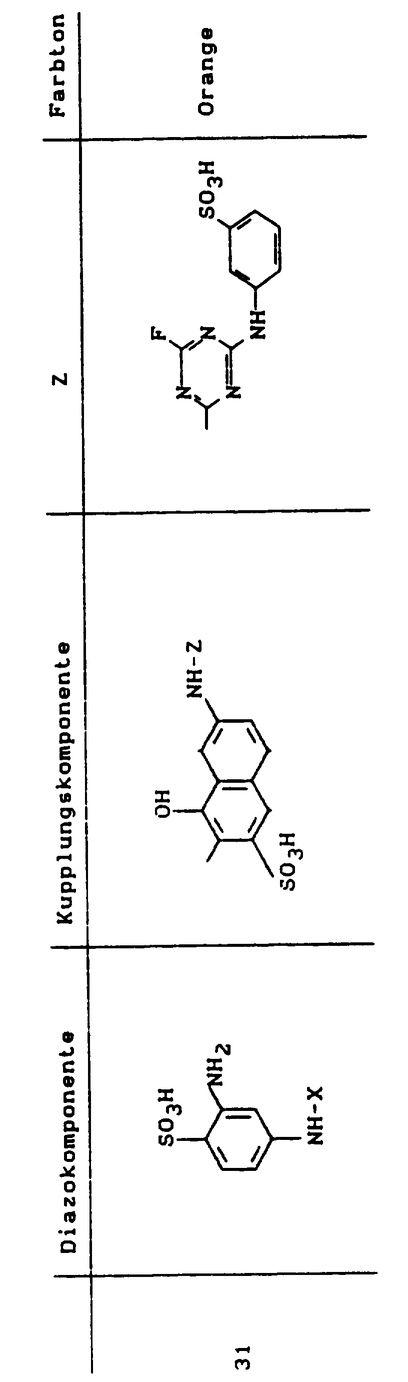

### Beispiel 32

0,2 Mol 1-Amino-8-hydroxynaphthalin-3,6-disulfonsäure werden in 450 ml Wasser mit Natronlauge bei pH 8-9 gelöst und mit 0,22 Mol 2,4,6-Trifluorpyrimidin versetzt. Die Kondensation erfolgt bei 35-40°C, wobei der pH mit Sodalösung gehalten wird.

Kuppelt man mit dar in Beispiel 1 beschriebenen Diazotierung unter gleichen Bedingungen, so erhält man nach Aussalzen, Isolieren, Trocknen den Farbstoff der Formel 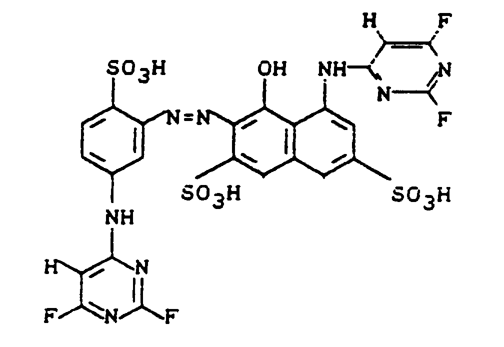 der Baumwolle in roten Tönen färbt.

### Beispiel 33

0,2 Mol 8-(4'-amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 2,2 Mol 2,4,6-Trifluorpyrimidin zu und heizt auf 30°C auf. Mit Sodalösung (20 g/100 ml) wird ein pH-Wert von 4,5-6 gehalten. Die Umsetzung ist nach 4 Stunden beendet

Man gibt nun 0,2 Mol des Diazoniumsalzes aus Beispiel 1 zu und hält gleichzeitig durch Zutropfen von Sodalösung (20 g/100 ml) einen pH-Wert von 7,5-8. Nach beendeter Kupplung salzt man mit NaCl aus, isoliert und trocknet. Der Farbstoff der Formel 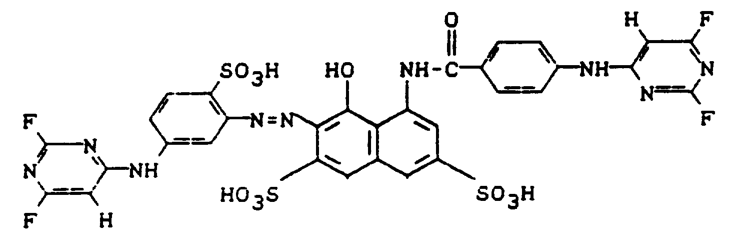 färbt Baumwolle in roten Tönen.

Die Beispiele 34-68 der Formel 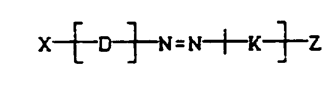 lassen sich wie in Beispiel 32 bez. 33 beschrieben herstellen, wenn die entsprechenden Zwischenprodukte eingesetzt werden. Sie färben Baumwolle in den angegebenen Farbtönen.

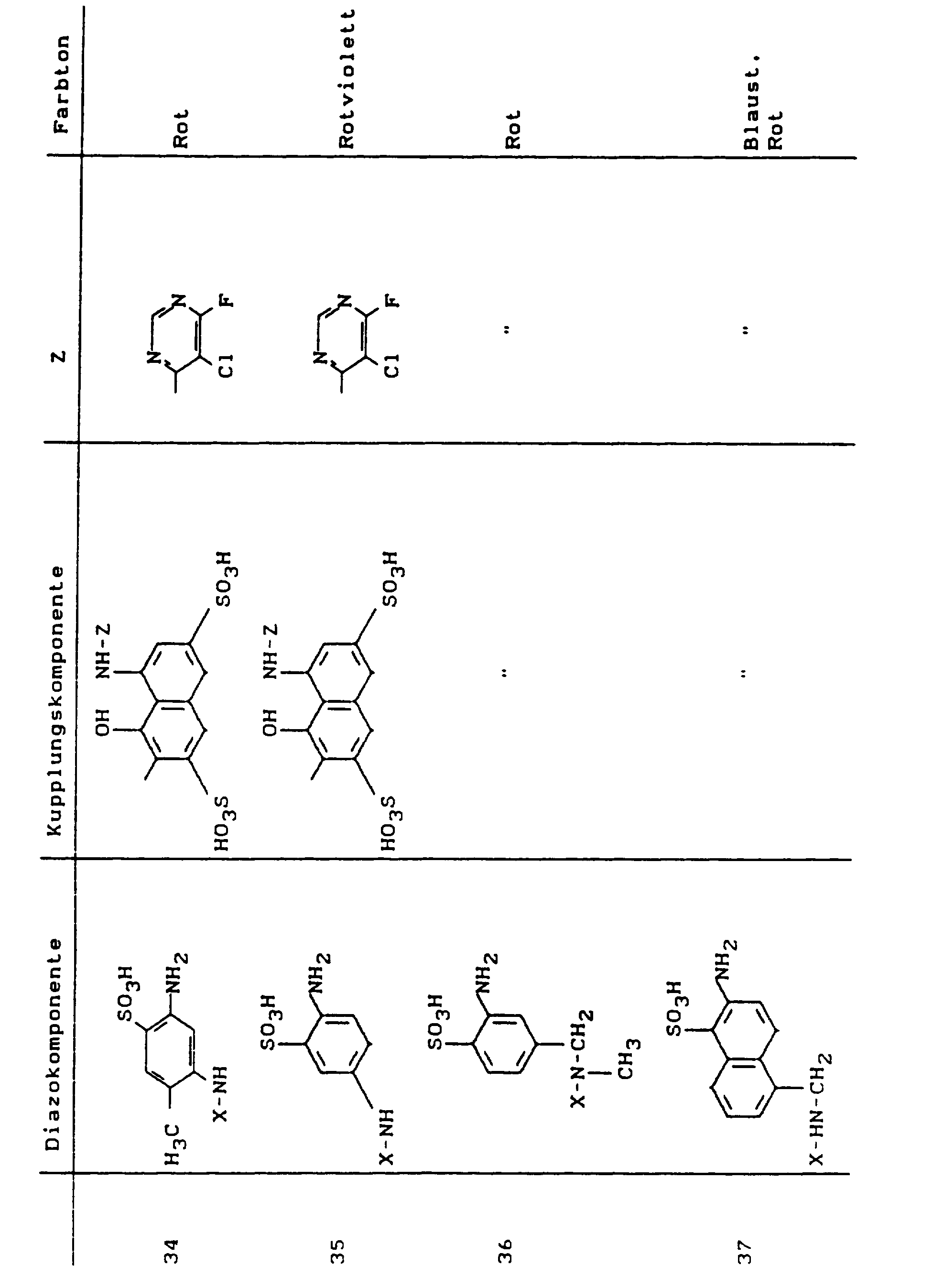

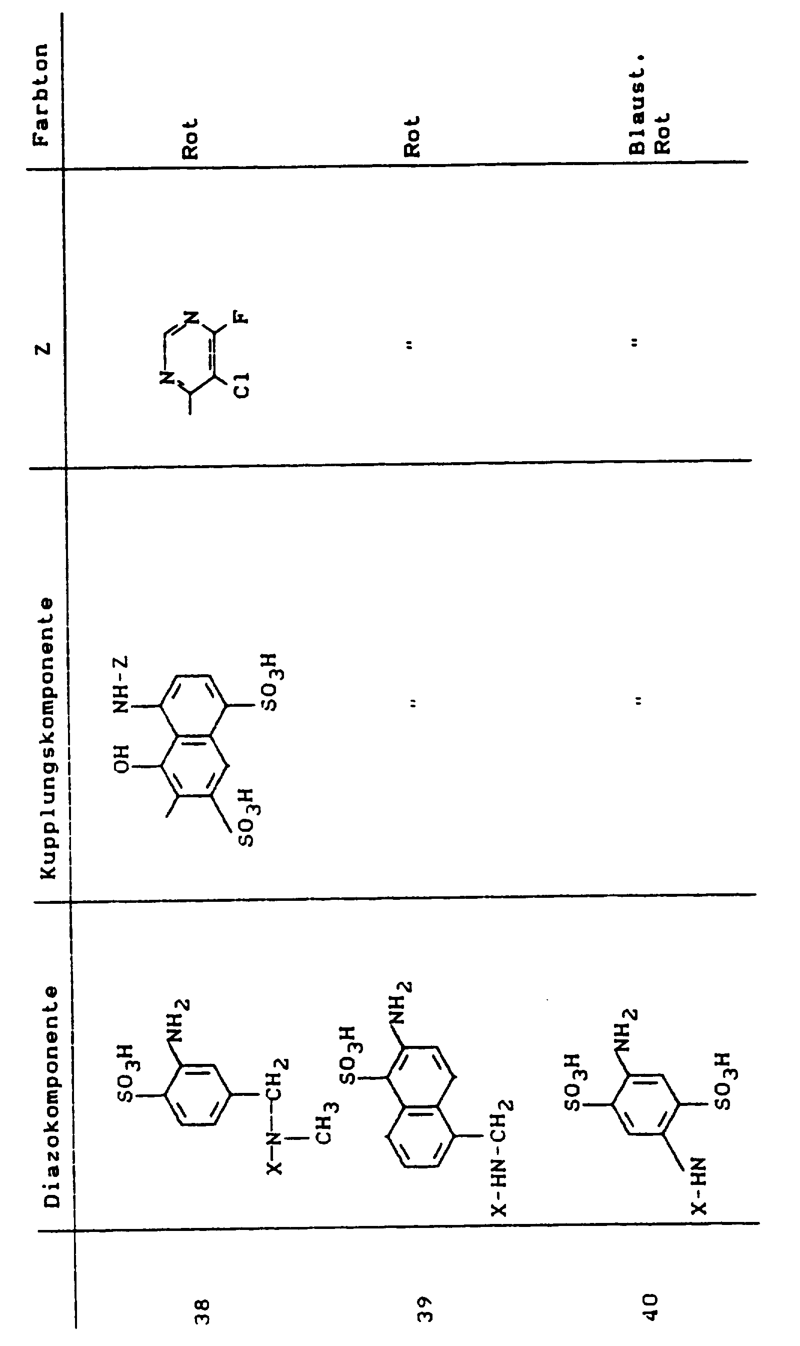

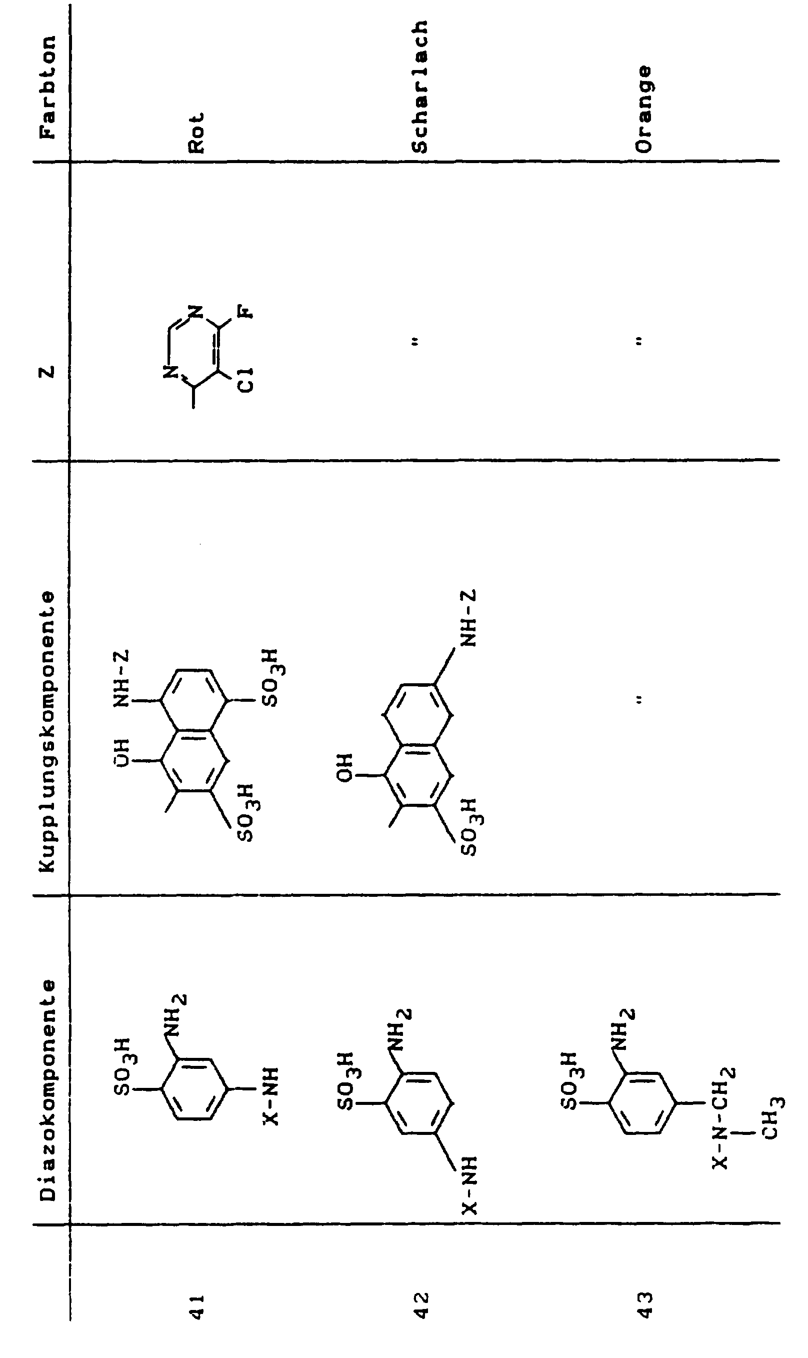

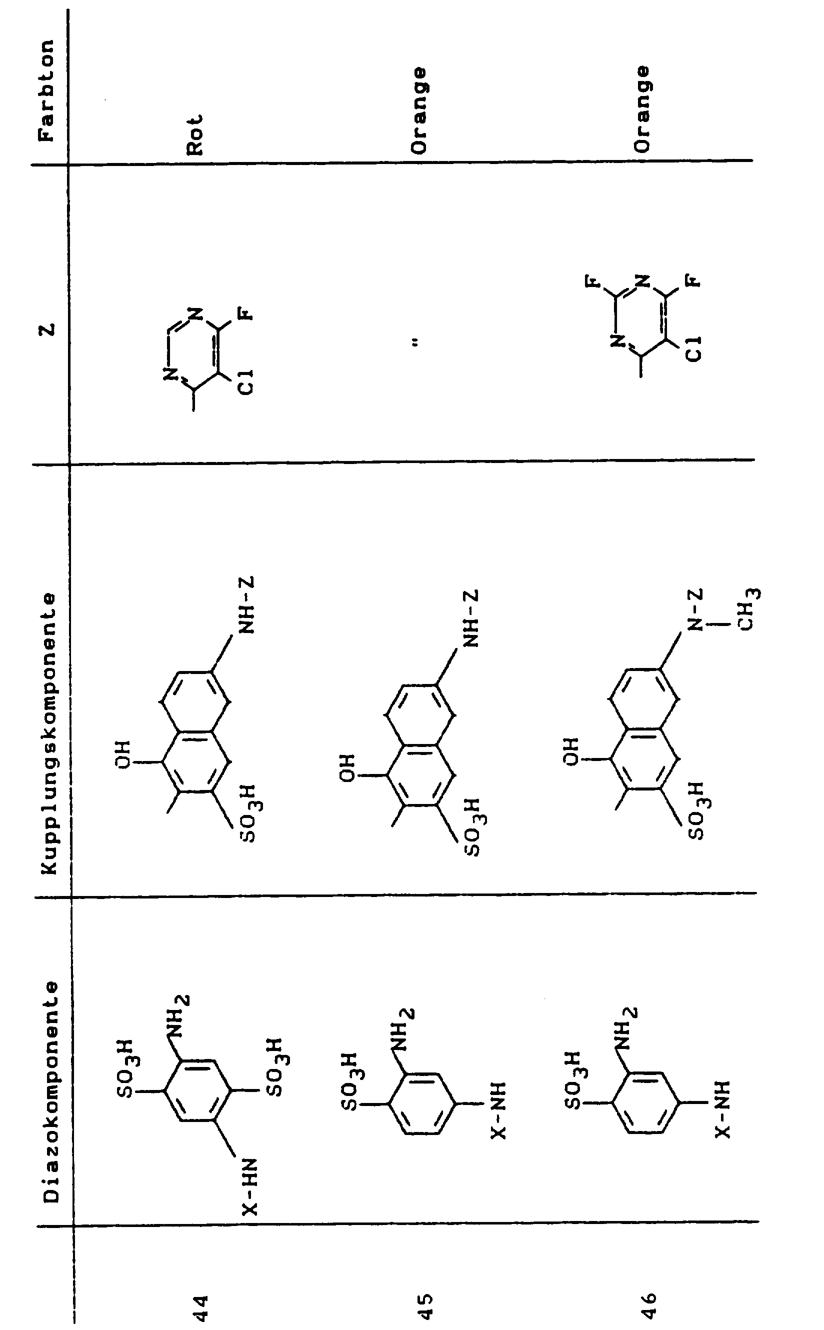

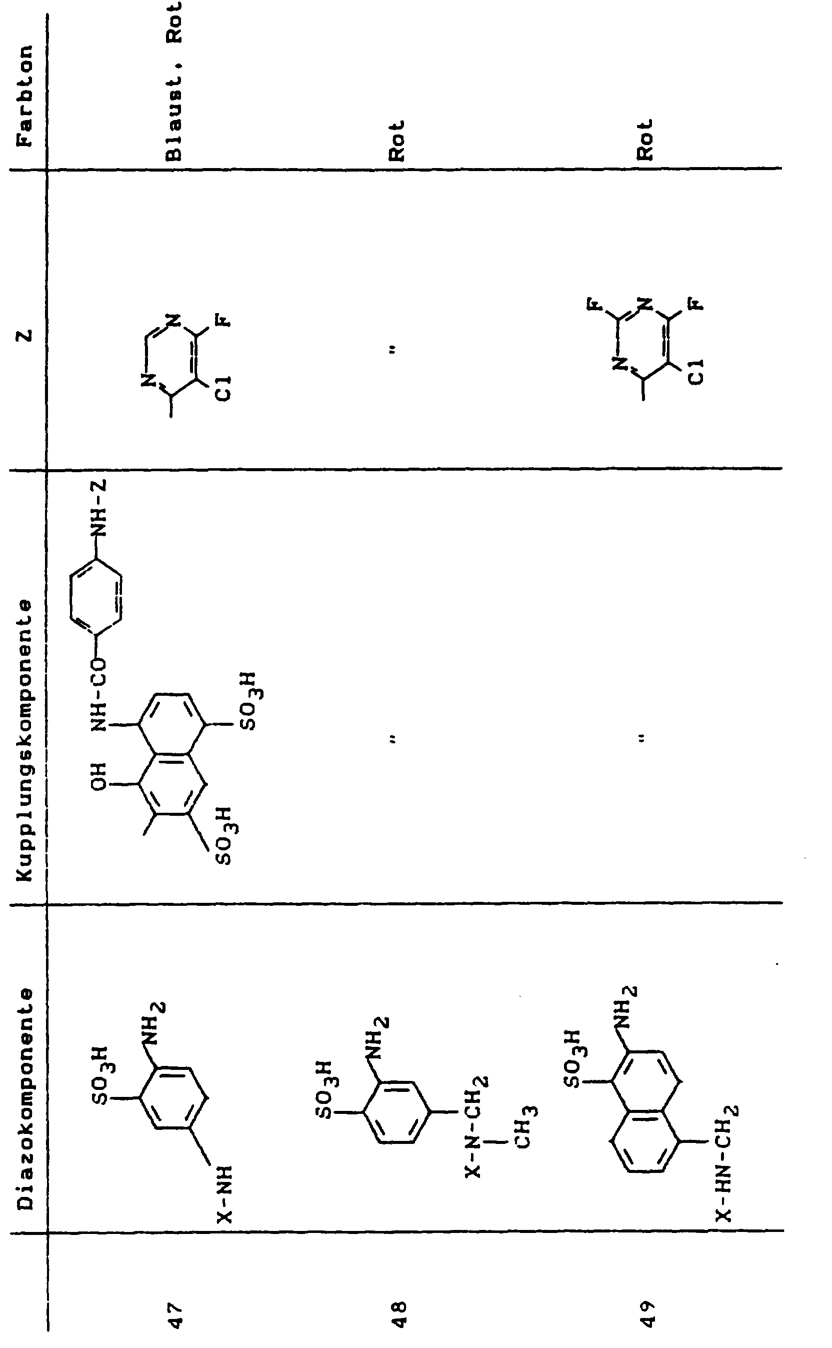

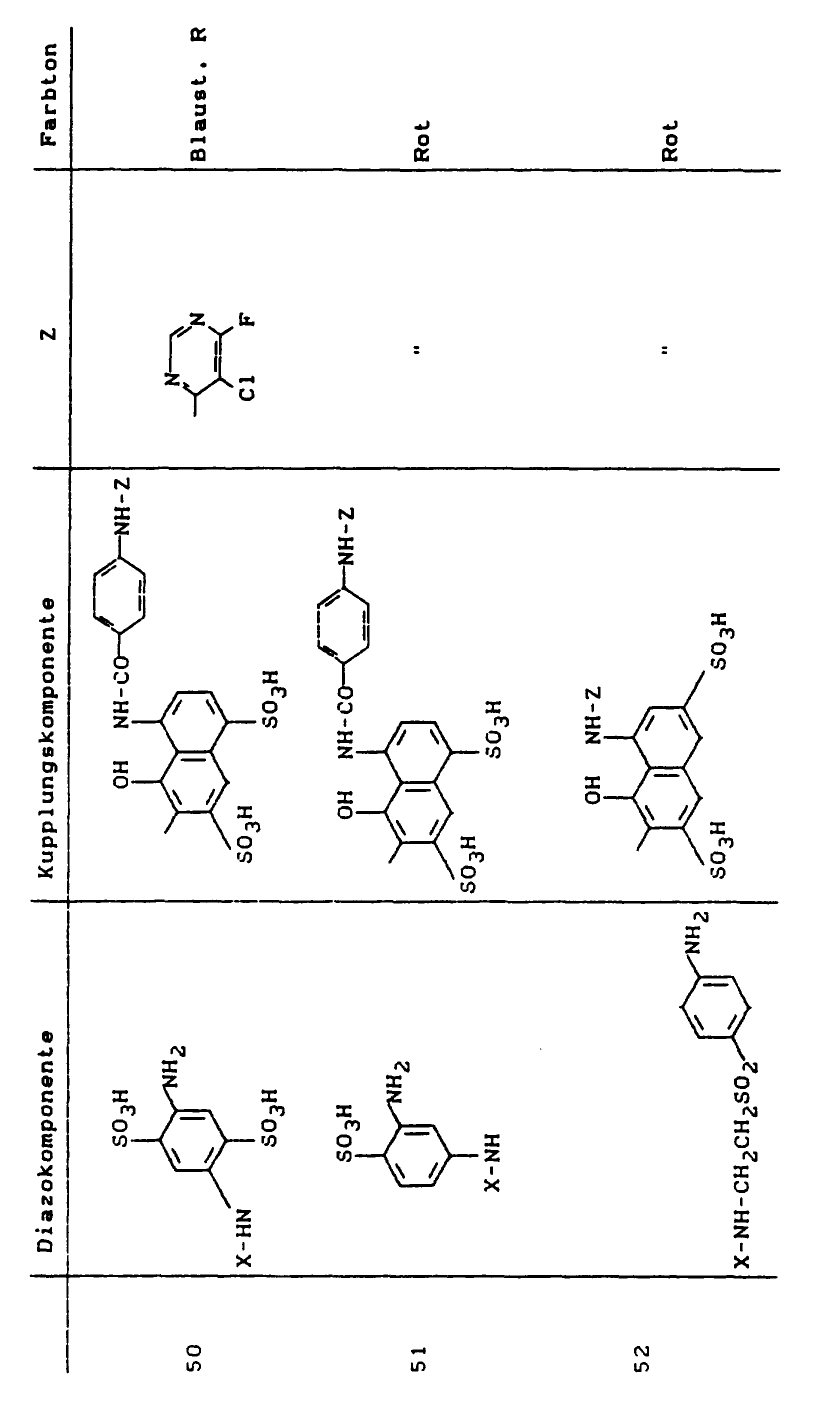

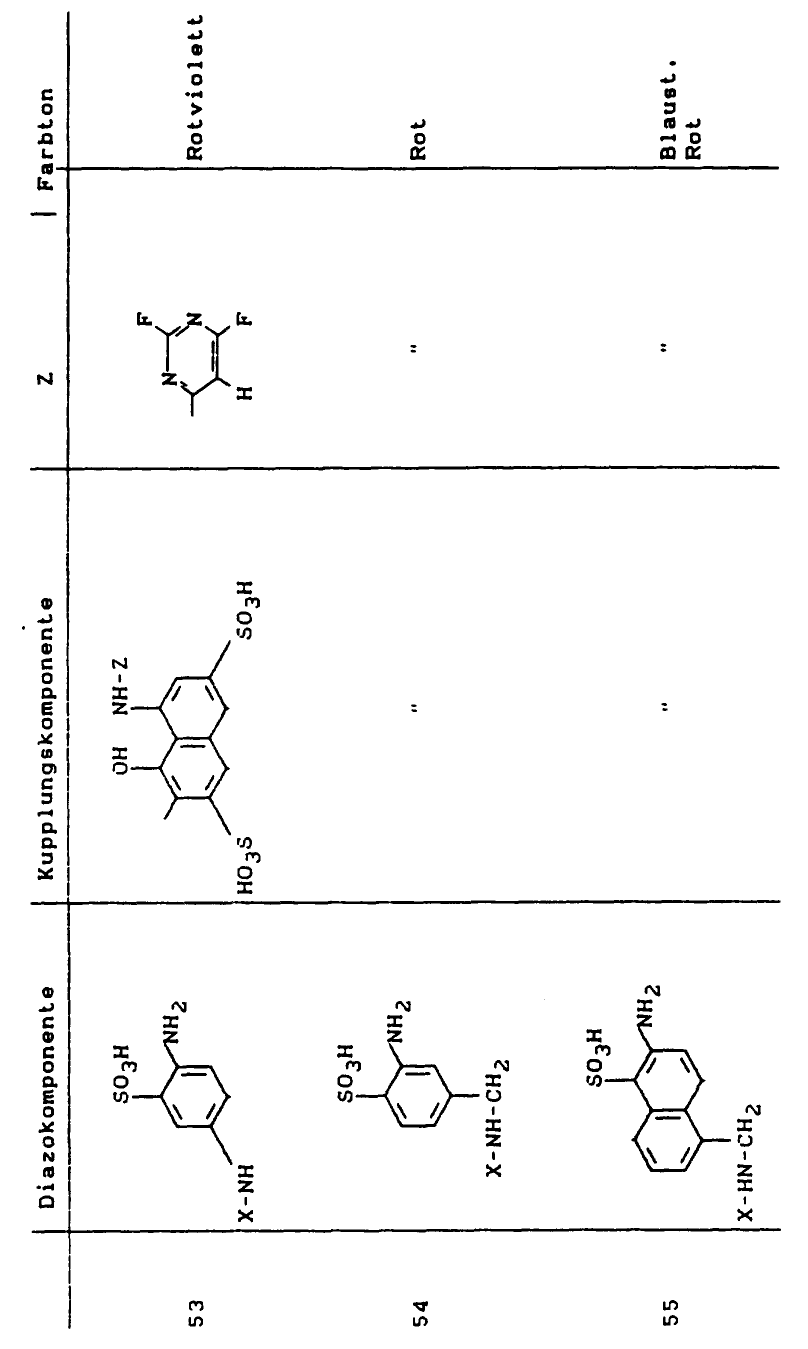

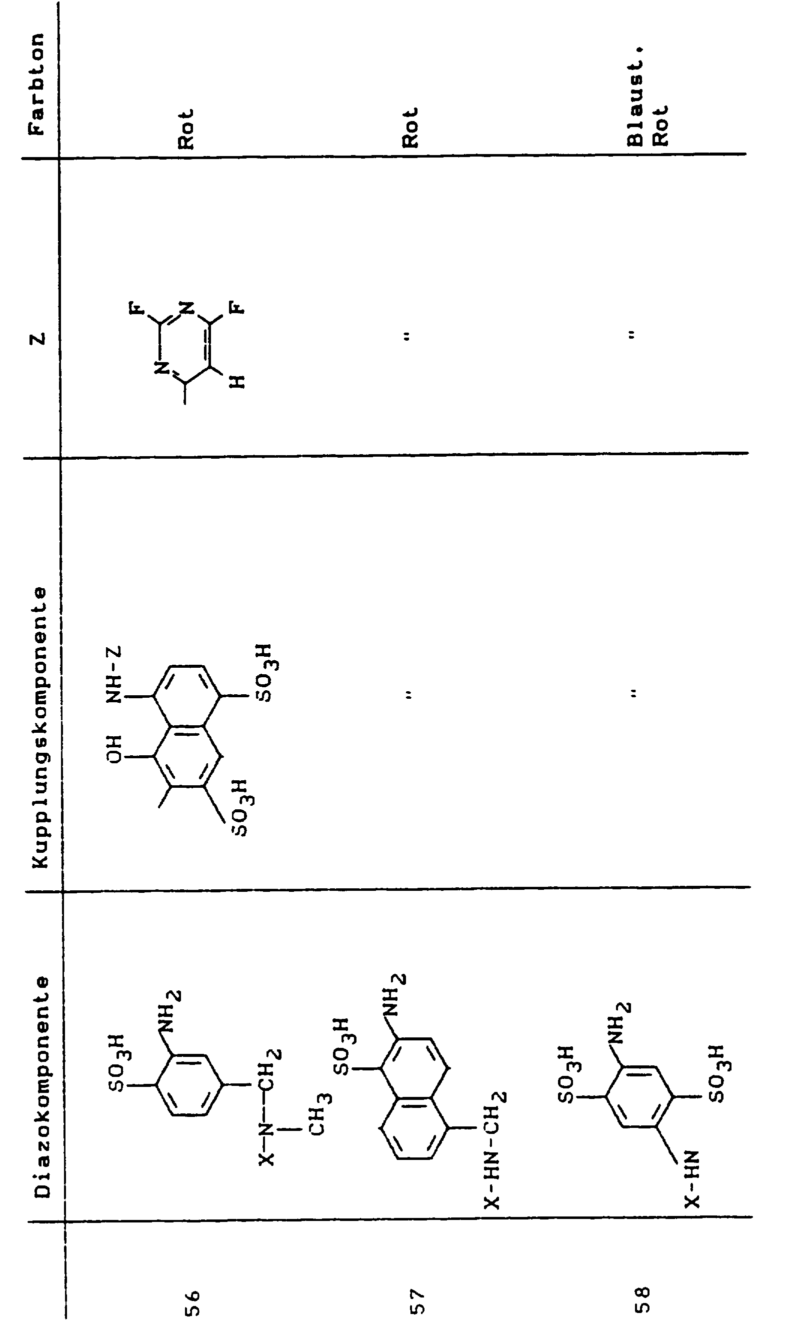

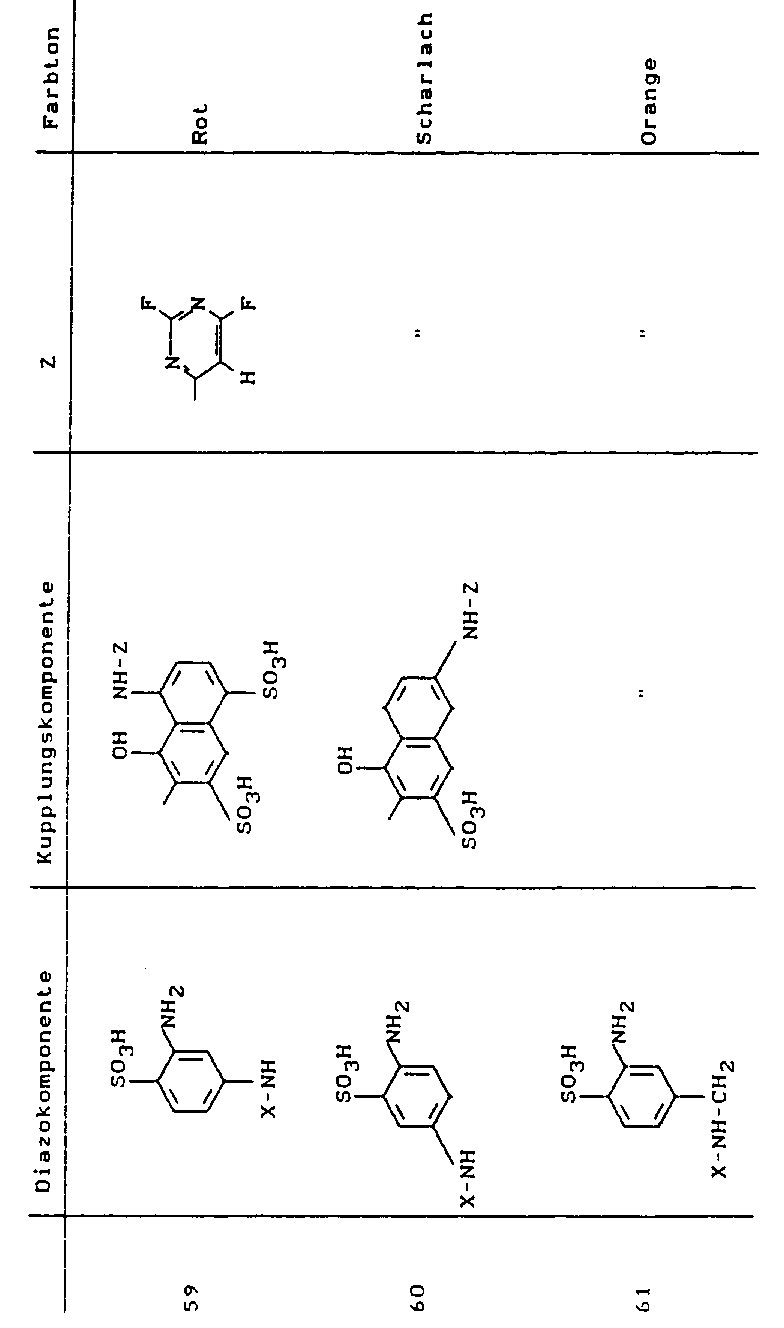

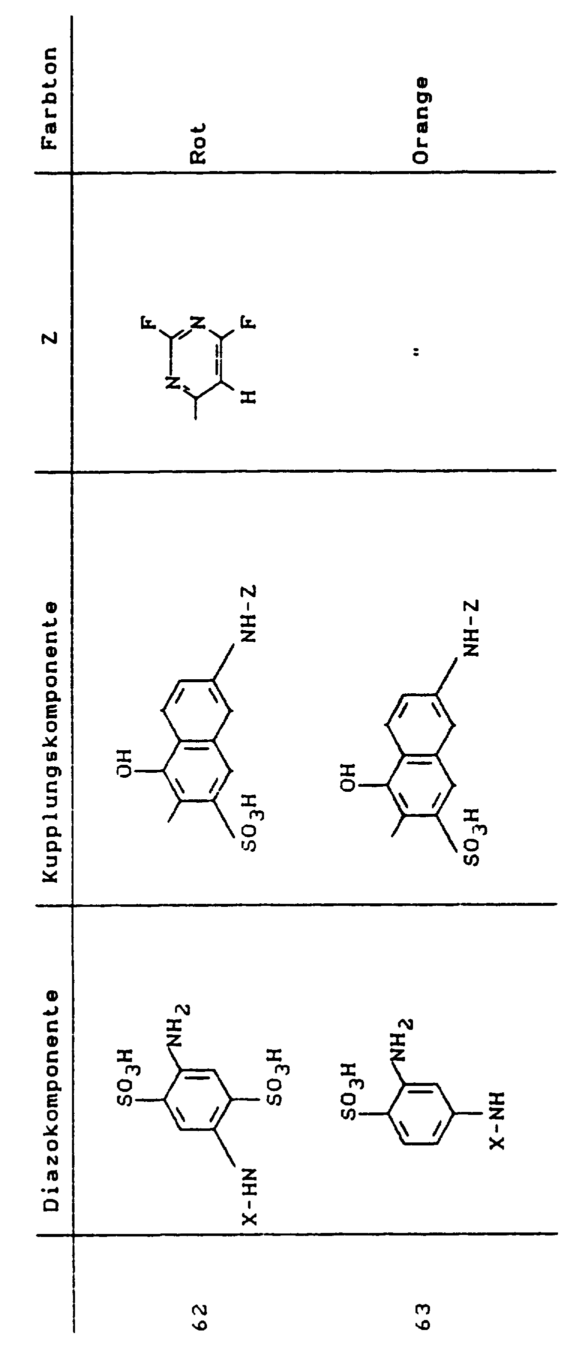

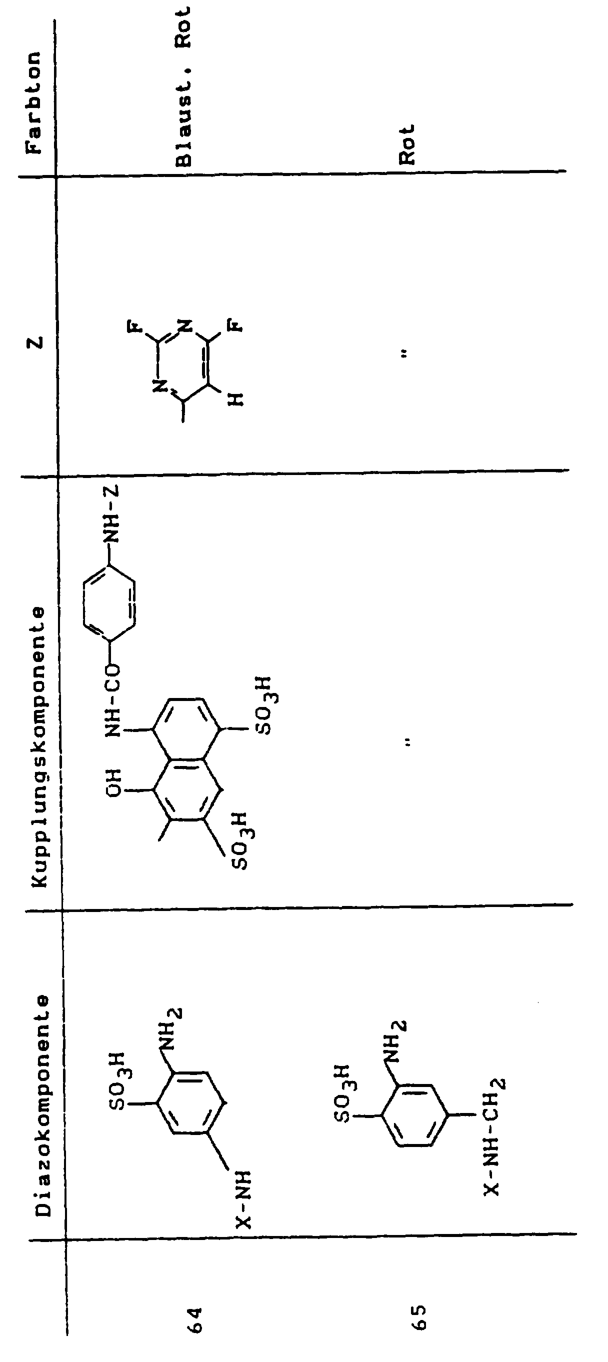

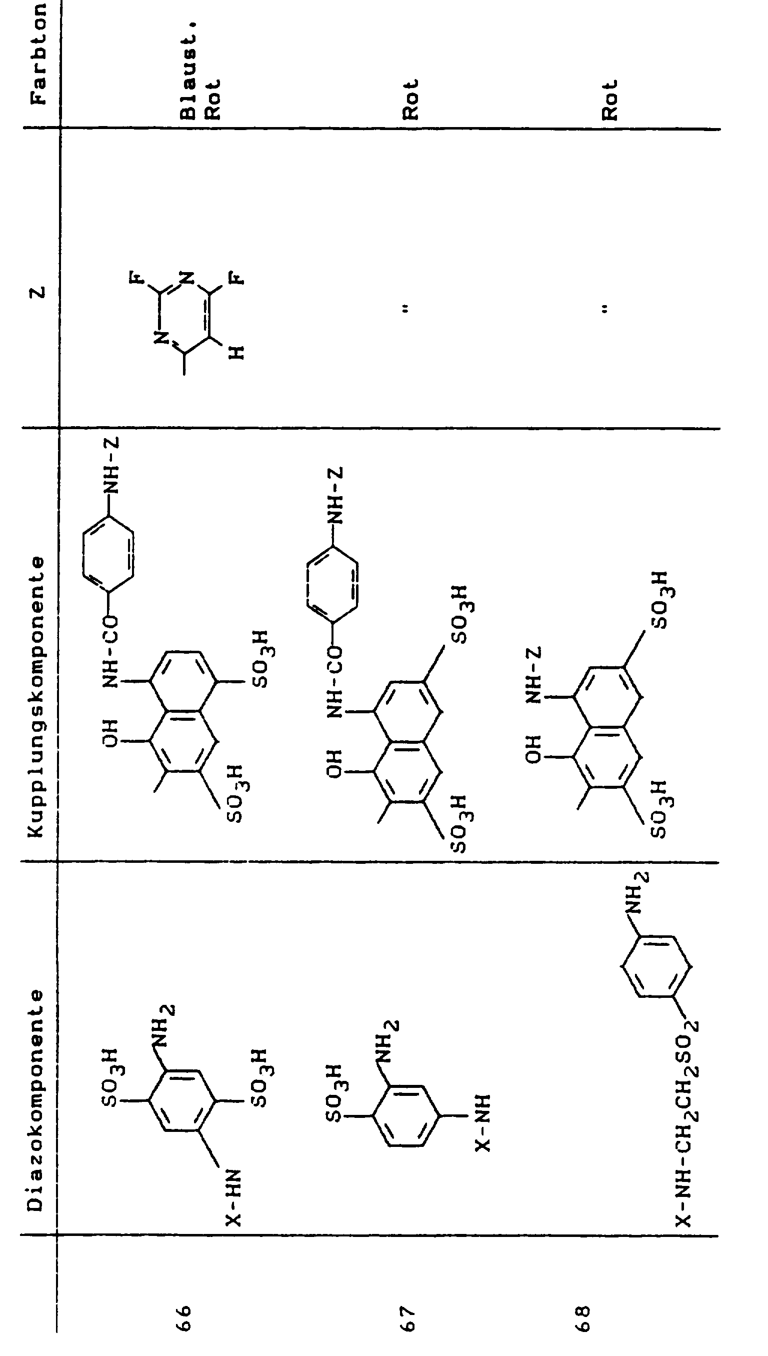

### Beispiel 69

0,2 Mol 1-Amino-8-hydroxynaphthalin-3,6-disulfonsäure werden in 650 ml Wasser und mit Natronlauge bei pH 6,5 gelöst und auf 35°C erwärmt. Zu dieser Lösung werden 0,21 Mol 2,3-Dichlorchinoxalin-6-carbonsäurechlorid hinzugefügt und der pH mit Sodalösung auf 6-7 eingestellt und ca. 6 h bei 35°C kondensiert.

Danach wird mit 2,6-Difluor-4-(3'-amino-4'-sulfophenylamino)-pyrimidin-Diazotierung analog Beispiel 1 gekuppelt.

Der Farbstoff wird ausgesalzen, isoliert, getrocknet und gemahlen. Er hat folgende Formel 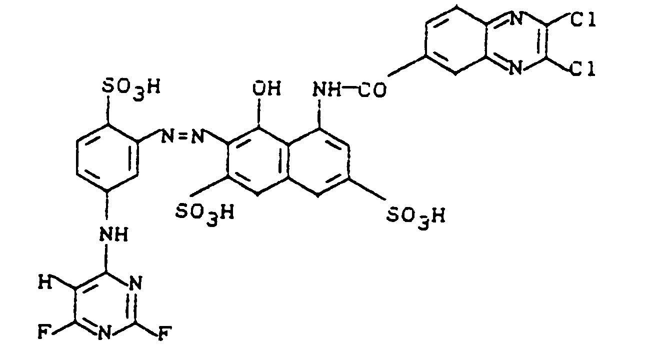 und färbt Baumwolle in roten Tönen.

Wie oben beschrieben, können die Farbstoffe der Beispiele 70-80 der Formel 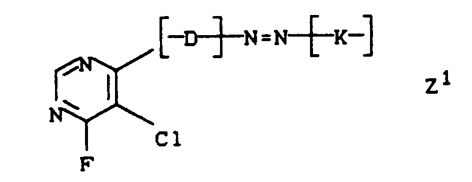 mit den angeführten Diazo- und Kupplungskomponenten (K) herstellt werden, X hat dabei die in Formel (1) angegebene Bedeutung,
Z¹ =

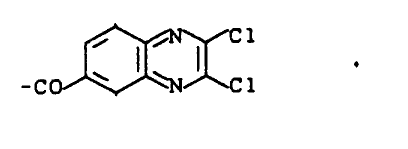

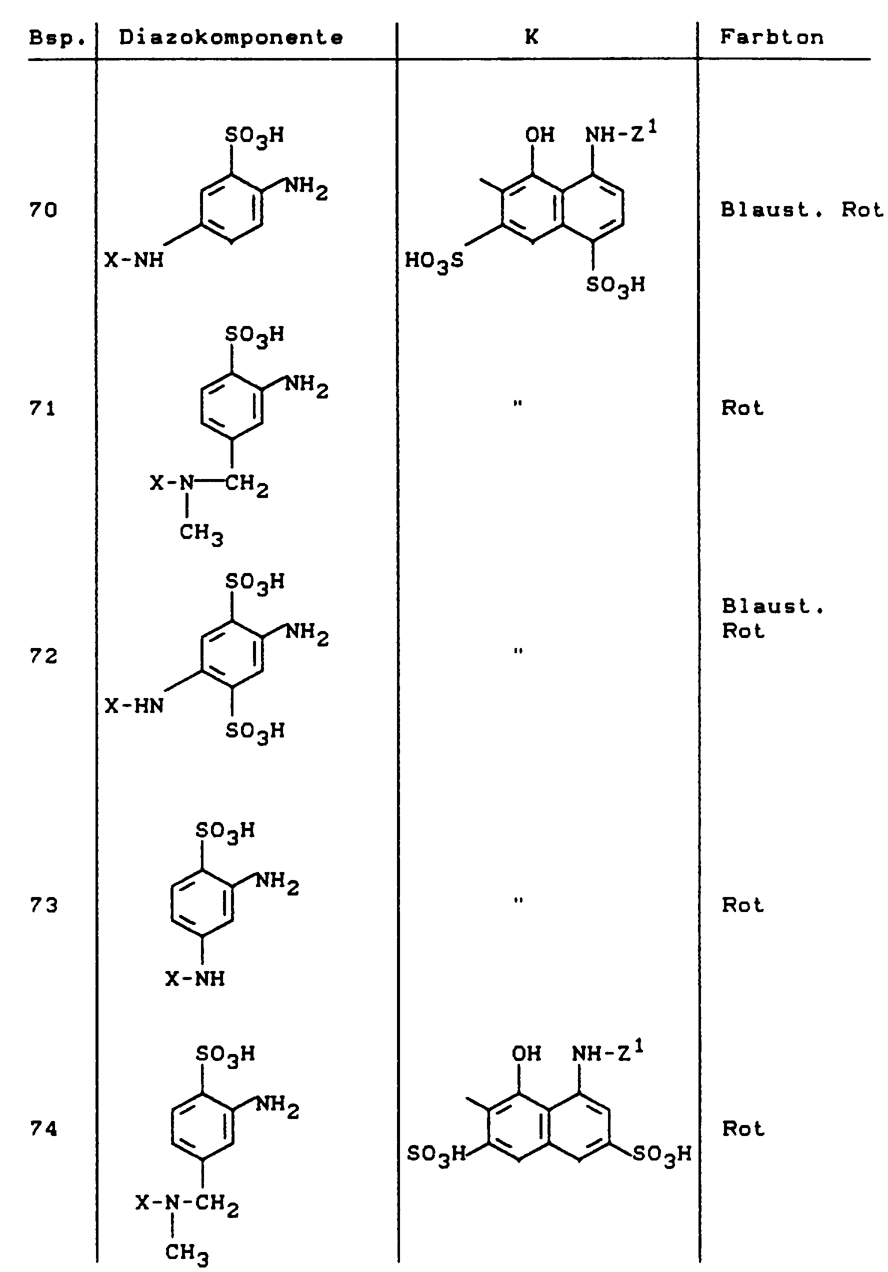

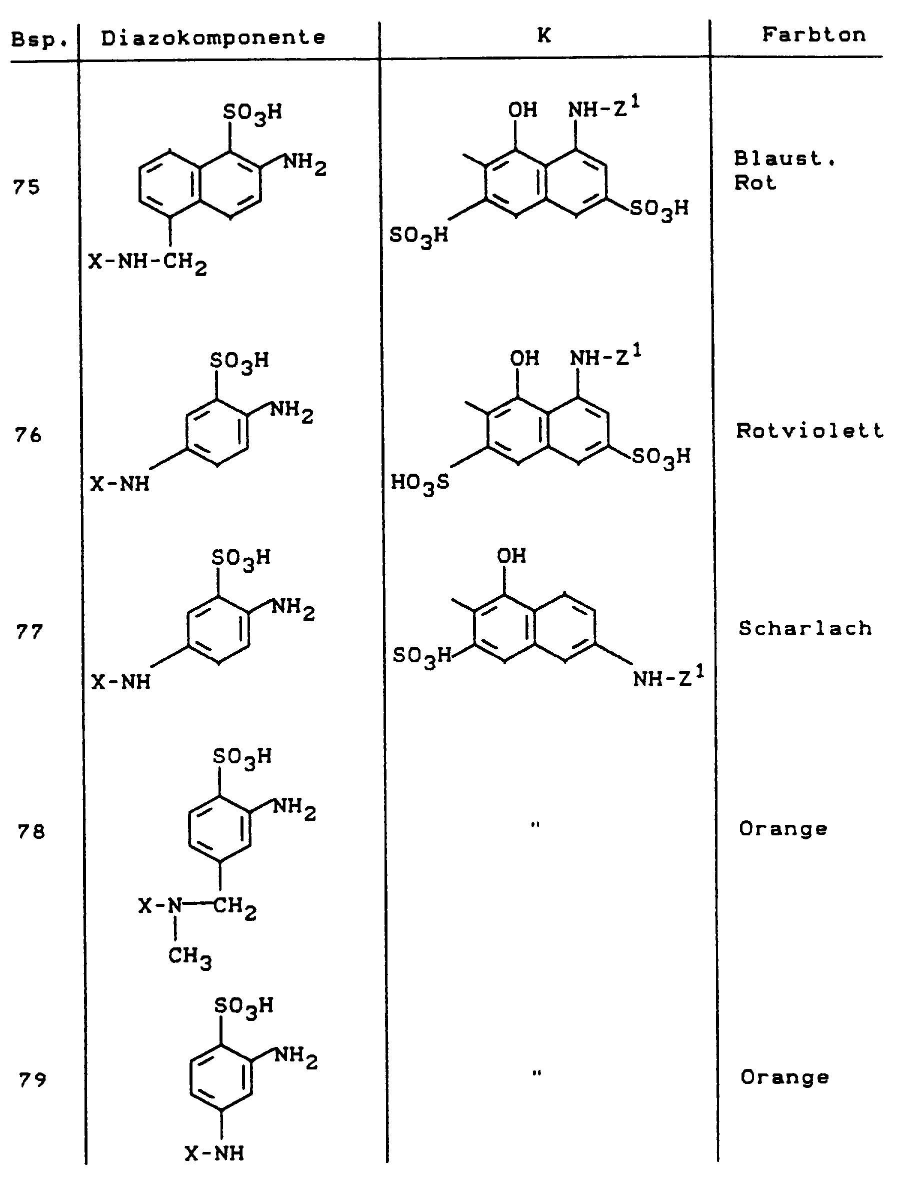

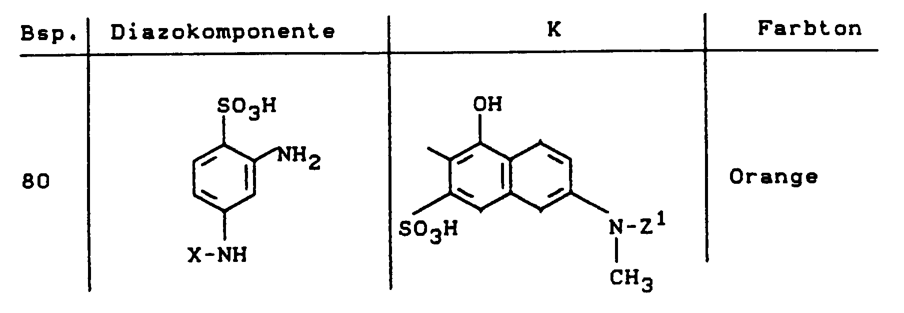

### Beispiel 81

0,26 Mol 3-(2-Sulfatoethyl)sulfonyl-anilin werden in 250 ml Wasser mit 1 molarer Natriumhydrogencarbonatlösung neutral gelöst. Man gibt 250 g Eis zu und tropft 0,27 Mol Cyanurfluorid ein. Mit 1 molarer Natriumhydrogencarbonatlösung wird ein pH-Wert von 4-5 gehalten.

Man rührt 10 Minuten nach.

0,2 Mol 8-(4'-amino-benzoylamino)-1-naphthol-3,6-disulfonsäure werden in 300 ml Wasser verrührt und mit 11 %iger Lithiumhydroxydlösung neutral gelöst. Diese Lösung gibt man zur obigen Kondensationslösung zu. Mit Sodalösung wird ein pH-Wert von 6,5-7 gehalten, die Temperatur steigt auf ca. 10°C. Nach beendeter Reaktion gibt man 0,2 Mol des Diazoniumsalzes aus Beispiel 1 zu und hält gleichzeitig durch Zutropfen von Sodalösung (20 g/100 ml) einen pH-Wert von 7,5-8. Nach 3 Stunden salzt man mit NaCl aus, isoliert und trocknet. Der erhaltene Farbstoff der Formel 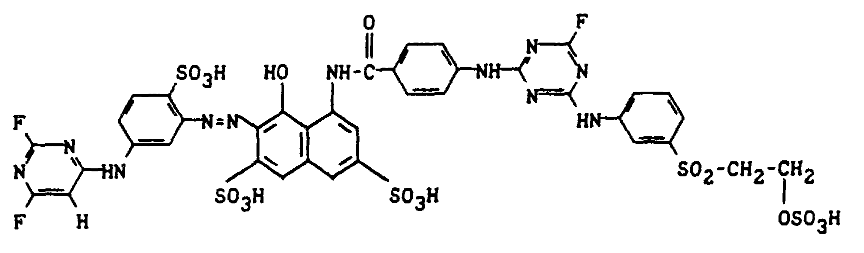 färbt Baumwolle in roten Tönen.

Die Farbstoffe der Beispiele 81-90 erhält man analog unter Verwendung der entsprechenden Diazokomponenten Kupplungskomponenten und Amine. Sie besitzen die allgemeine Formel

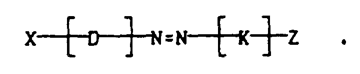

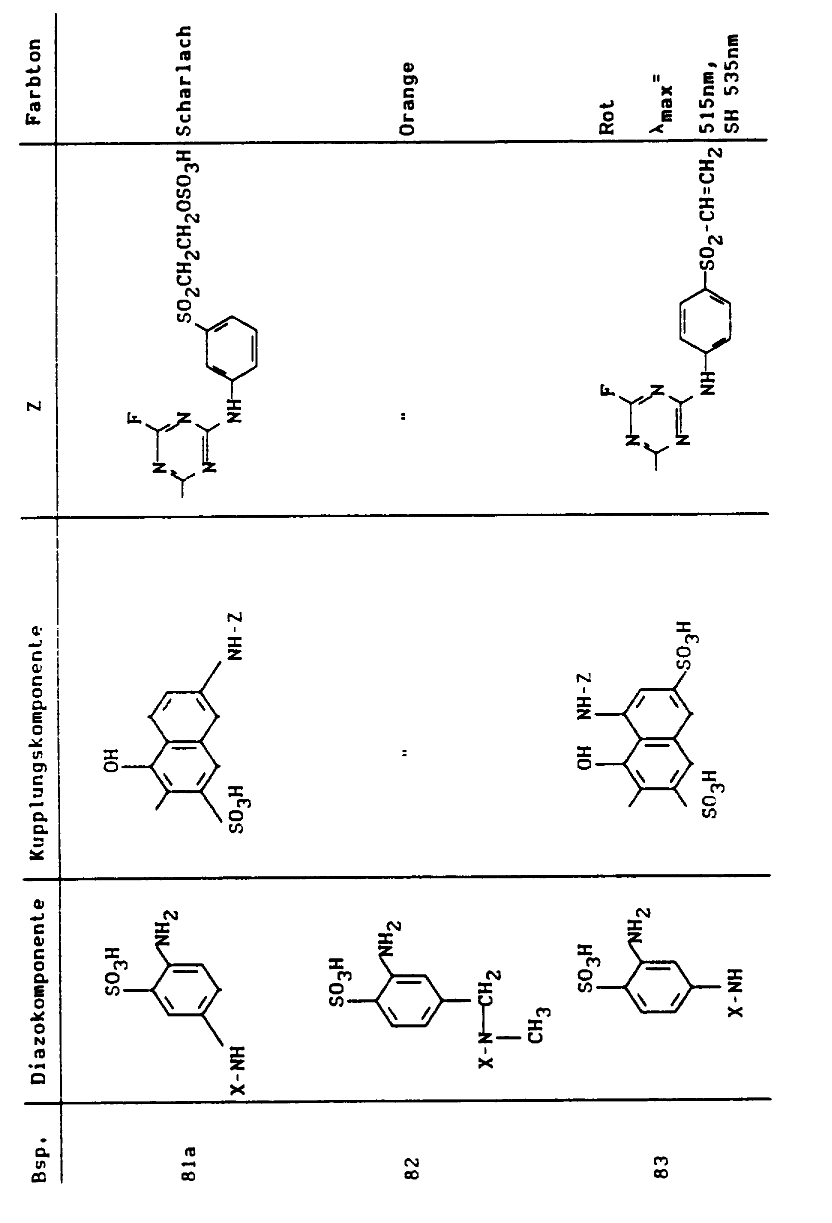

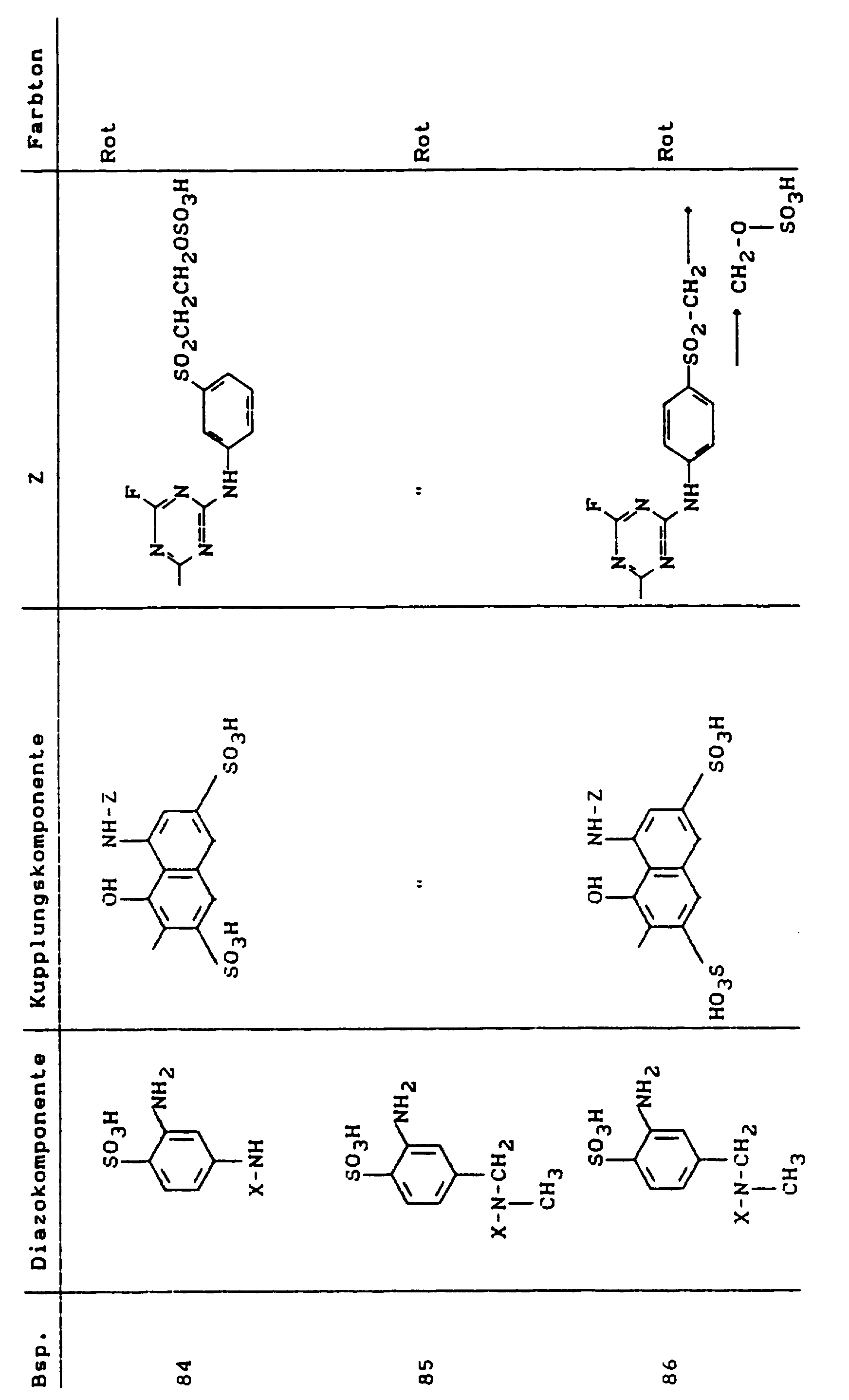

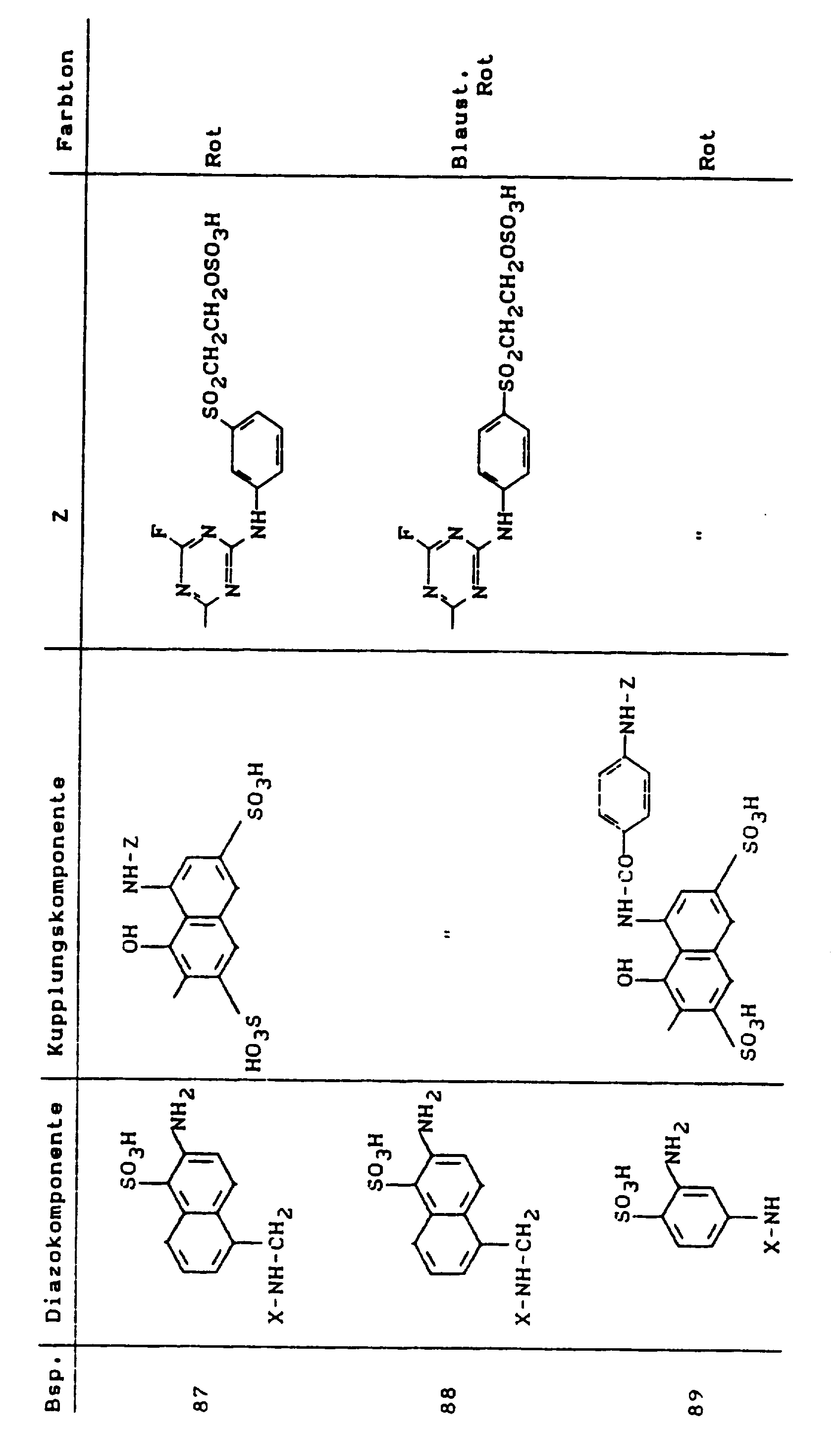

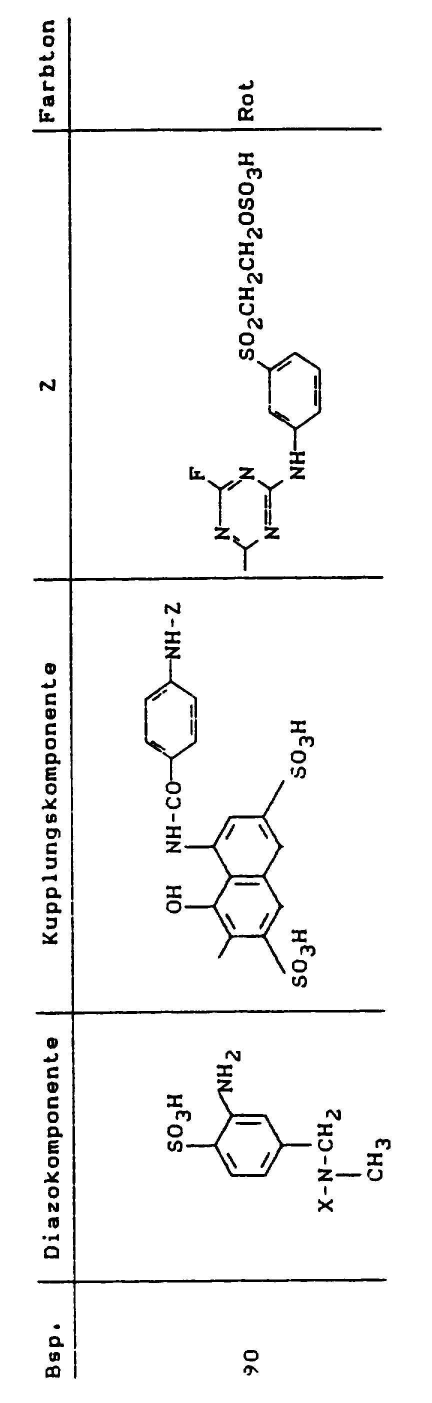

### Beispiel 91

a) 0,2 Mol 2-Amino-4-(aminomethyl)-benzolsulfonsäure werden in 500 ml Wasser mit konz. Natronlauge bei einem pH-Wert von 8 gelöst. Man gibt 0,25 Mol 2,4,6-Trifluorpyrimidin zu. Durch gleichzeitige Zugabe von 11 %iger Lithiumhydroxydlösung wird ein pH-Wert von 8-8,5 gehalten. T = 30°C - 40°C. Man kühlt auf 0°C ab und gibt 56 ml 30 %ige Salzsäure zu.
   Innerhalb von 1 Stunde tropft man bei 0-5°C 47 ml Natriumnitritlösung (30 g/100 ml) ein. Die Diazotierung rührt 1 Stunde bei 0-5°C nach. Anschließend wird überschüssiges Nitrit durch Zugabe von Amidosulfonsäure zerstört.
b) 0,2 Mol 1-Amino-8-hydroxynaphthalin-4,6-disulfonsäure werden in 300 ml Wasser durch Zugabe von konz. Natronlauge bei pH = 5-7 gelöst. Man gibt 300 g Eis zu und streut 0,21 Mol Cyanurchlorid ein. Mit Sodalösung (20 g/100 ml) wird ein pH-Wert von 4-4,5 bei 0°C gehalten. Nach beendeter Kondensation gibt man 0,2 Mol einer neutralen Lösung von 4-Chloranilin in ca. 200 ml Wasser zu. Man heizt auf 20-30°C auf und hält mit Sodalösung (20 g/100 ml) pH 6-7. Nach ca. 1 Stunde kühlt man auf 10°C ab und gibt die obige Diazotierung a) zu.
   Gleichzeitig hält man mit Sodalösung (20 g/100 ml) pH 7-7,5.
   Nach beendeter Kupplung salzt man mit NaCl aus, isoliert und trocknet. Der erhaltene Farbstoff der Formel 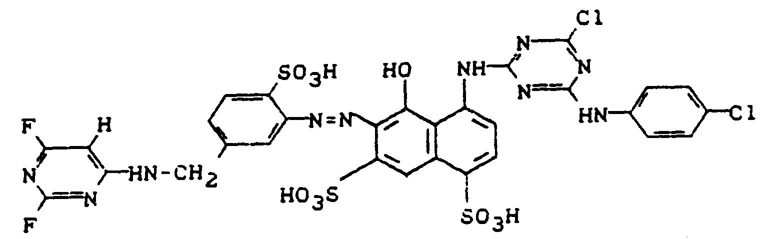
färbt Baumwolle in roten Tönen.

Durch Variation der Diazokomponenten, Kupplungskomponenten und Amine erhält man die Farbstoffe der folgenden Beispiele 92-111 der allgemeinen Formel

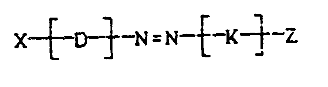

Sie färben Baumwolle in den angegebenen Tönen.

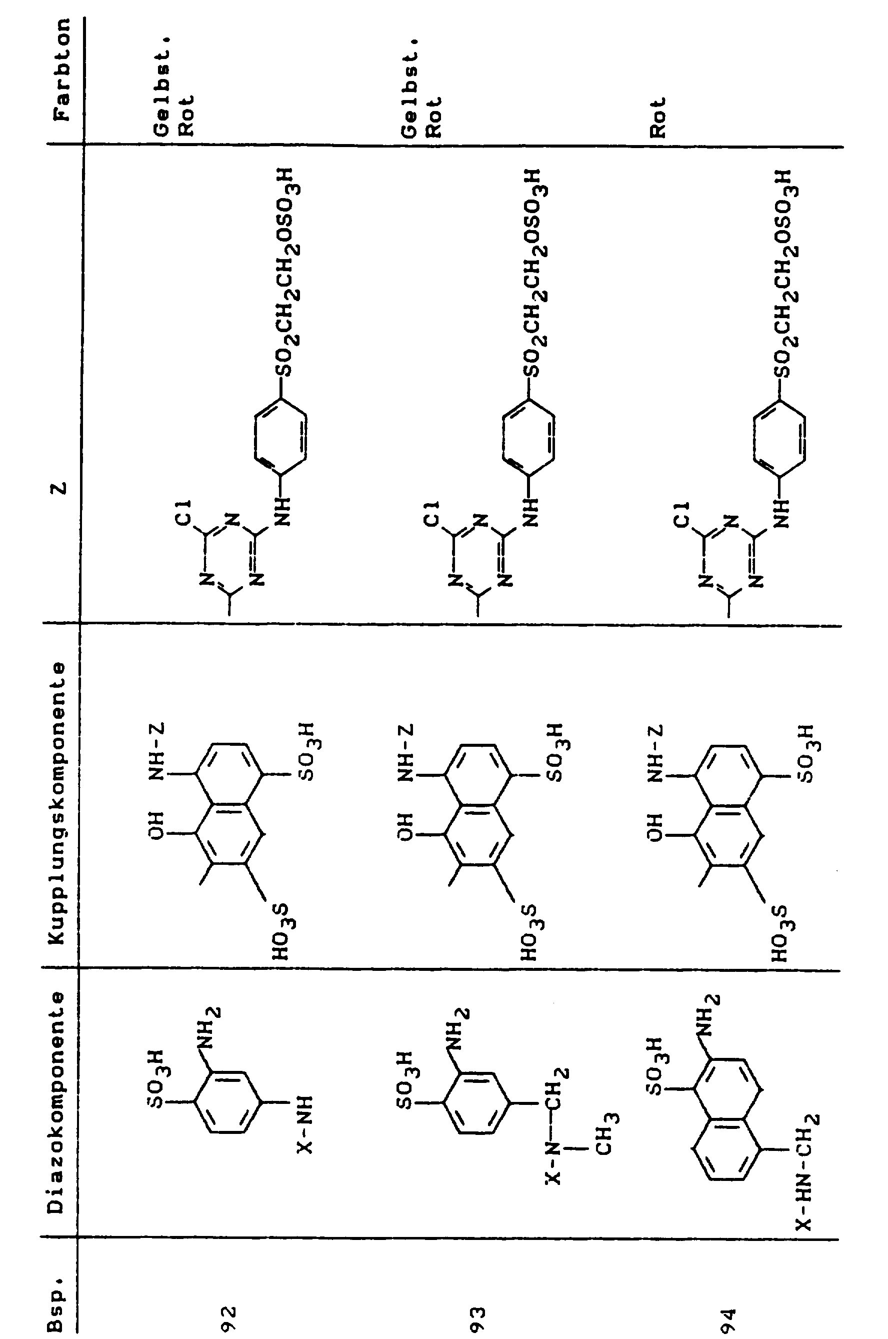

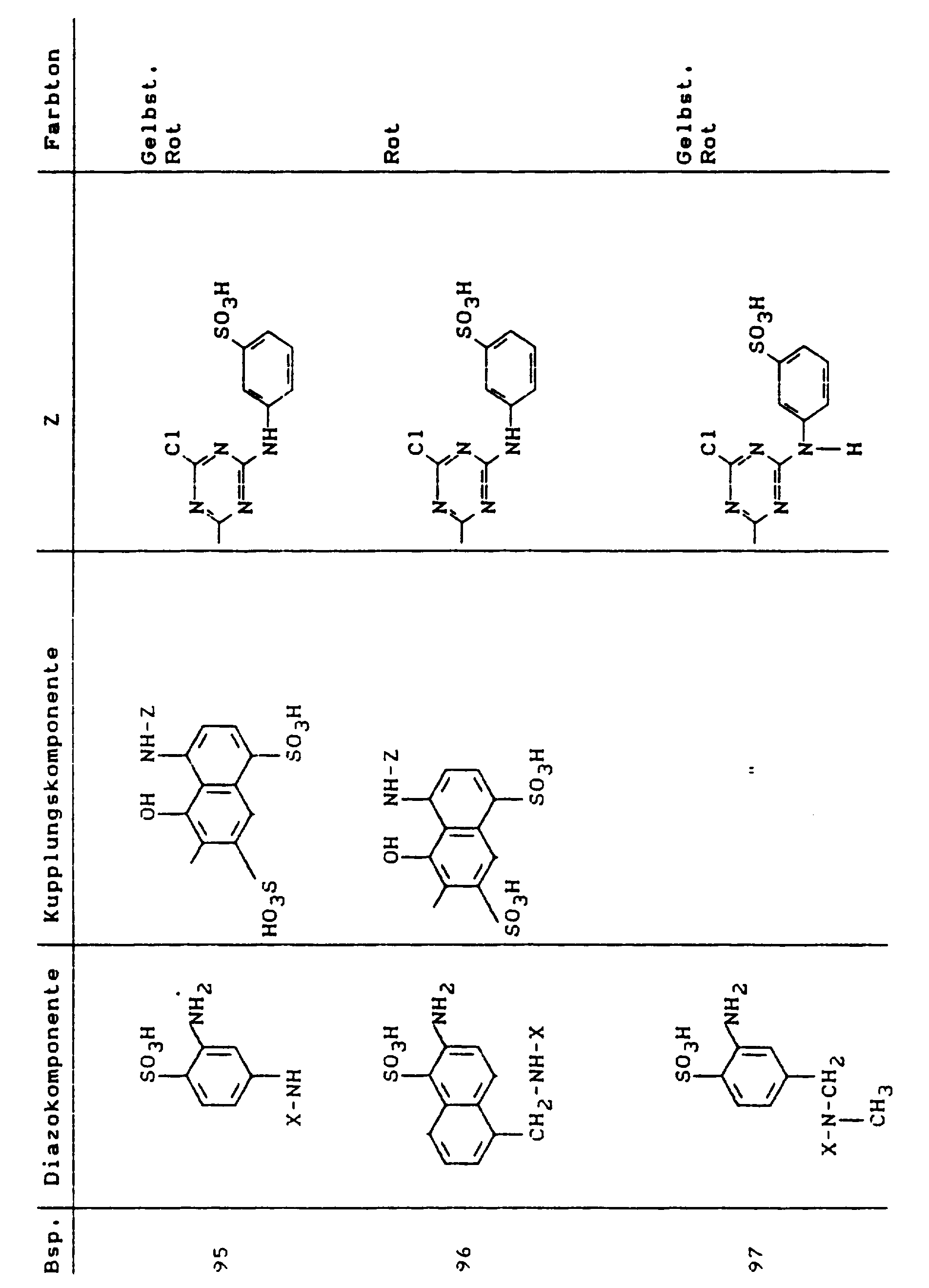

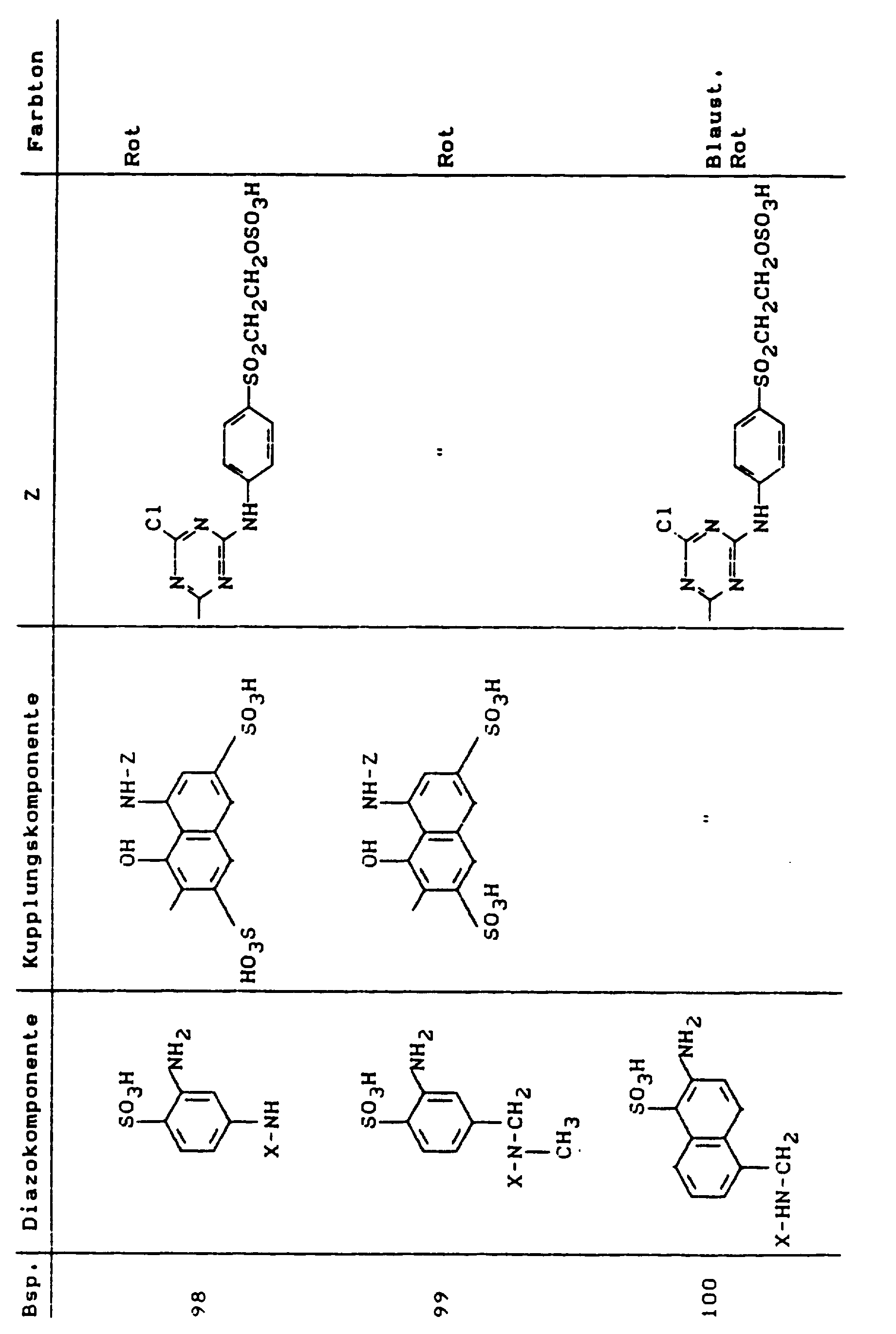

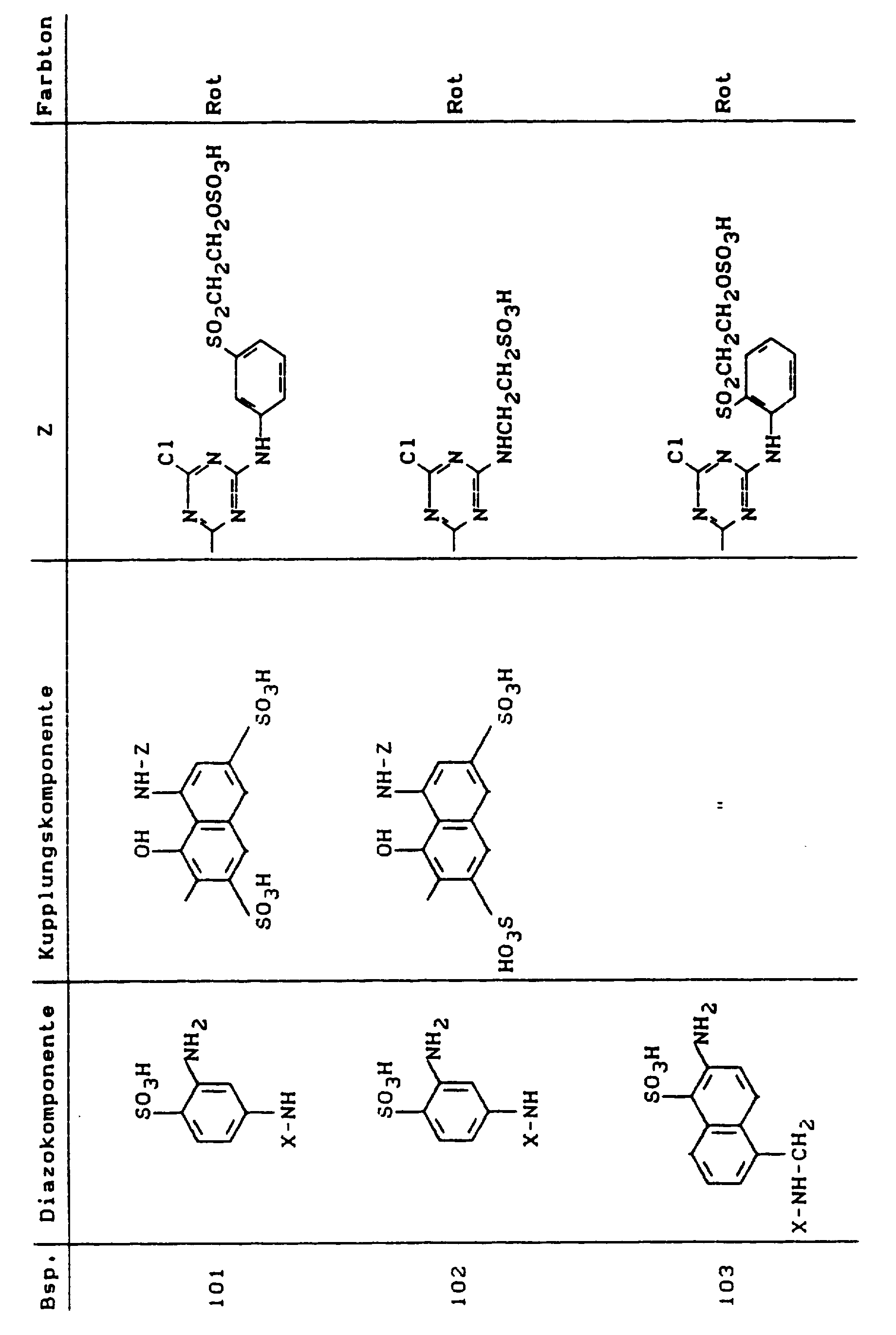

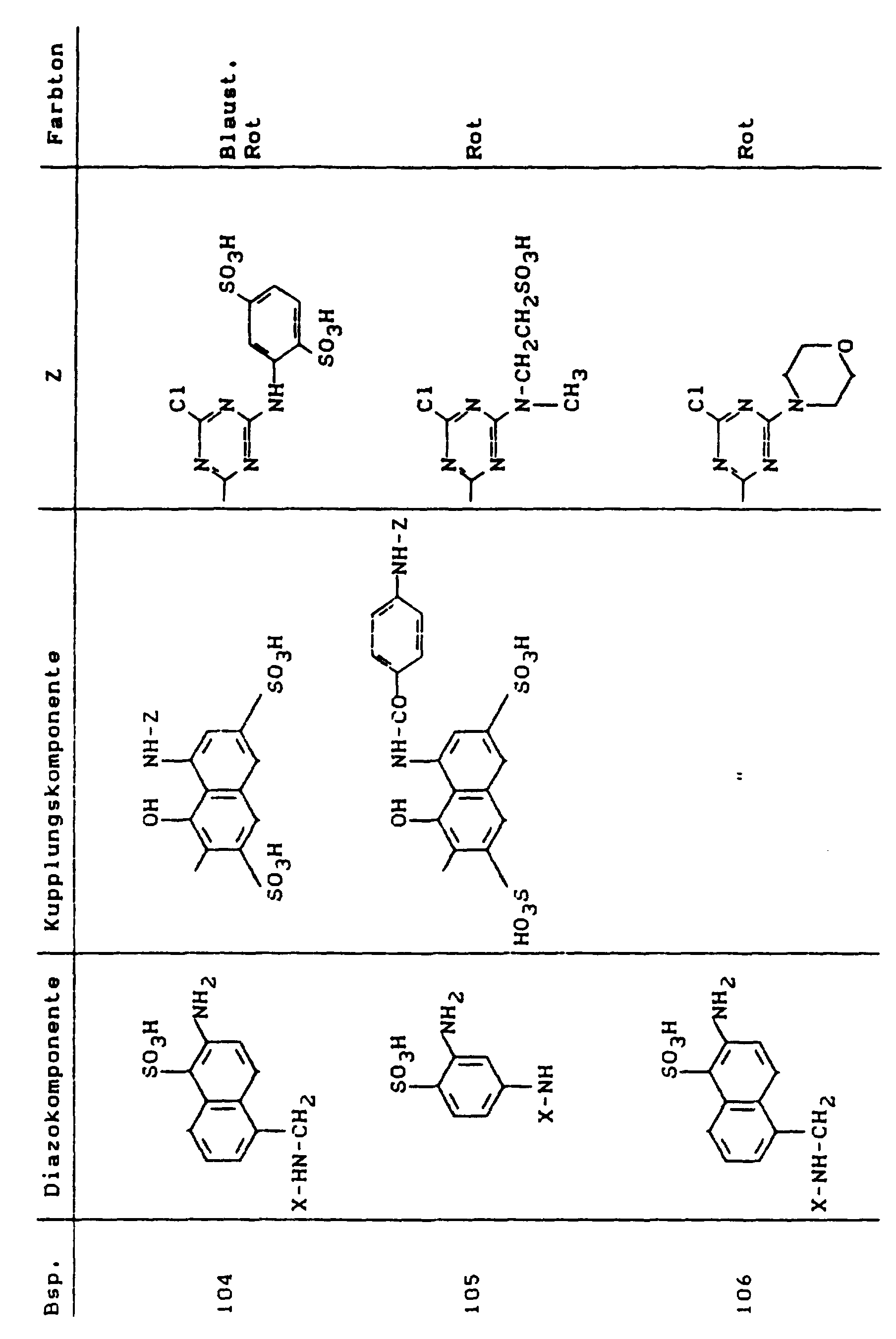

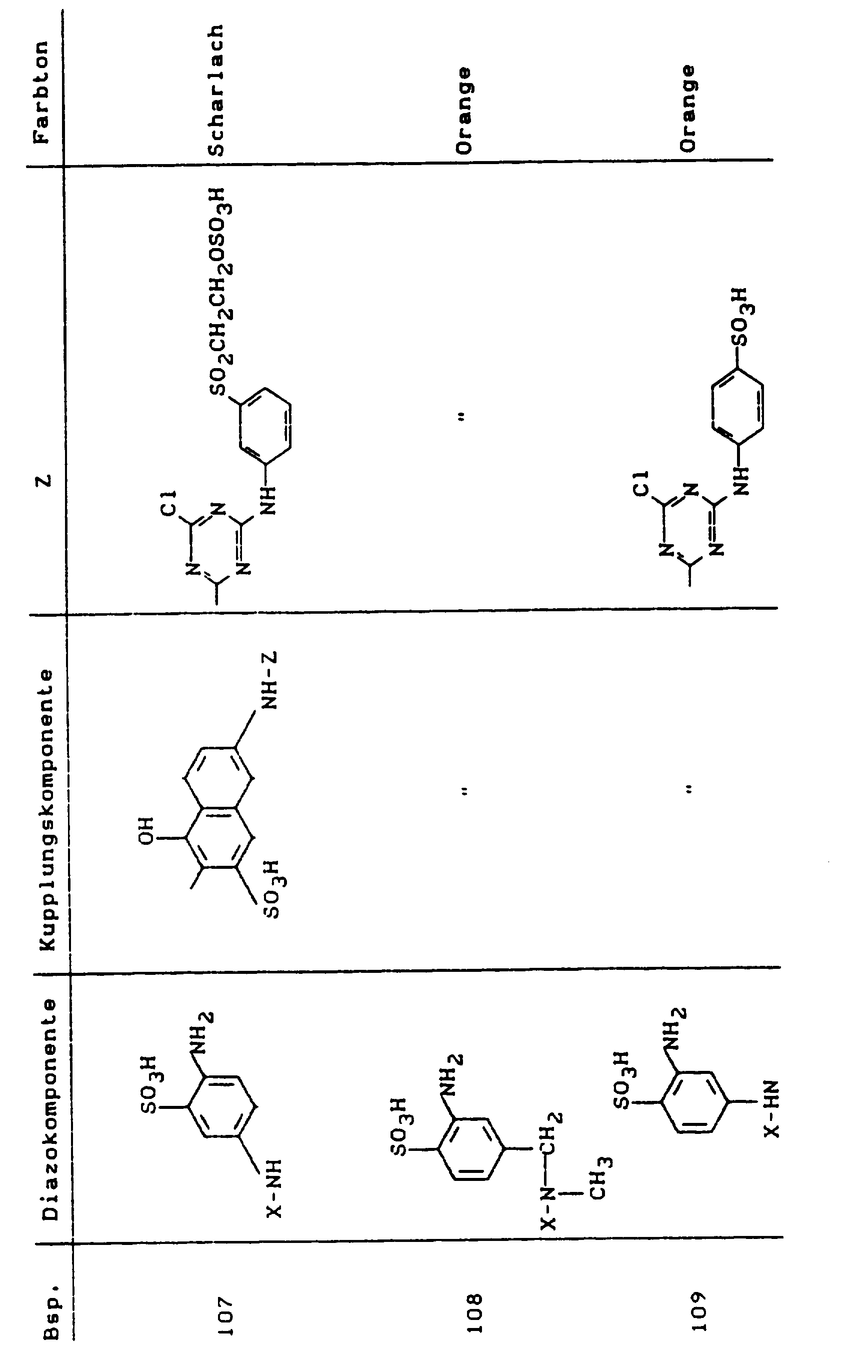

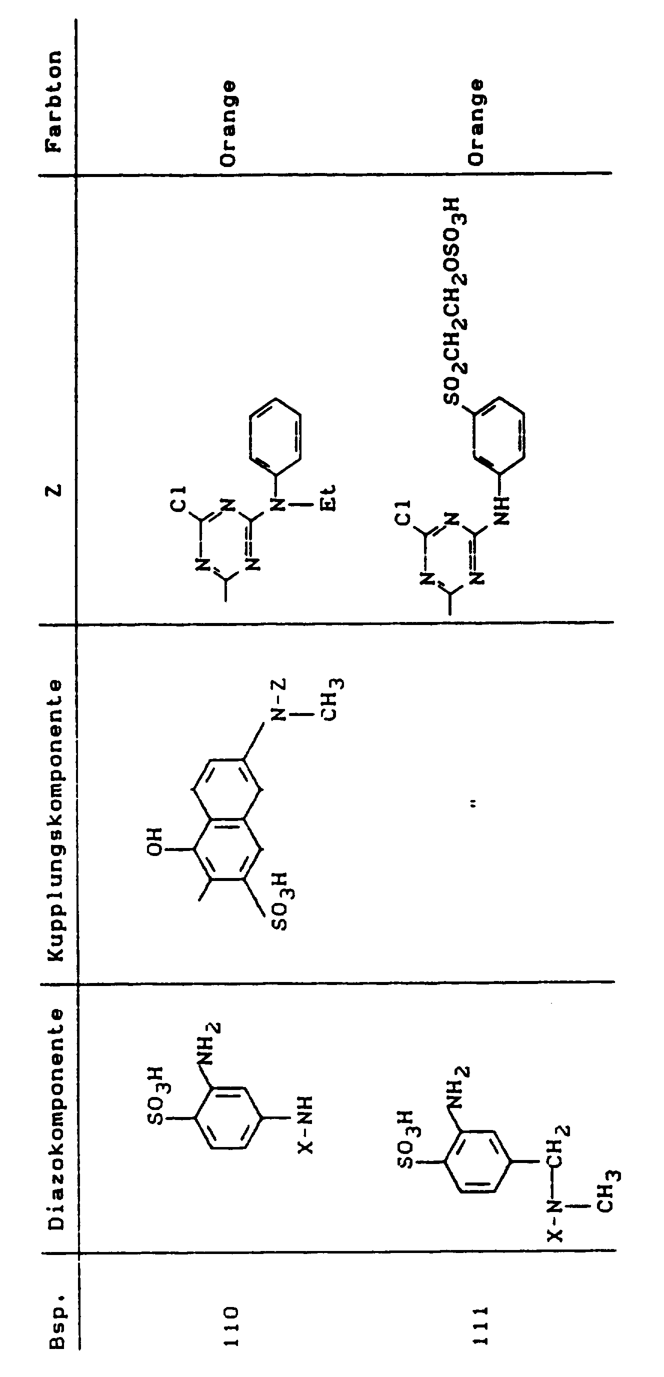

### Beispiel 112

0,2 Mol 2-Aminonapthalinsulfonsäure werden in 280 ml Wasser mit Lithiumhydroxyd bei pH 7 gelöst und 250 g Eis zugegeben. Danach werden 0,21 Mol Cyanurfluorid zugegeben und der pH mit Sodalösung bei ca. 4 gehalten. Zu der so entstandenen Suspension wird eine neutrale Lösung von 2,4-Diaminobenzolsulfonsäure gegeben und der pH auf 7-7,5 angehoben. Die Reaktionstemperatur wird auf 20°C angehoben und ca. 1 Stunde gerührt. Die Reaktionsmischung wird auf 0°C gekühlt und mit HCl und Natriumnitritlösung bei pH 2-2,2 diazotiert. Nach dem Vernichten des Nitritüberschußes mit Amidosulfonsäure kuppelt man auf die in Beispiel 32 beschriebene Kupplungskomponente bei pH 7-8 und 10-15°C. Aussalzen, Isolieren und Trocknen ergibt den Farbstoff der Formel 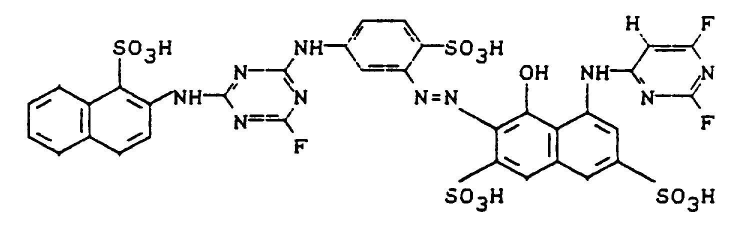 der Baumwolle in roten Tönen färbt.

Die Farbstoffe der Beispiele 113-124 der allgemeinen Formel 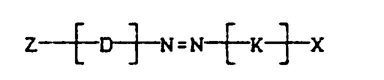 lassen sich auf analoge Weise herstellen unter Verwendung der angegebenen Diazo- und Kupplungskomponenten.

In einigen Fällen ist es jedoch günstiger, zunächst das Azochromophor zu synthetisieren und dann die Reaktivkomponenten oder eine davon (Z) anzukondensieren. Sie färben Baumwolle in den angegebenen Farbtönen.

X hat die in Formel (1) angegebene Bedeutung.

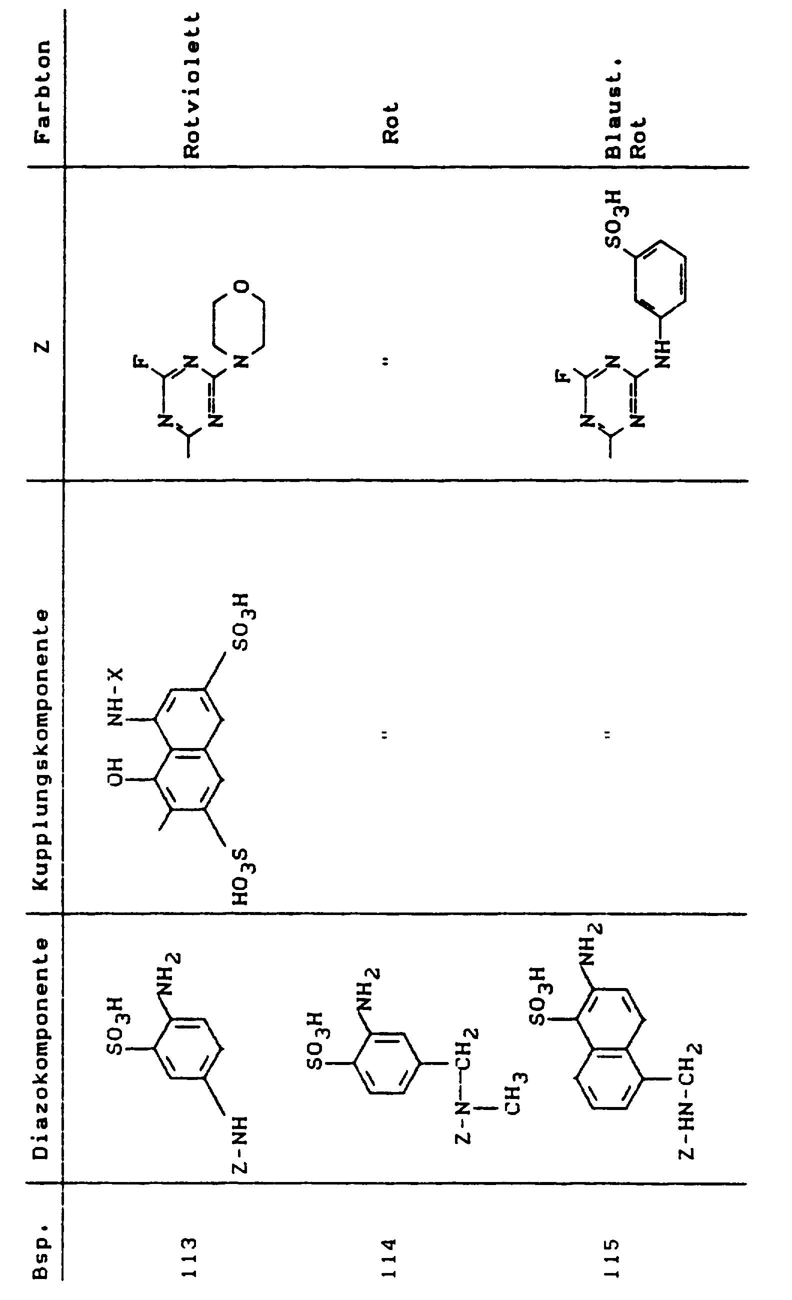

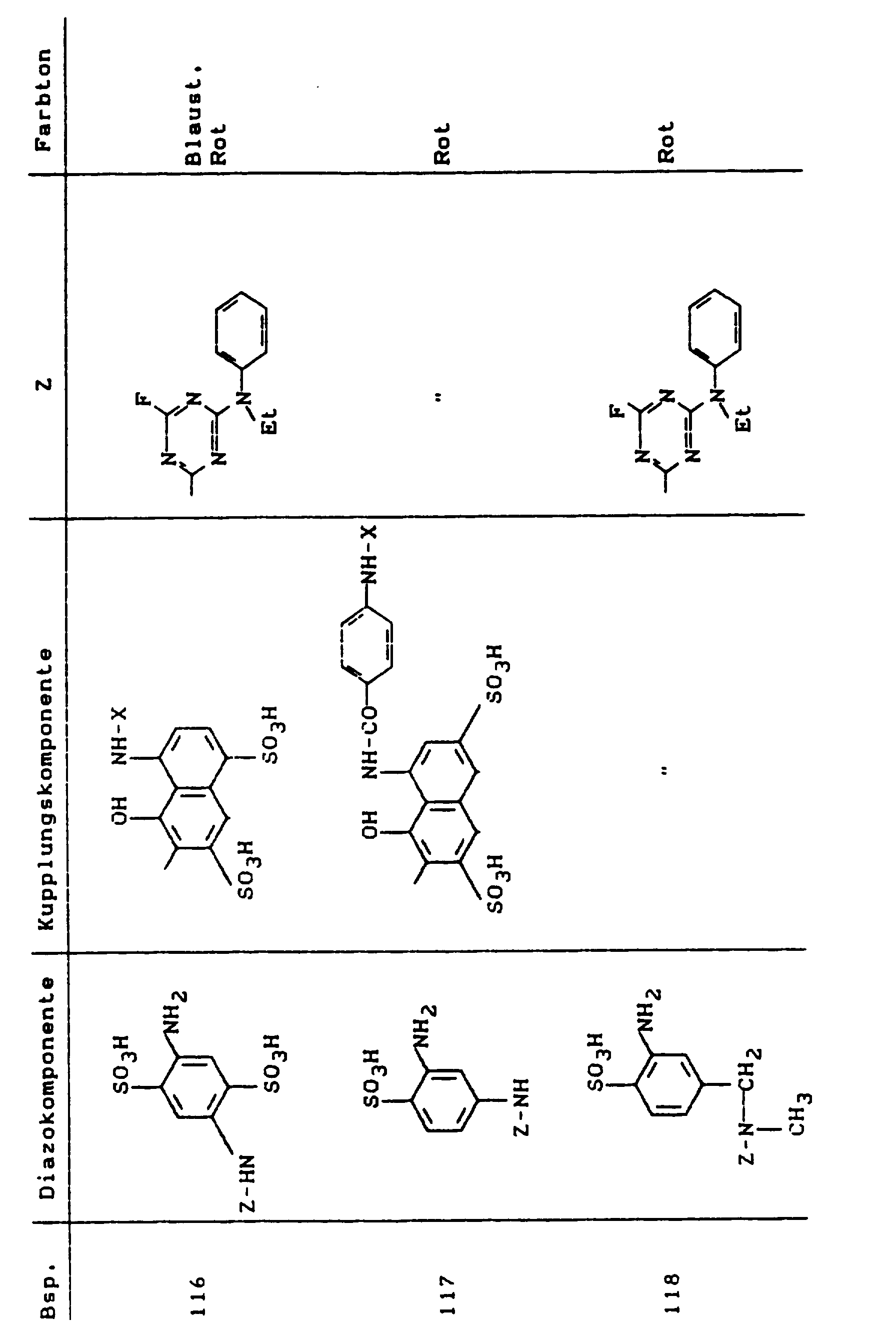

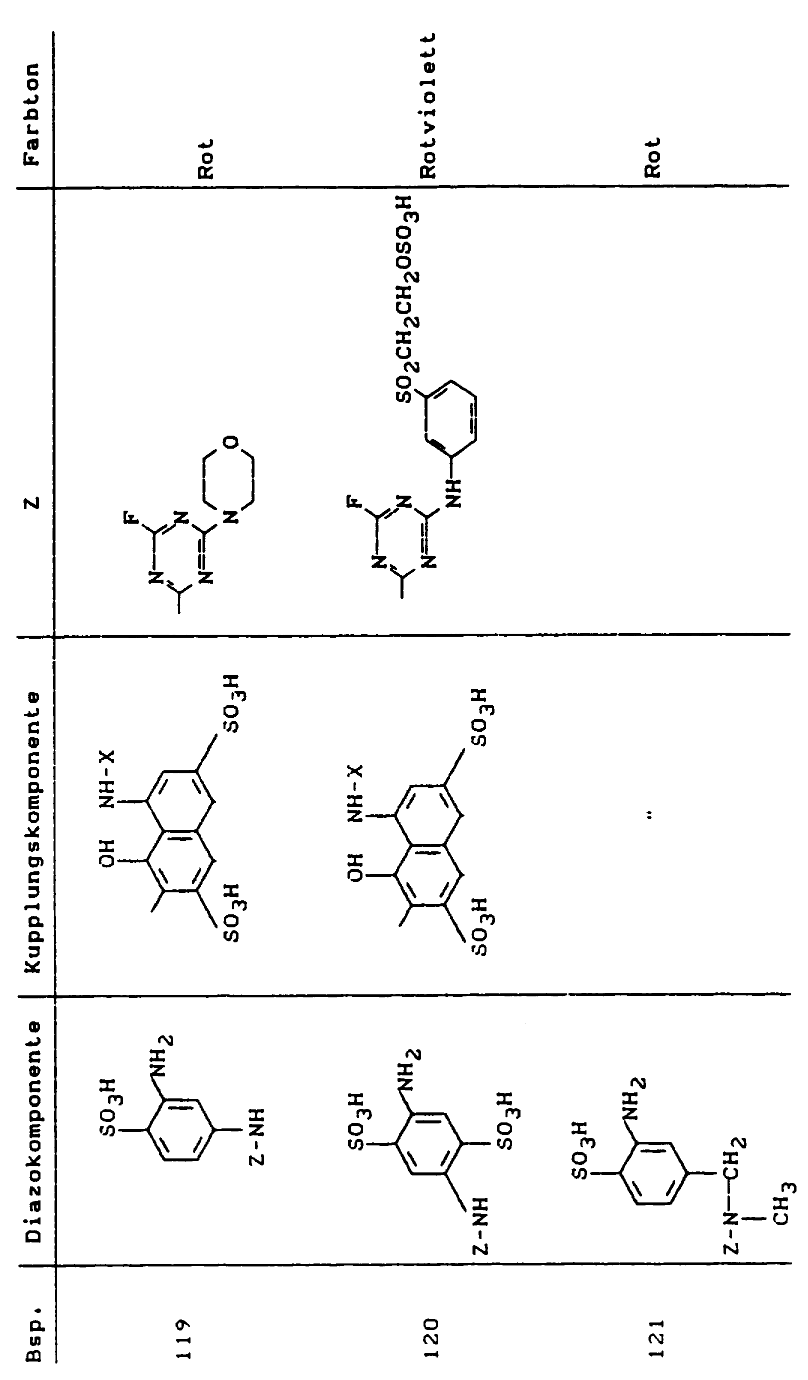

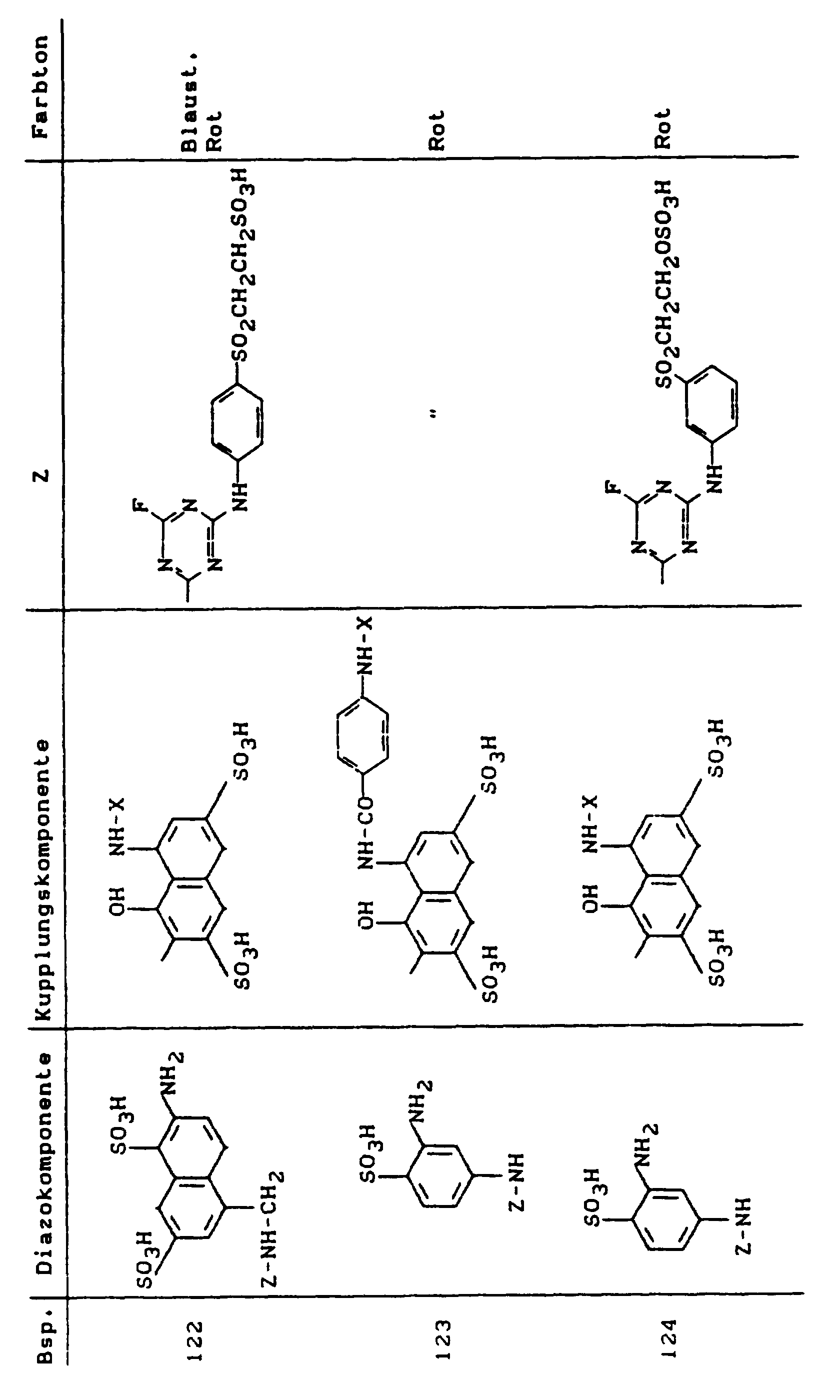

### Beispiel 125

0,22 Mol N-Ethylanilin werden in 200 ml Wasser bei pH 7 gelöst. Man gibt 200 g Eis zu und streut 0,24 Mol Cyanurchlorid ein. Mit Sodalösung (20 g/100 ml) hält man einen pH-Wert von 6-7. Nach ca. 1 Stunde bei 0°C ist die Kondensation beendet. 0,2 Mol 2,4-Diamino-benzolsulfonsäure werden in 250 ml Wasser durch Zugabe von konz. Natronlauge gelöst und zu 1 Stufe der Kondensation zugesetzt. Mit Sodalösung (20 g/100 ml) wird ein pH-Wert von 6-7 gehalten. Man heizt auf 25-35°C auf. Nach beendeter Kondensation kühlt man auf 0°C ab. Es werden 56 ml 30 %iger Salzsäure zugegeben. Man tropft 47 ml Natriumnitritlösung (30 g/100 ml) zu und rührt 1 Stunde bei 0°C. Natriumnitrit wird mit Amidosulfonsäure vernichtet und die so erhaltene Diazotierung zur Kupplungskomponente aus Beispiel 32 gegeben. Mit Sodalösung (20 g/100 ml) wird ein pH-Wert von 7-8 gehalten. T = 10-15°C. Nach beendeter Kupplung salzt man mit NaCl aus, isoliert und trocknet. Der erhaltene Farbstoff der Formel 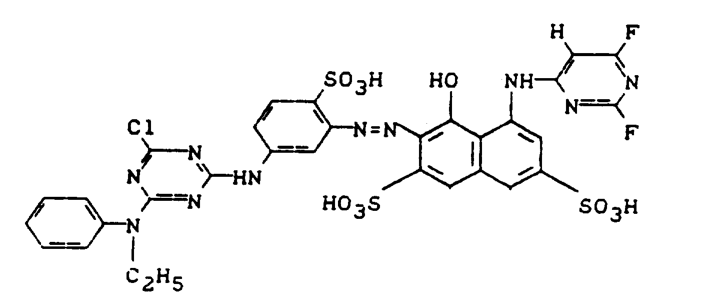 färbt Baumwolle in roten Tönen.

Die Farbstoffe der Beispiele 126-131 der allgemeinen Formel 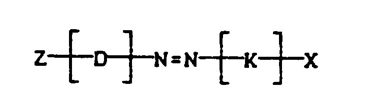 lassen sich unter Verwendung der entsprechenden Diazo-, Kupplungskomponenten und Amine analog herstellen. In einigen Fällen ist es günstiger die Kondensation mit Cyanurchlorid und Amin an den Schluß der Synthese-Frequenz zu stellen.

X hat die in Formel (1) angegebene Bedeutung.

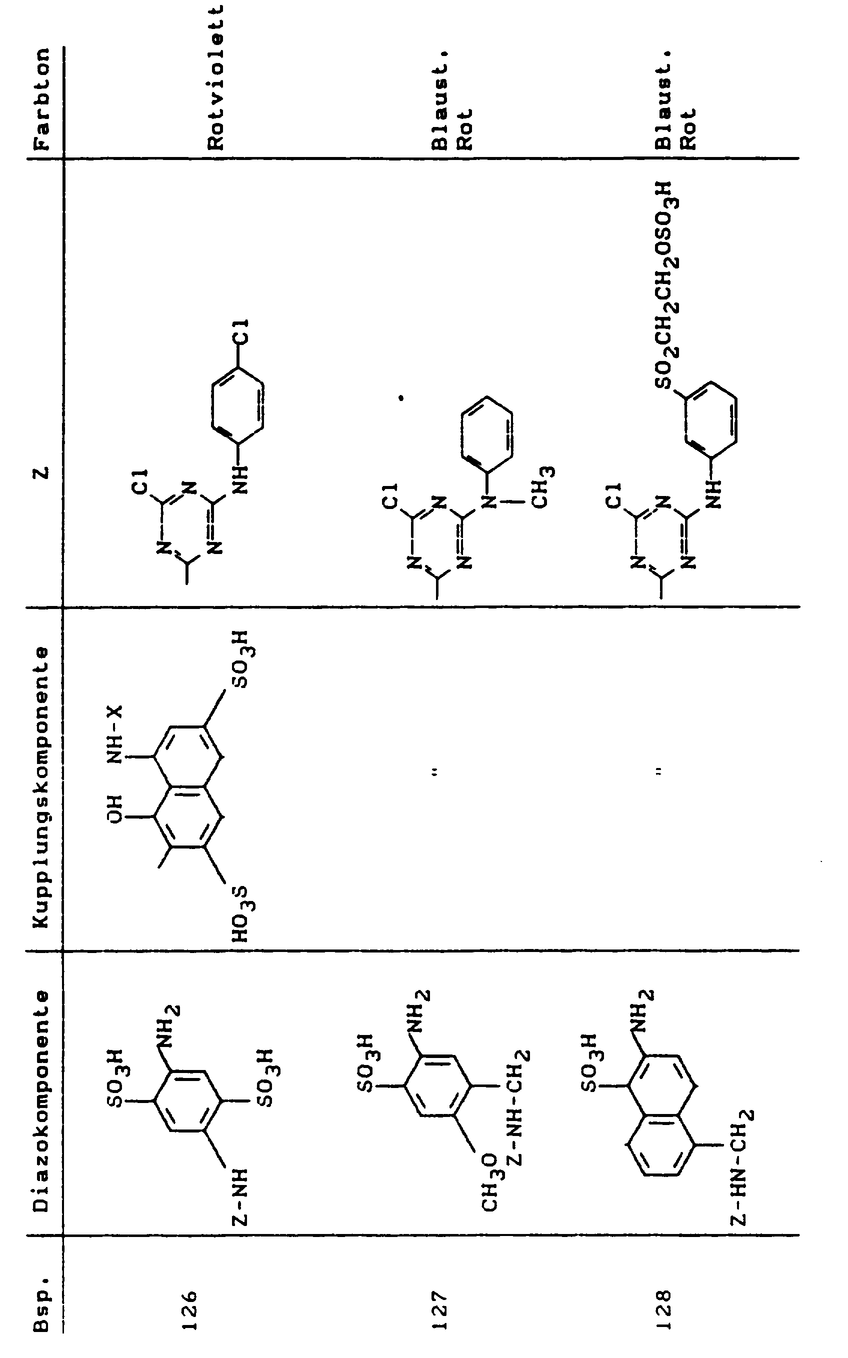

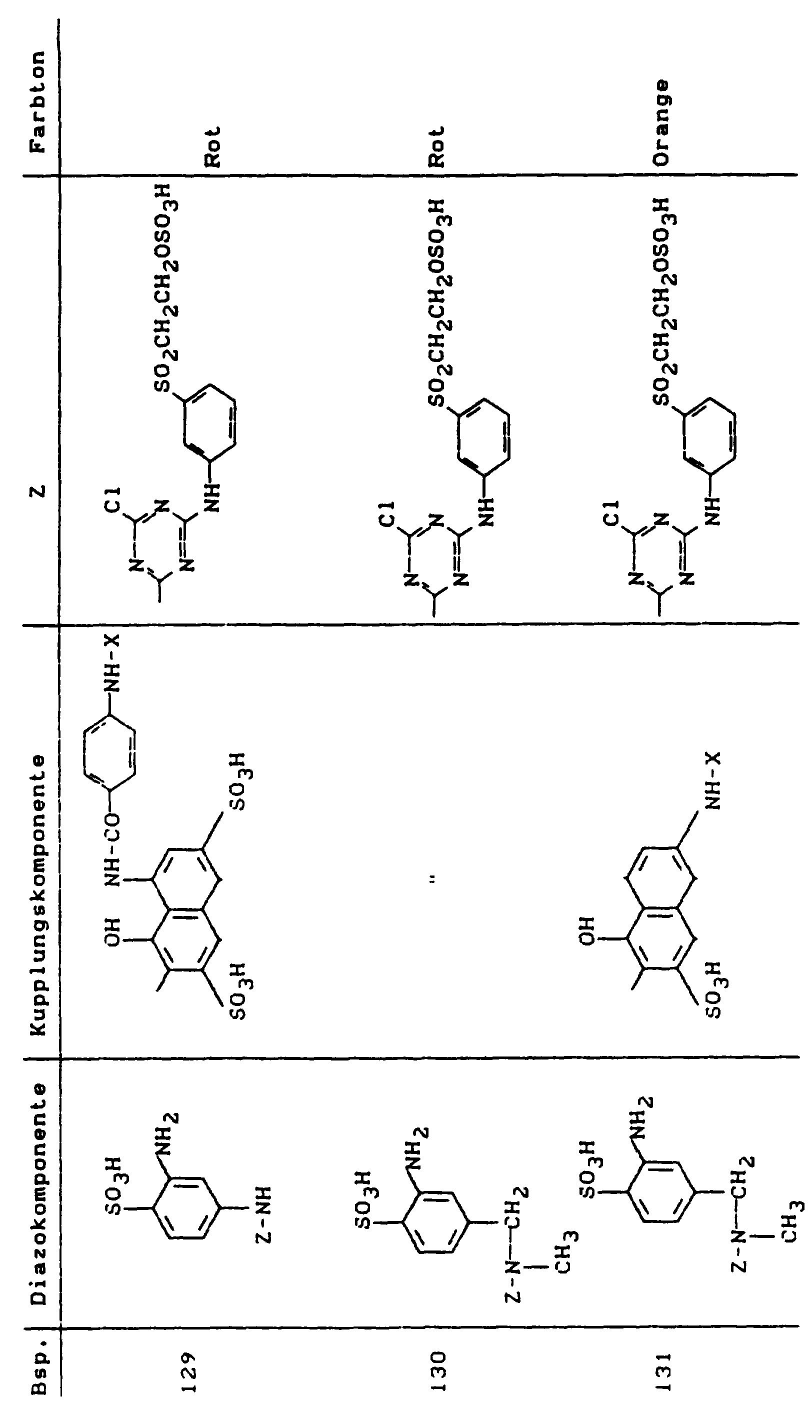

Weitere wertvolle Farbstoffe der Formel 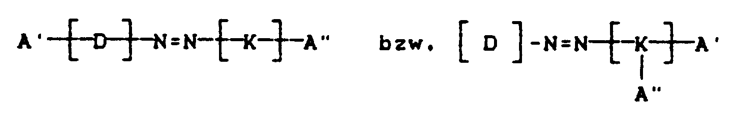 sind die der Beispiele 132-143, die sich nach bekannten Methoden, wie bsp. oben dargestellt, herstellen lassen und Baumwolle in den angegebenen Tönen färben.

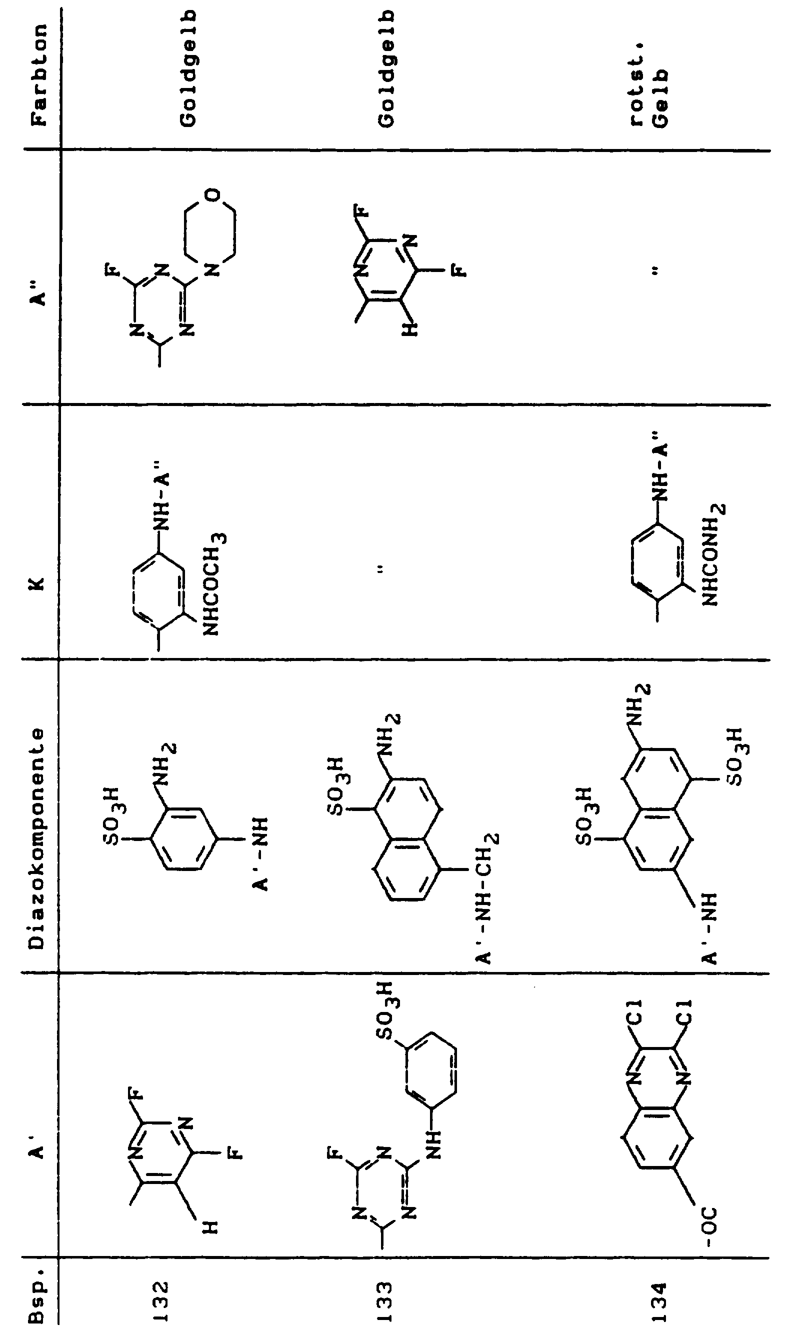

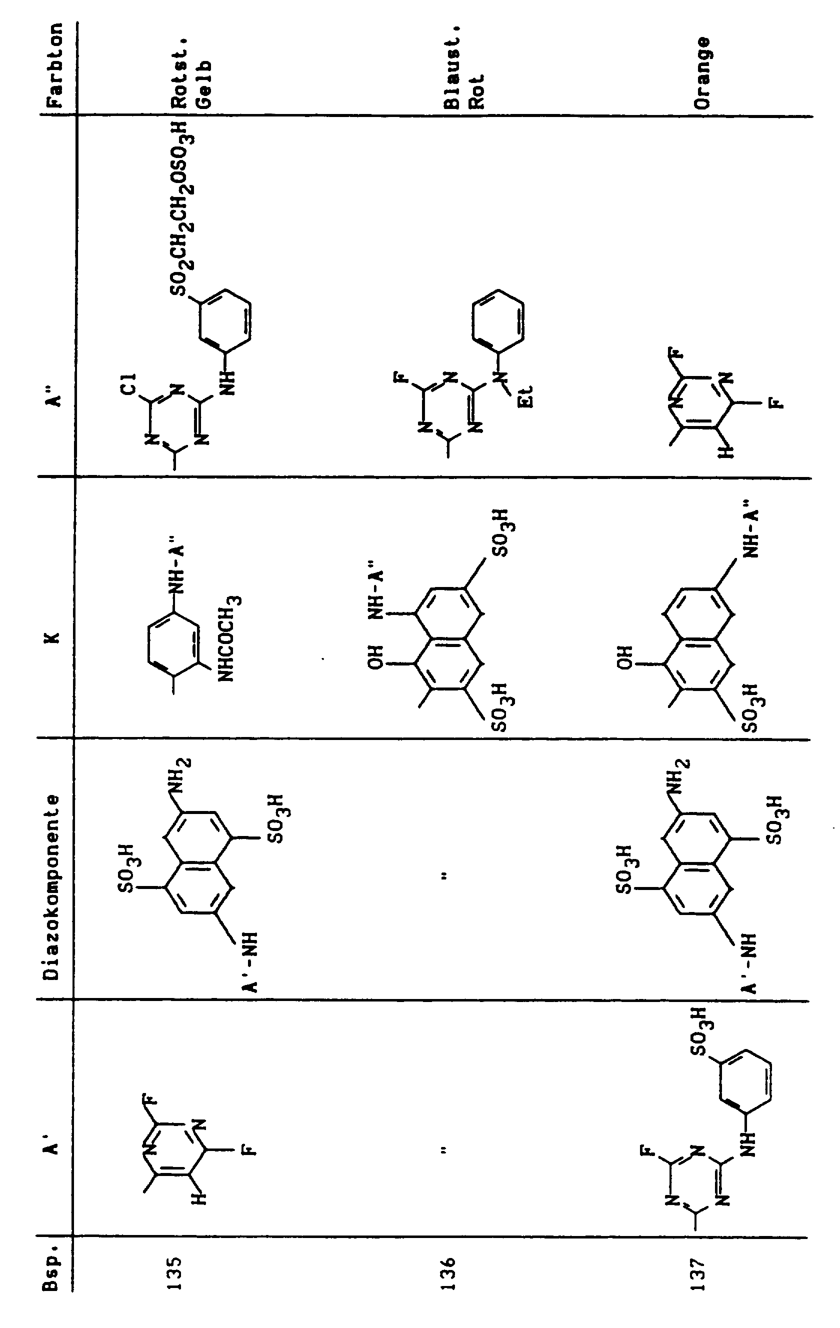

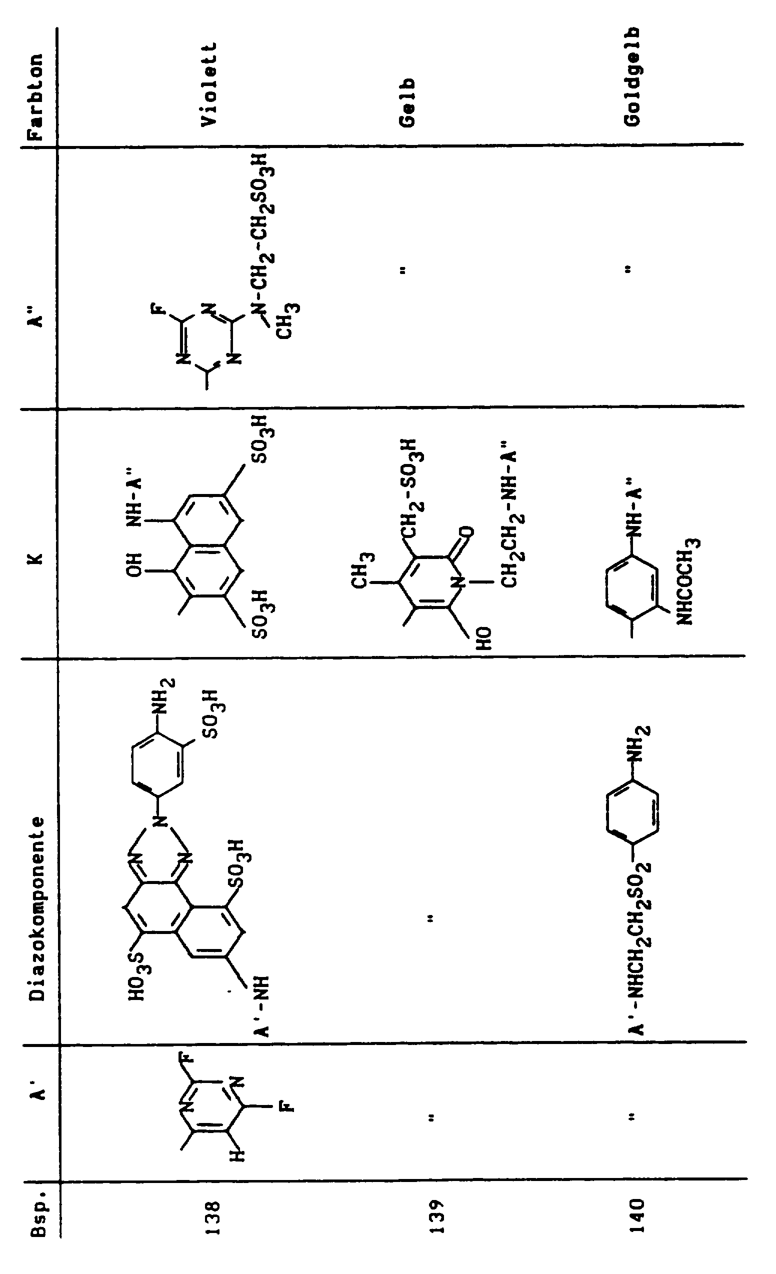

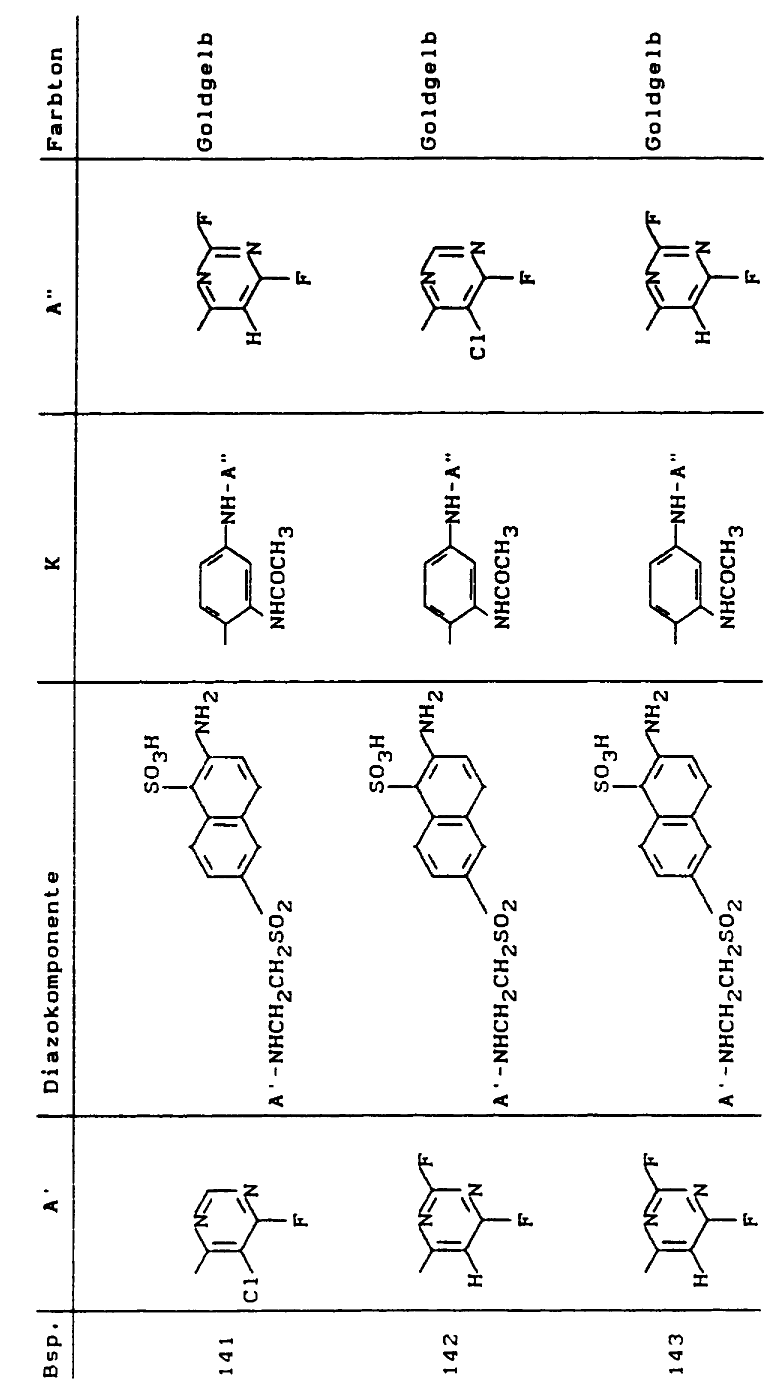

Analog den oben beschriebenen Herstellungsverfahren bzw. nach üblichen Verfahren lassen sich unter Verwendung der entsprechenden Ausgangskomponenten die Farbstoffe der Beispiele 144-169 erhalten.

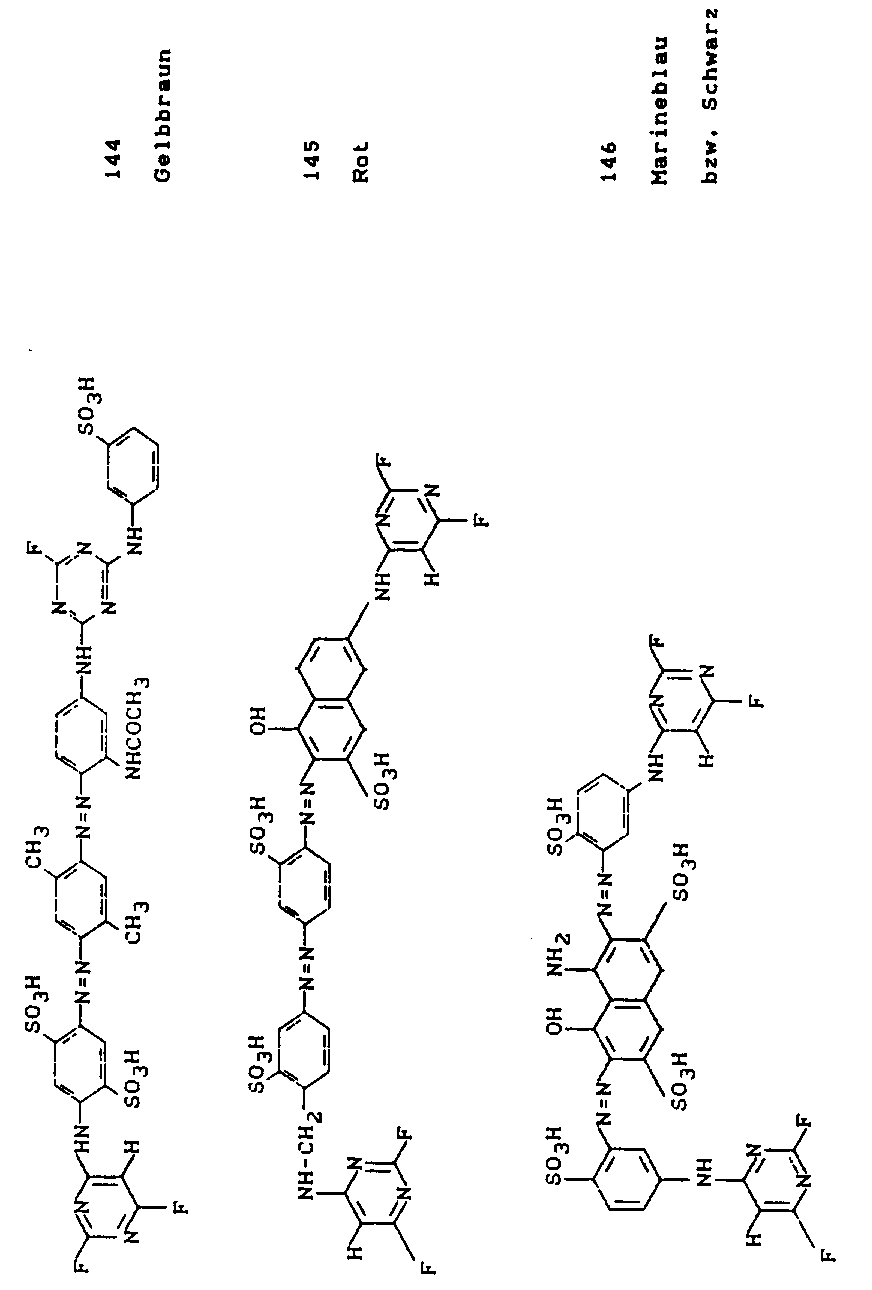

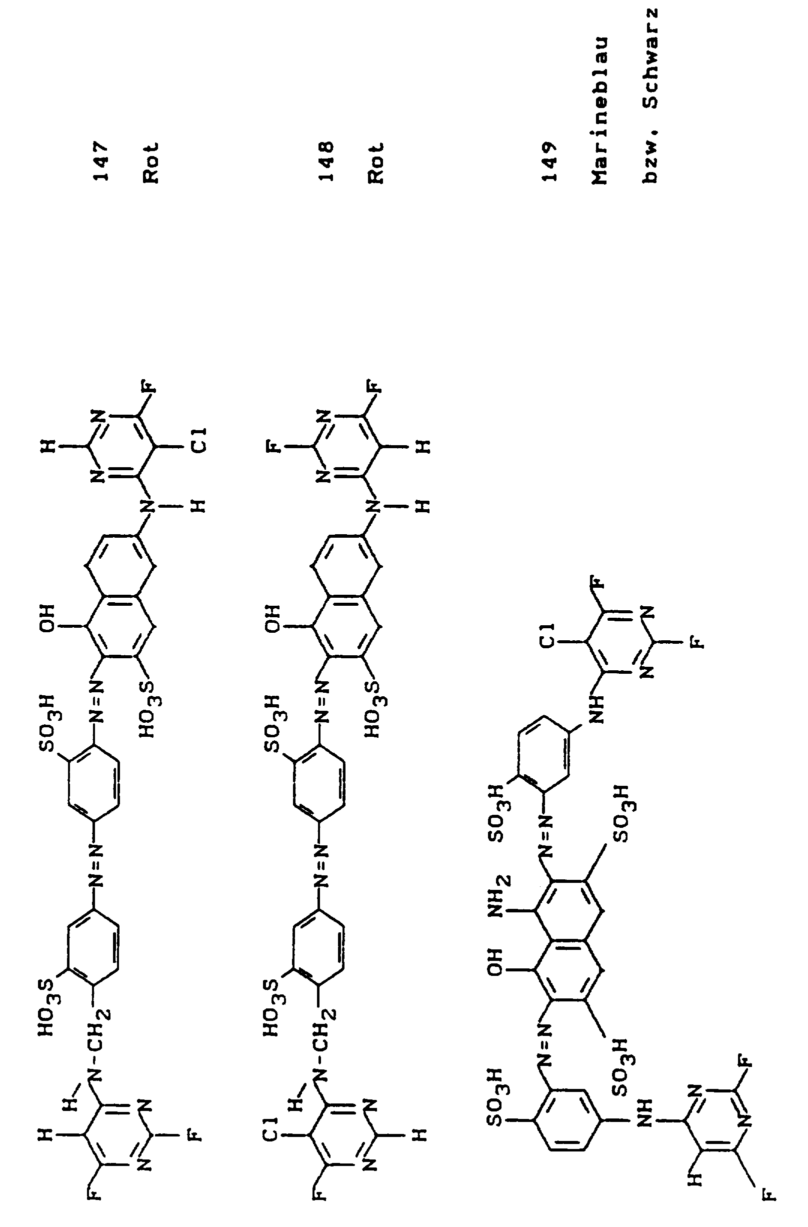

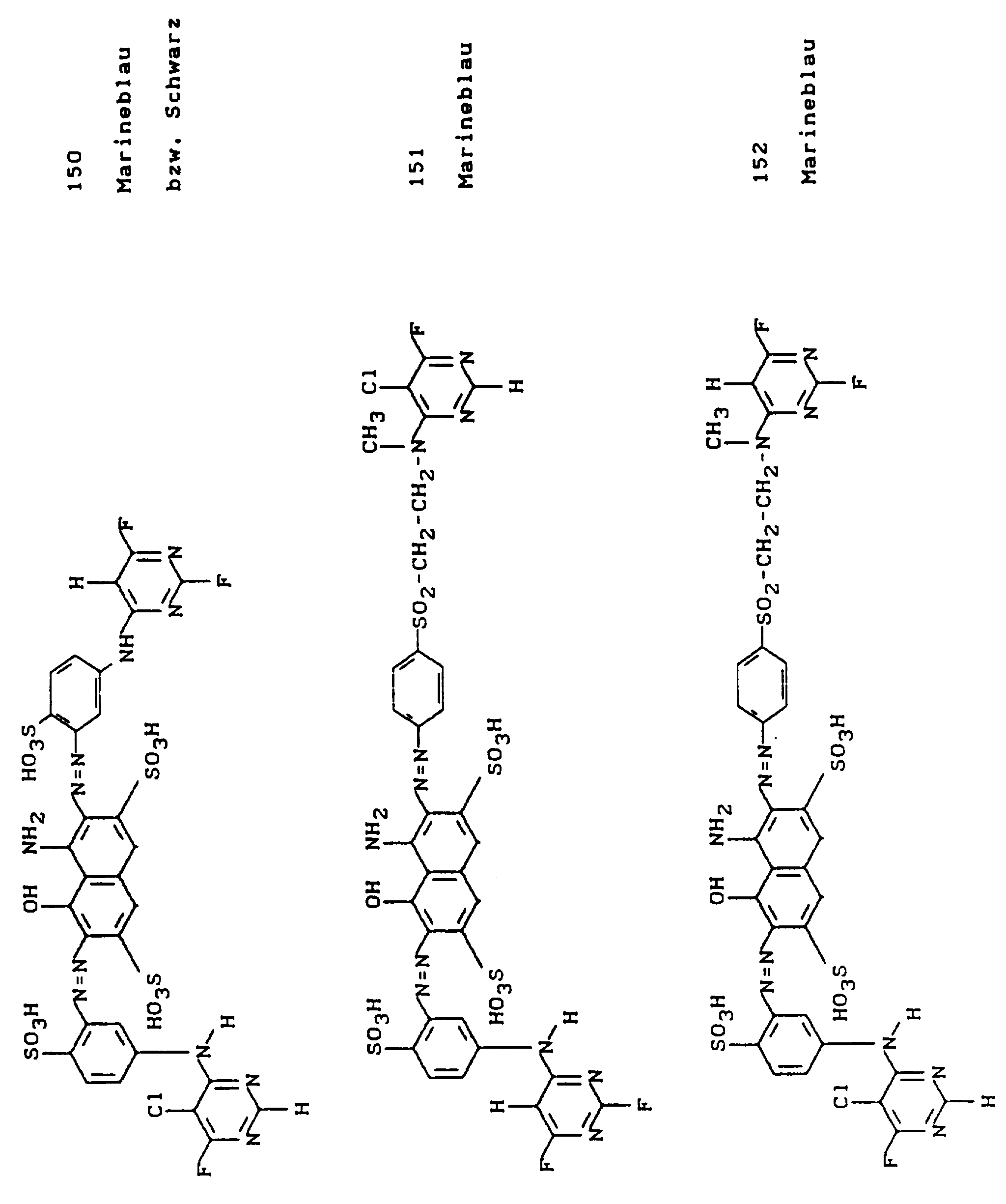

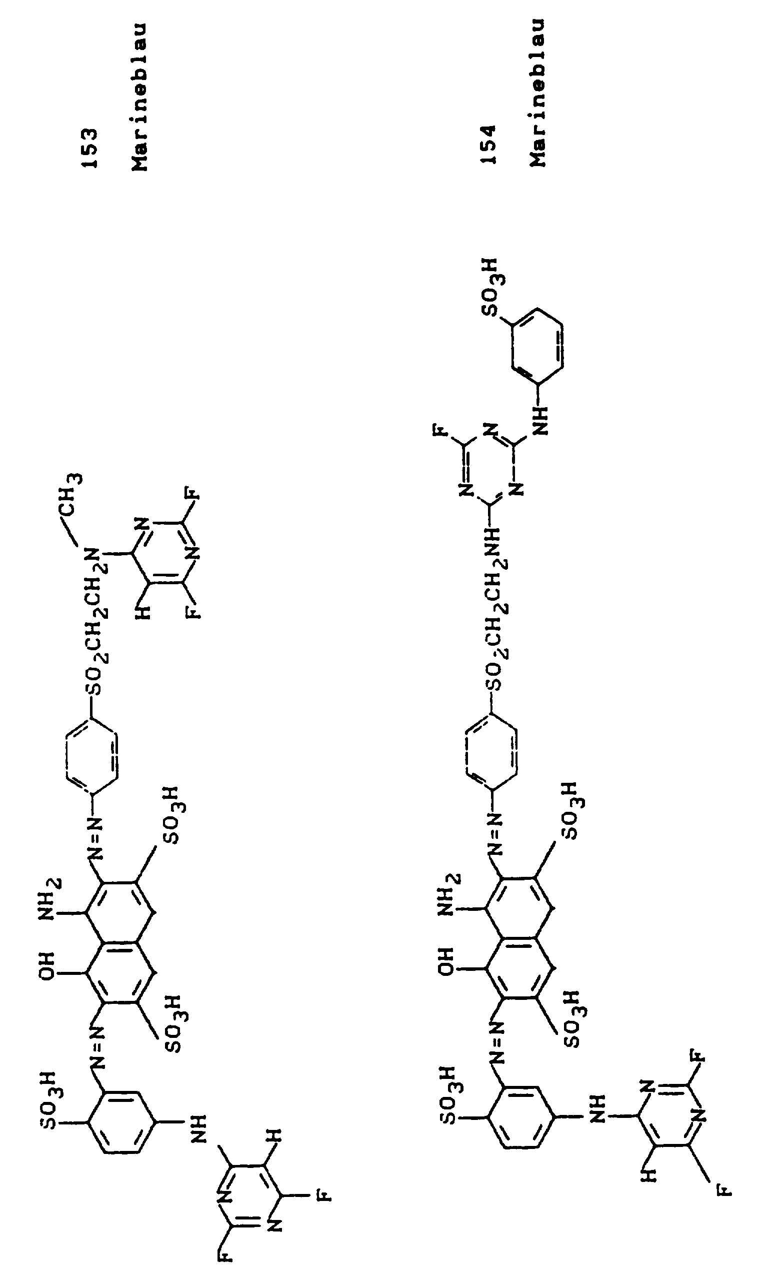

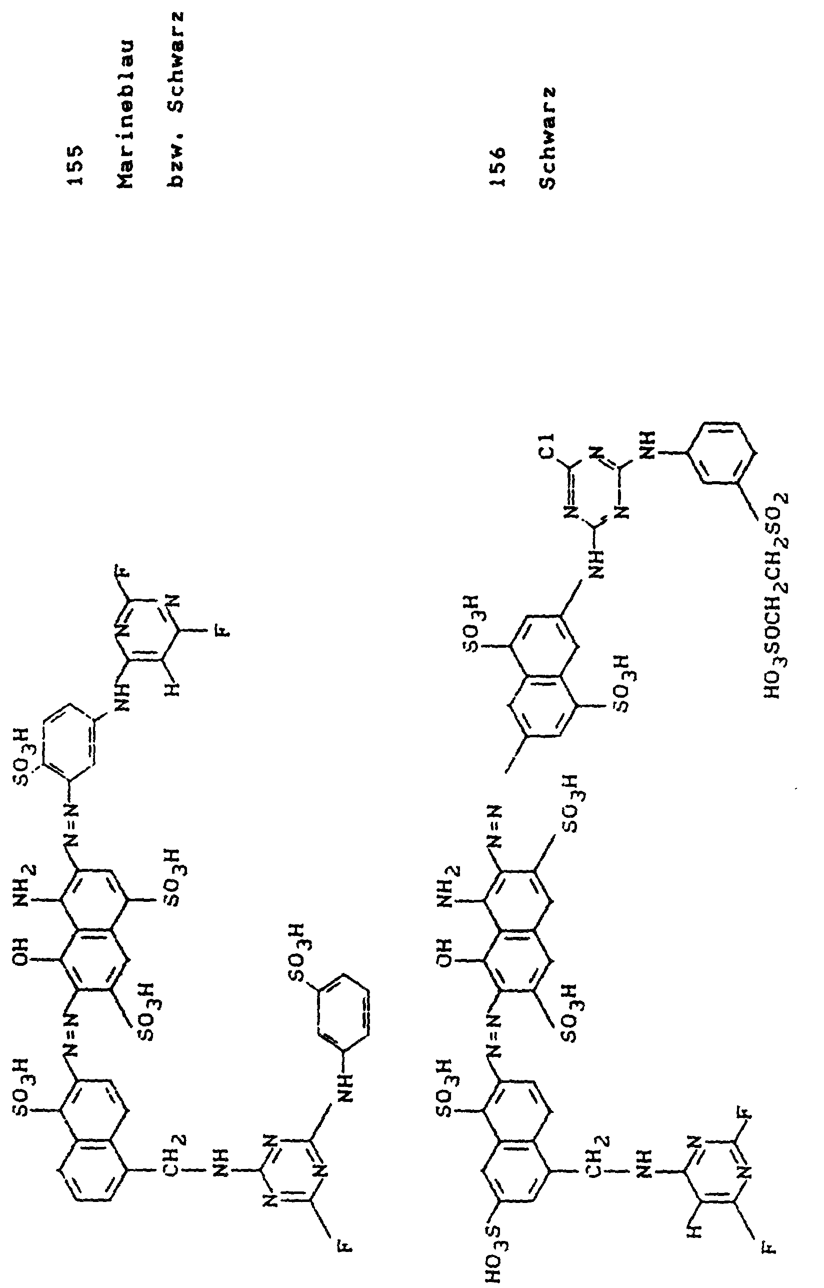

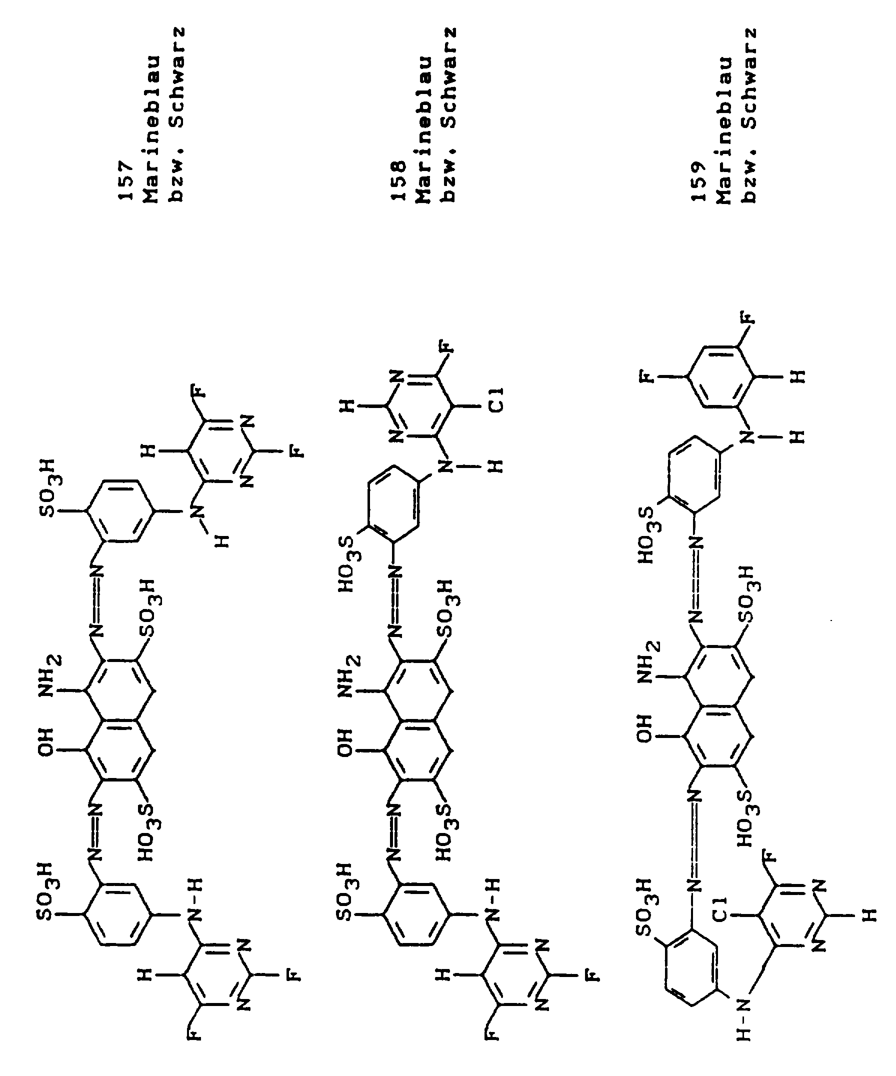

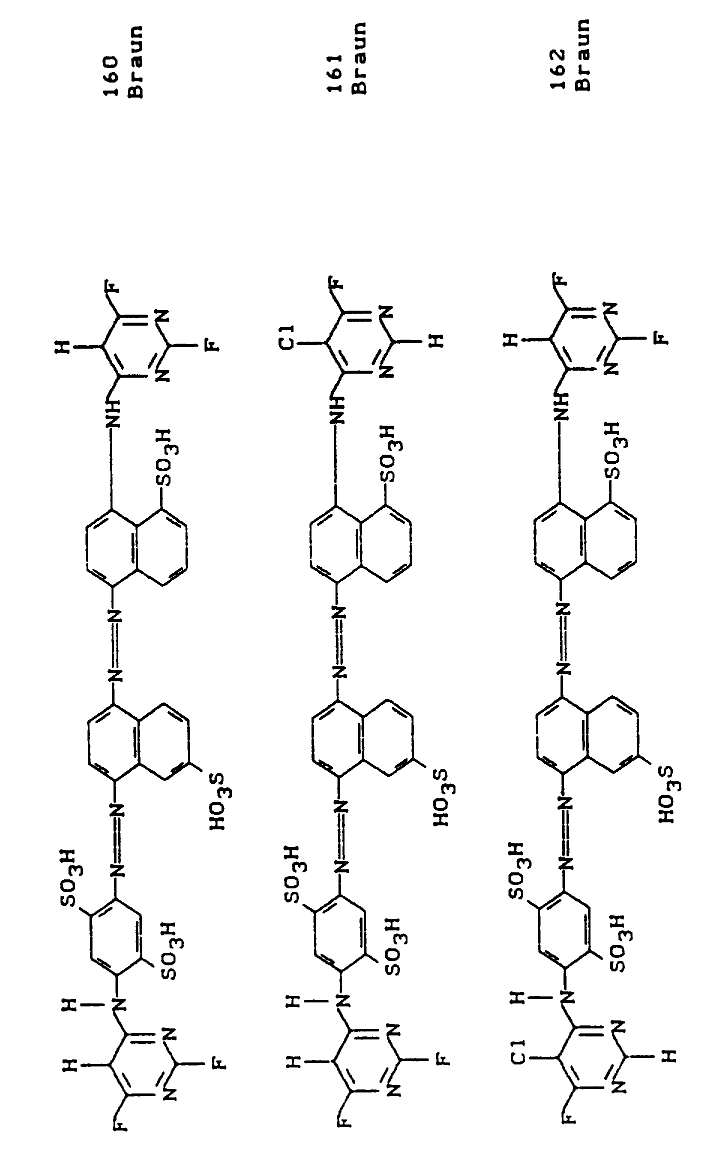

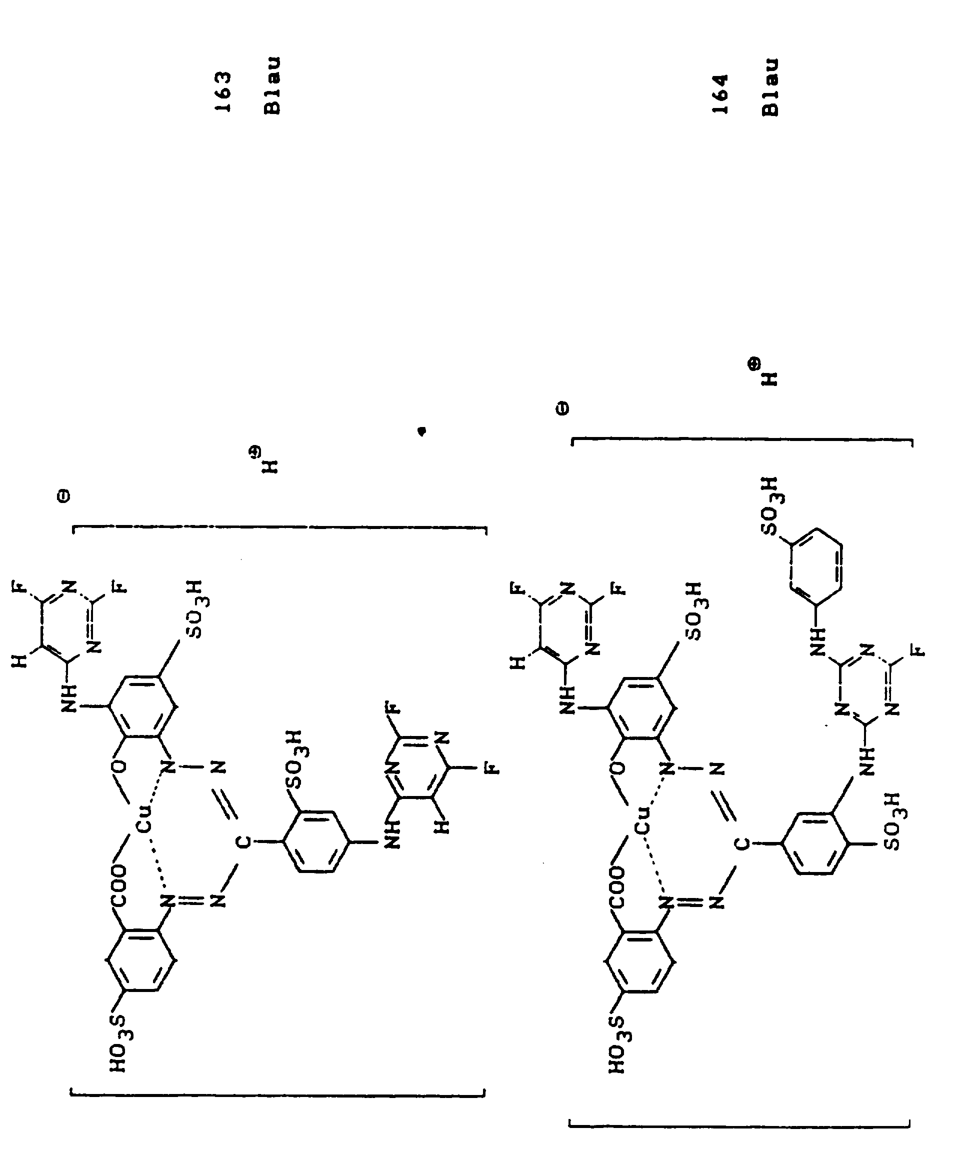

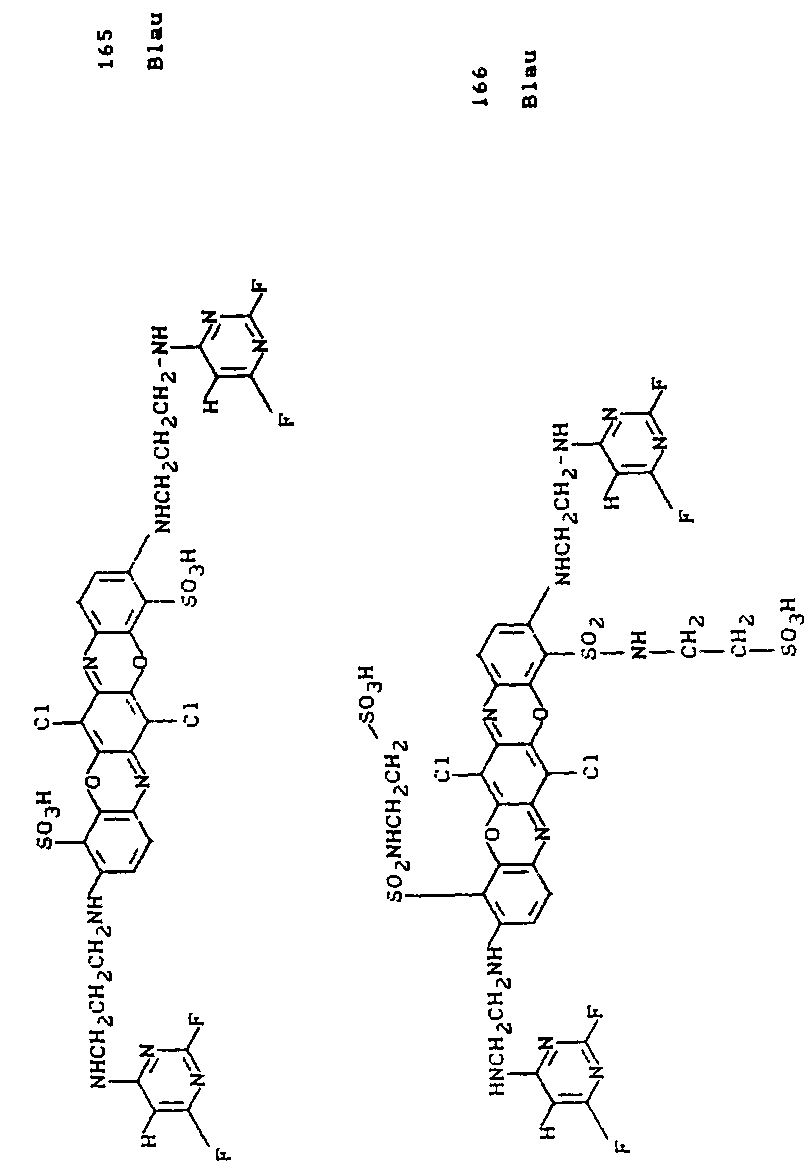

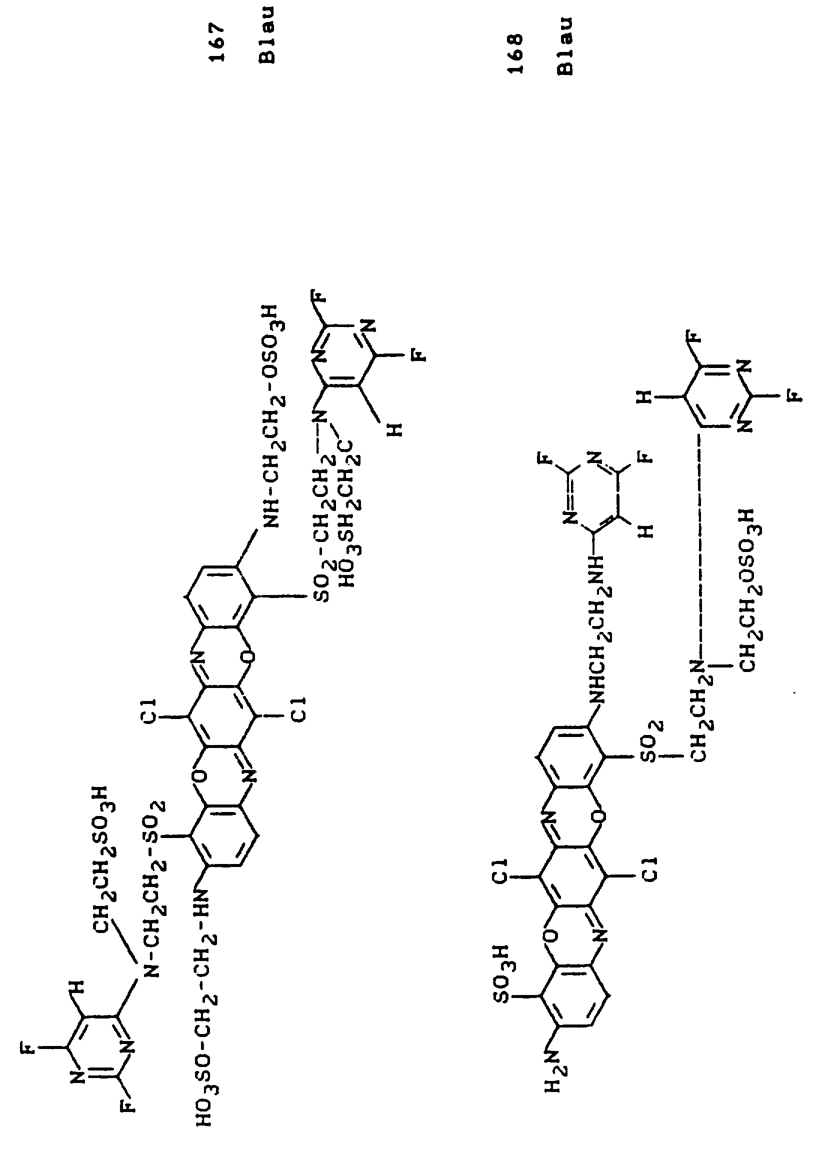

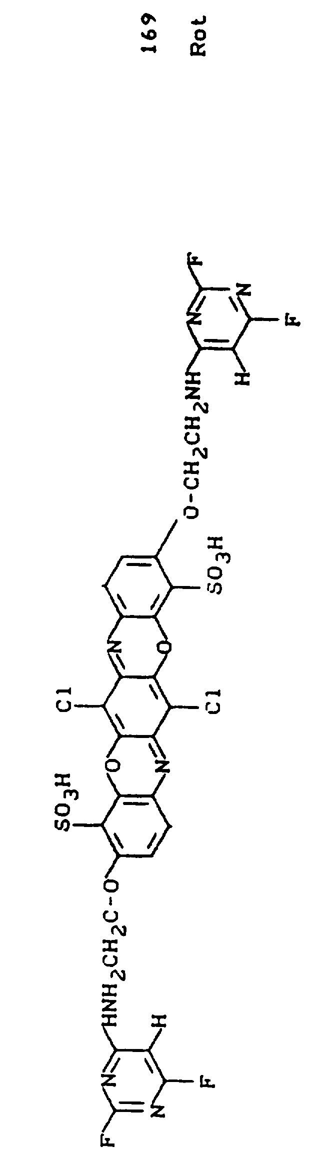

## Patentansprüche

1. Reaktivfarbstoffe der Formel 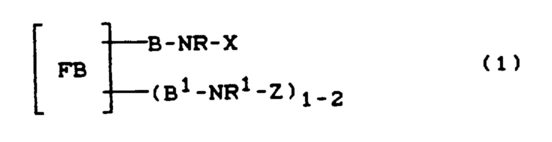 mit
FB = der Rest eines Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,
B, B¹ = unabhängig voneinander direkte Bindung oder Brückenglied an ein Ring C-Atom eines aromatisch-carbocyclischen oder an ein Ring-C- oder -N-Atom eines aromatisch-heterocyclischen Ringes in FB,
X = 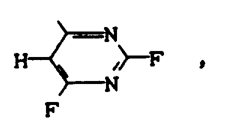
Z = heterocyclischer faserreaktiver Rest und
R, R¹ = unabhängig voneinander H, substituiertes oder unsubstituiertes C₁-C₆-Alkyl.

2. Farbstoffe des Anspruchs 1 der Formel 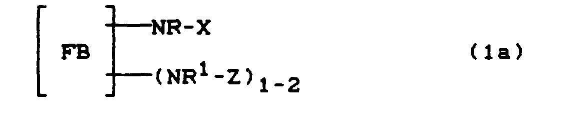 worin die einzelnen Gruppen die in Anspruch 1 angegebene Bedeutung haben.

3. Farbstoffe des Anspruchs 1 der Formel 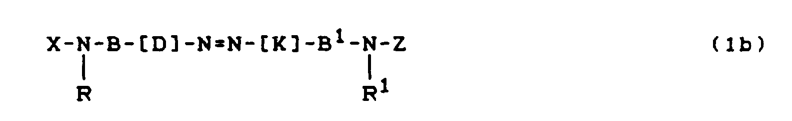 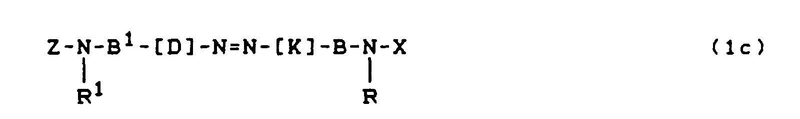 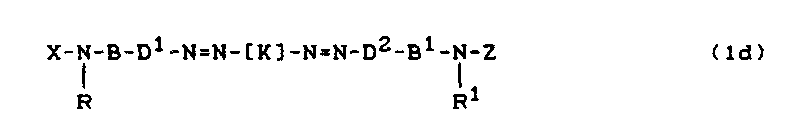 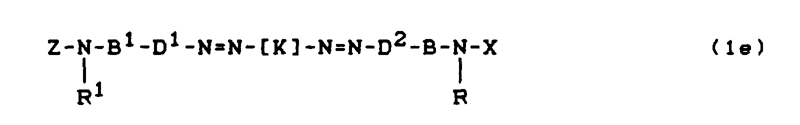 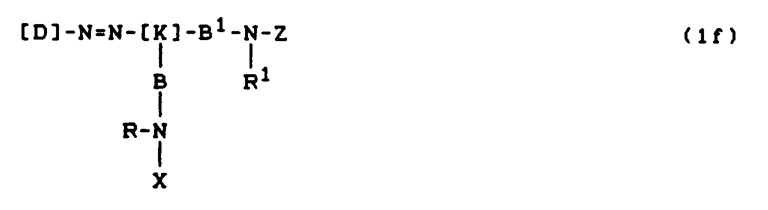 worin
-K- in den Formeln (1d) und (1e) = Rest einer zweifach kuppelnden Kupplungskomponente,
D, D¹, D²= unabhängig voneinander Rest einer Diazokomponente der Benzol- oder Naphthalinreihe,
K= Rest einer Kupplungskomponente der Benzol-, Naphthalin-, Acetessigsäurearylid- oder heterocyclischen Reihe.

4. Farbstoffe des Anspruchs 1 mit Z = faserreaktivem fluorhaltigem Pyrimidyl-4-Rest oder mit Z = 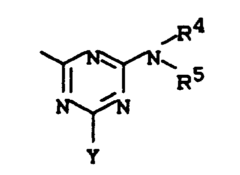 worin R⁴ und R⁵ unabhängig voneinander Wasserstoff, C₁₋₄-Alkyl, das gegebenenfalls substituiert ist durch Halogen, Cyan, C₁₋₄-Alkoxy, Hydroxy, Carboxy, Sulfo oder Sulfato, Benzyl, Phenethyl, Cyclohexyl, Phenyl oder -NHCH₂CH₂OCH₂CH₂-SO₂M (M = -CH=CH₂ oder -CH₂CH₂V mit V = alkalisch eliminierbarer Rest), Phenyl, das gegebenenfalls substituiert ist durch Halogen, Nitro, Cyan, Trifluormethyl, Sulfamoyl, Carbamoyl, C₁₋₄-Alkyl, C₁₋₄-Alkoxy, C₁₋₄-Alkanoylamino, Benzoylamino, Ureido, Hydroxy, Carboxy, Sulfomethyl oder Sulfo oder Naphthyl, das gegebenenfalls substituiert ist durch Halogen, Nitro, C₁₋₄-Alkoxy, C₁₋₄-Alkanoylamino, Hydroxy, Carboxy oder Sulfo, ist,
oder worin R⁴ und R⁵ zusammen mit dem Aminostickstoffatom einen Morpholino-, Piperidino- oder Piperazinorest bilden, und worin Y = Cl, F oder gegegebenenfalls substituierter Pyridiniumrest ist.

5. Farbstoffe des Anspruchs 4
worin R⁴ und R⁵ unabhängig voneinander Wasserstoff, C₁₋₄-Alkyl, das gegebenenfalls substituiert ist durch Halogen, Cyan, C₁₋₄-Alkoxy, Hydroxy, Carboxy, Sulfo oder Sulfato, Benzyl, Phenethyl, Cyclohexyl, Phenyl oder -NHCH₂CH₂OCH₂CH₂-SO₂M (M = -CH=CH₂ oder -CH₂CH₂V mit V = alkalisch eliminierbarer Rest), Phenyl, das gegebenenfalls substituiert ist durch Halogen, Nitro, Cyan, Trifluormethyl, Sulfamoyl, Carbamoyl, C₁₋₄-Alkyl, C₁₋₄-Alkoxy, C₁₋₄-Alkanoylamino, Benzoylamino, Ureido, Hydroxy, Carboxy, Sulfomethyl oder Naphthyl, das gegebenenfalls substituiert ist durch Halogen, Nitro, C₁₋₄-Alkoxy, C₁₋₄-Alkanoylamino, Hydroxy, Carboxy oder Sulfo, ist,
oder worin R⁴ und R⁵ zusammen mit dem Aminostickstoffatom einen Morpholino-, Piperidino- oder Piperazinorest bilden, und worin Y = Cl ist.

6. Farbstoffe des Anspruchs 4
worin R⁴ und R⁵ unabhängig voneinander Wasserstoff, C₁₋₄-Alkyl, das gegebenenfalls substituiert ist durch Halogen, Cyan, C₁₋₄-Alkoxy, Hydroxy, Carboxy, Sulfo oder Sulfato, Benzyl, Phenethyl, Cyclohexyl, Phenyl oder -NHCH₂CH₂OCH₂CH₂-SO₂M (M = -CH=CH₂ oder -CH₂CH₂V mit V = alkalisch eliminierbarer Rest), Phenyl, das gegebenenfalls substituiert ist durch Halogen, Nitro, Cyan, Trifluormethyl, Sulfamoyl, Carbamoyl, C₁₋₄-Alkyl, C₁₋₄-Alkoxy, C₁₋₄-Alkanoylamino, Benzoylamino, Ureido, Hydroxy, Carboxy, Sulfomethyl oder Sulfo oder Naphthyl, das gegebenenfalls substituiert ist durch Halogen, Nitro, C₁₋₄-Alkoxy, C₁₋₄-Alkanoylamino, Hydroxy, Carboxy oder Sulfo, ist,
oder worin R⁴ und R⁵ zusammen mit dem Aminostickstoffatom einen Morpholino-, Piperidino- oder Piperazinorest bilden, und worin Y = F ist.

7. Farbstoffe des Anspruchs 1, worin
Z für 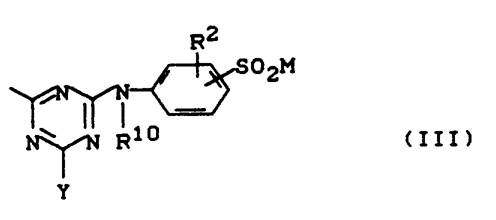 steht, worin
Y = Cl, F oder gegebenenfalls substituierter Pyridiniumrest,
M = CH=CH₂ oder CH₂CH₂-V, worin
V = alkalisch eliminierbarer Rest und
R² = H, Cl, Br, C₁-C₄-Alkyl, C₁-C₄-Alkoxy, CO₂H oder SO₃H.
R¹⁰ = H, gegebenenfalls substituiertes C₁-C₆-Alkyl.

8. Farbstoffe des Anspruchs 1 der Formeln 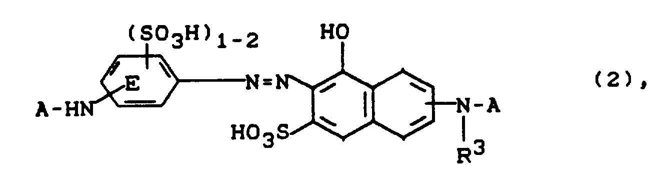 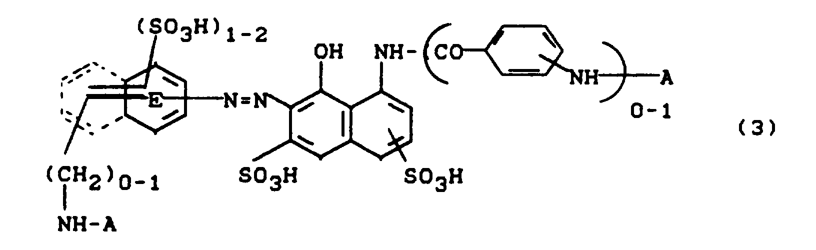 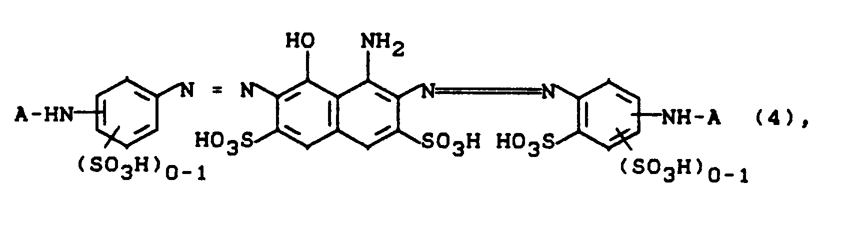 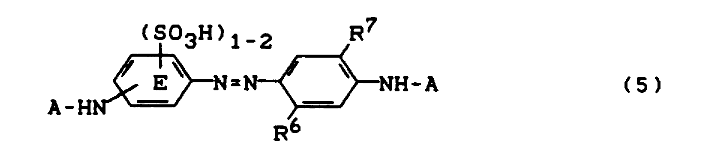 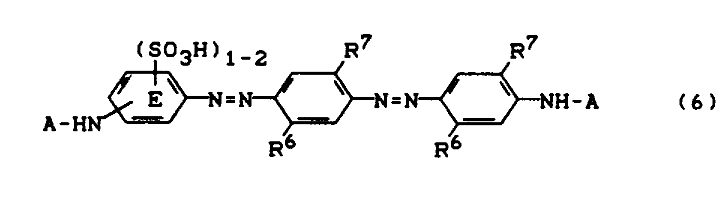 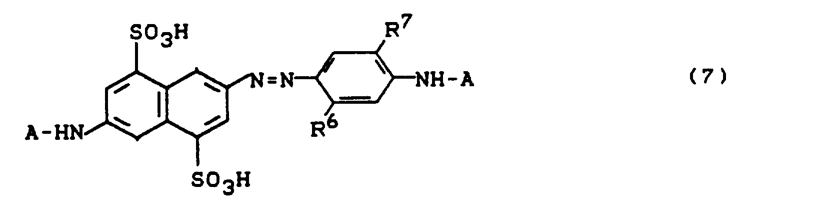 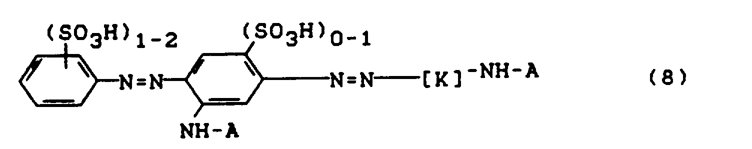 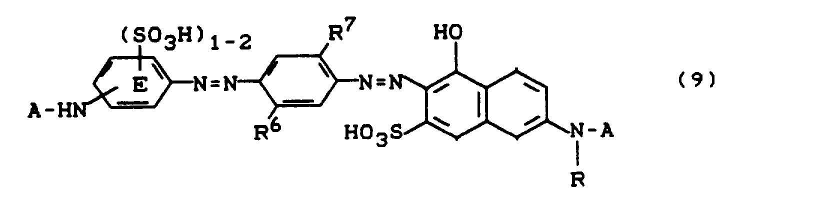 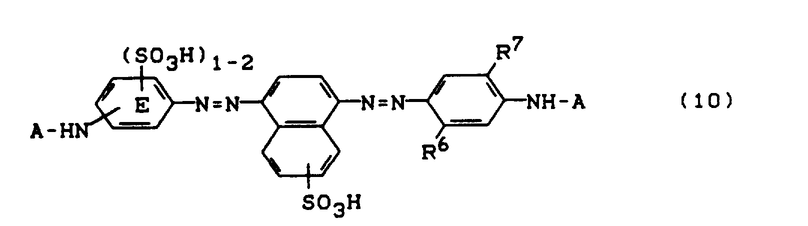 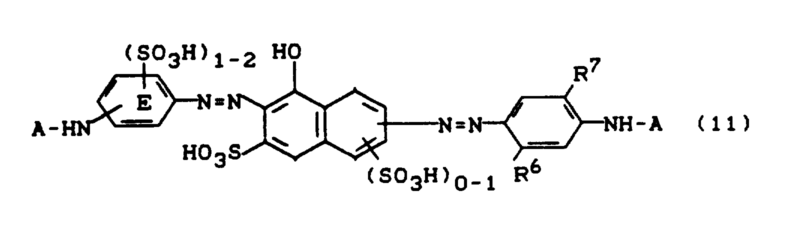 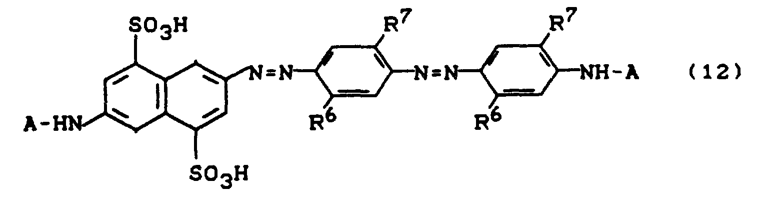 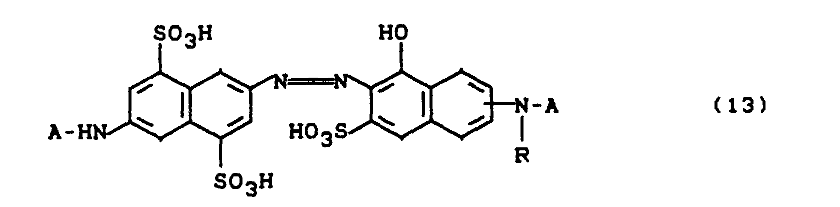 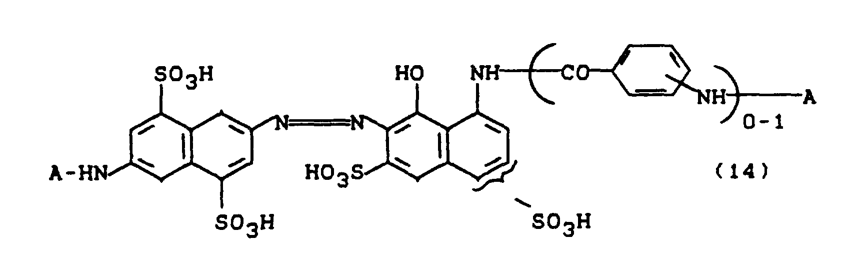 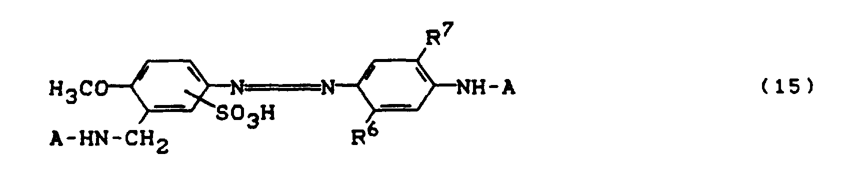 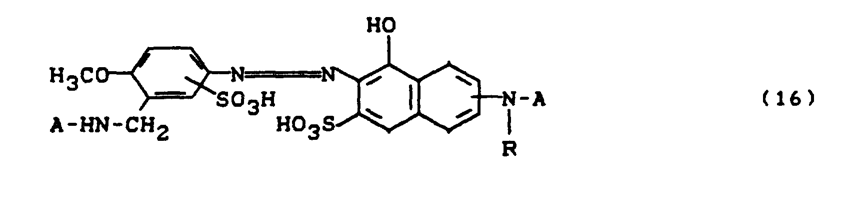 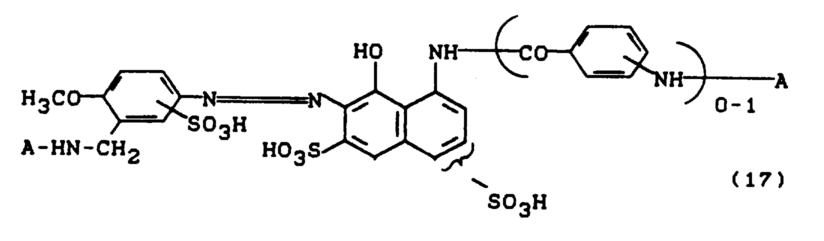 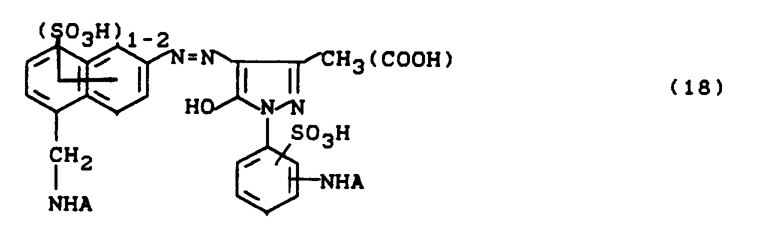 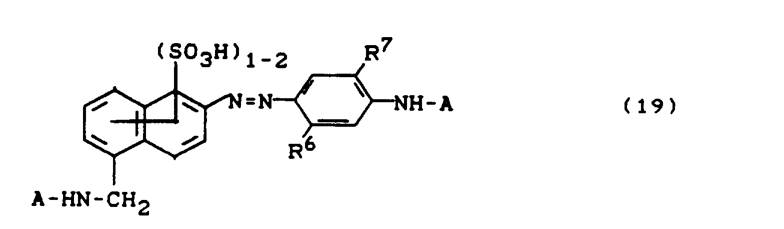 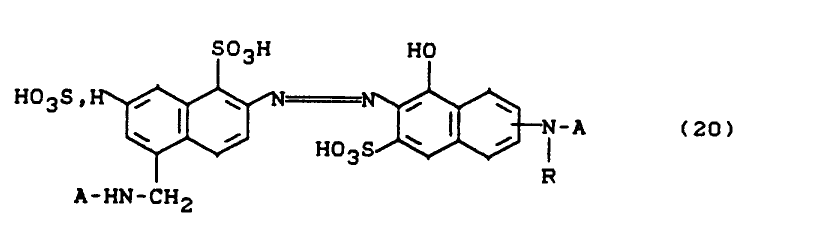 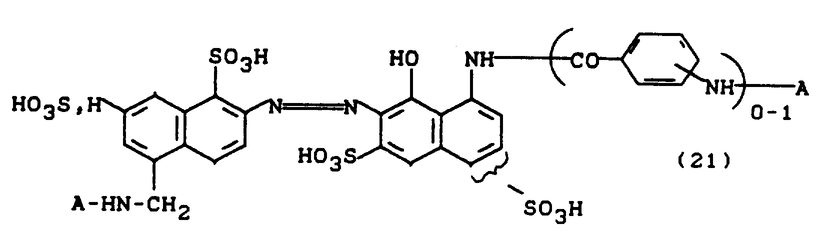 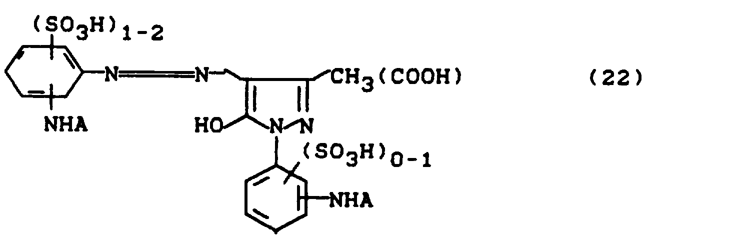 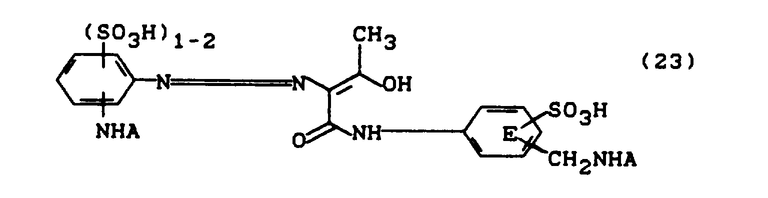 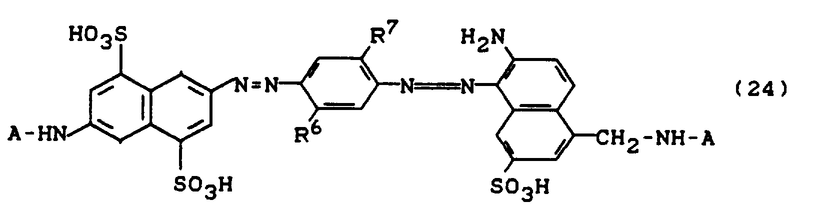 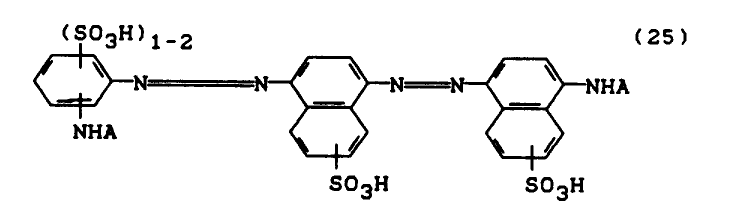 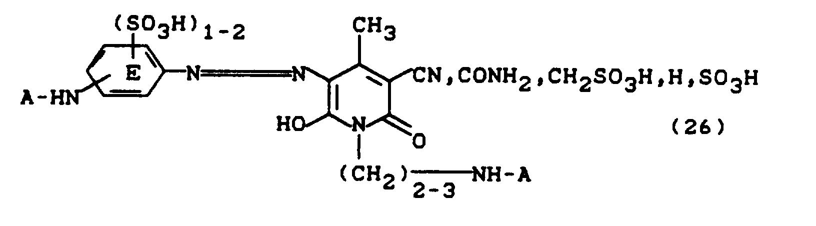 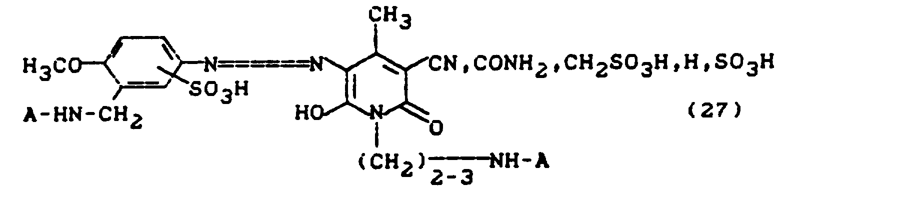 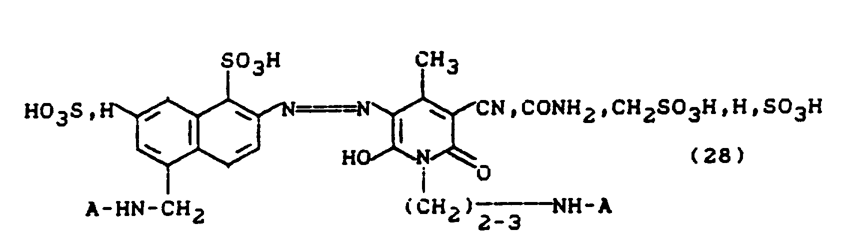 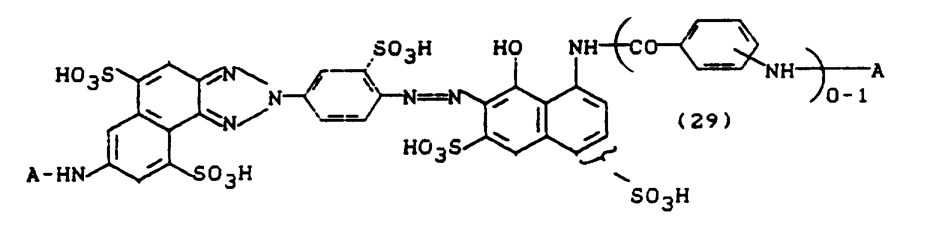 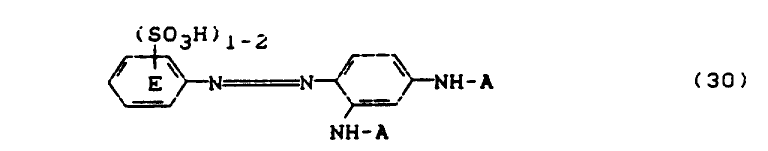 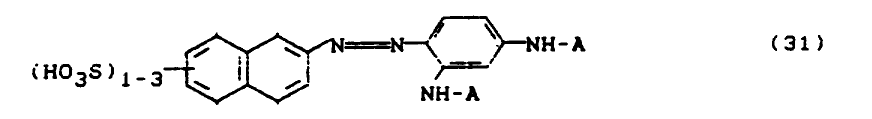 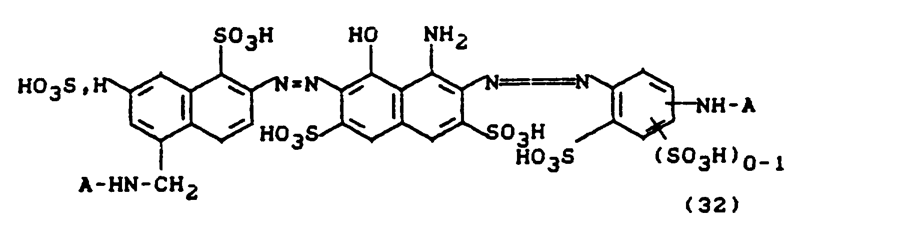 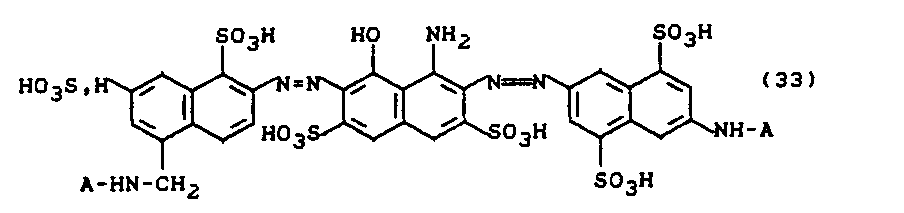 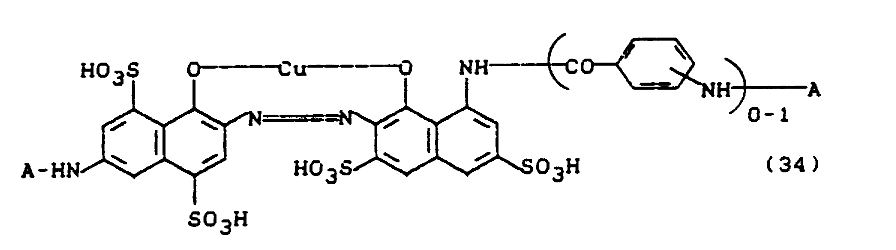 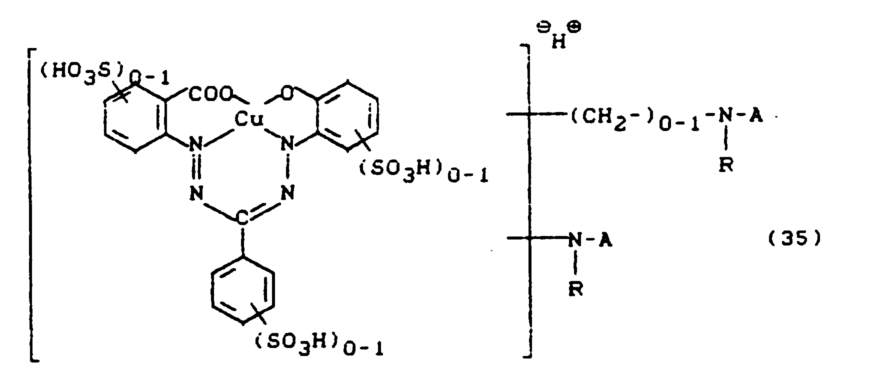 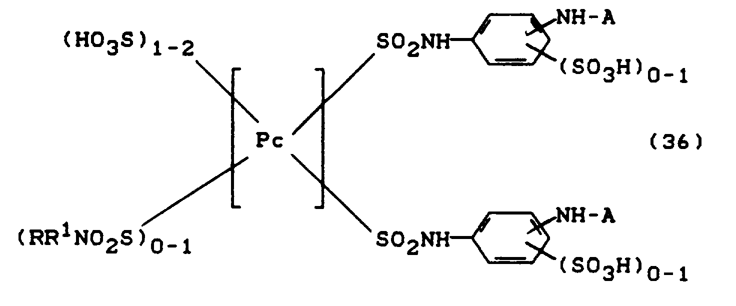 worin Pc für einen Cu- oder Ni-Phthalocyaninrest steht und die Gesamtzahl der Substituenten am PC-Gerüst maximal 4 beträgt; R und R¹ die oben genannte Bedeutung besitzen, 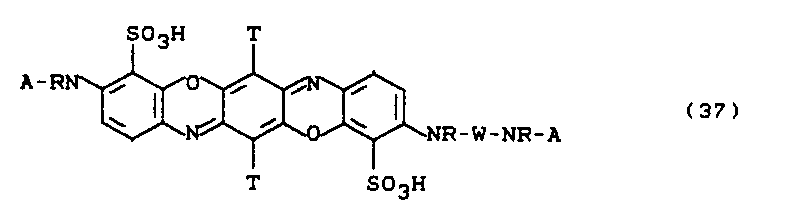 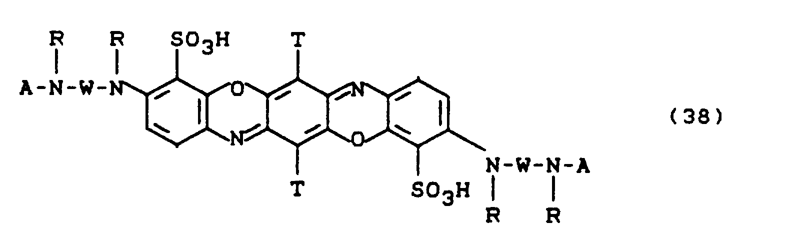 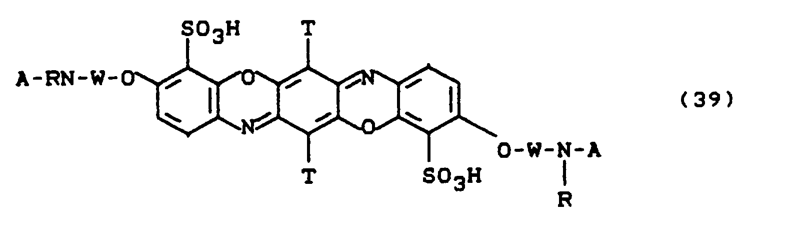 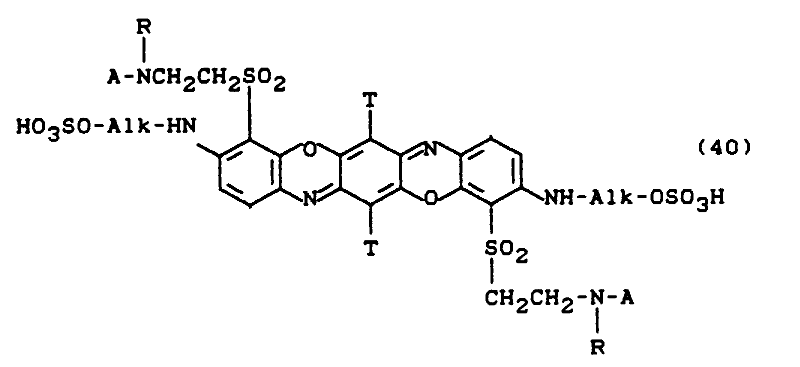 wobei
A = beide Reste A die Bedeutung X gemäß Anspruch 1 haben oder ein A = X und das andere A = Z, wobei Z die in Anspruch 1 angegebene Bedeutung hat,
T = Cl, Br, OCH₃,
R³ = H, CH₃ oder C₂H₅
R⁶ = H, C₁-C₄-Alkyl, C₁-C₄-Alkoxy, Acylamino, C₁-C₄-Alkylsulfonylamino, Aminocarbonylamino, gegebenenfalls substituiertes Phenylcarbonylamino, Cl, Br
R⁷ = H, C₁-C₄-Alkyl, C₁-C₄-Alkoxy, OH, SO₃H.
W= aliphatisches Brückenglied,
Alk = gegebenenfalls durch Heteroatome oder Heteroatome wie N, O oder S enthaltende Gruppierungen unterbrochenes, geradkettiges oder verzweigtes C₁-C₆-Alkylen, und wobei entweder beide A=X sind oder ein A für X und das andere A für Z steht und wobei die Benzolringe E gegebenenfalls weitersubstituiert sind.

9. Farbstoffe des Anspruchs 6 der Formel 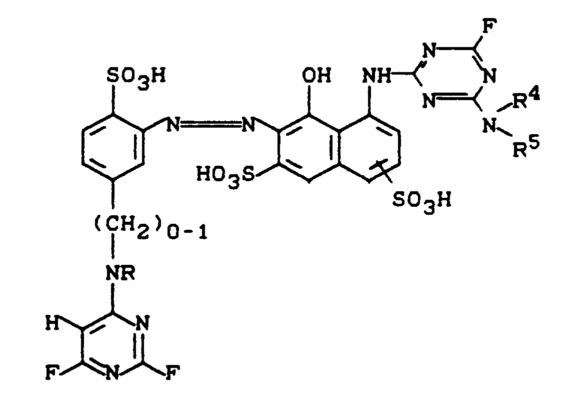 worin R⁴ und R⁵ unabhängig voneinander Wasserstoff, C₁₋₄-Alkyl, das gegebenenfalls substituiert ist durch Halogen, Cyan, C₁₋₄-Alkoxy, Hydroxy, Carboxy, Sulfo oder Sulfato, Benzyl, Phenethyl, Cyclohexyl, Phenyl oder -NHCH₂CH₂OCH₂CH₂-SO₂M (M = -CH=CH₂ oder -CH₂CH₂V mit V = alkalisch eliminierbarer Rest), Phenyl, das gegebenenfalls substituiert ist durch Halogen, Nitro, Cyan, Trifluormethyl, Sulfamoyl, Carbamoyl, C₁₋₄-Alkyl, C₁₋₄-Alkoxy, C₁₋₄-Alkanoylamino, Benzoylamino, Ureido, Hydroxy, Carboxy, Sulfomethyl oder Sulfo oder Naphthyl, das gegebenenfalls substituiert ist durch Halogen, Nitro, C₁₋₄-Alkoxy, C₁₋₄-Alkanoylamino, Hydroxy, Carboxy oder Sulfo, ist,
oder worin R⁴ und R⁵ zusammen mit dem Aminostickstoffatom einen Morpholino-, Piperidino- oder Piperazinorest bilden, und R für H, CH₃ und C₂H₅ steht.

10. Verfahren zum Färben und Bedrucken von Hydroxylgruppen- und Amidgruppen-haltigen Materialien, dadurch gekennzeichnet, daß man Farbstoffe der Ansprüche 1-9 verwendet.

## Claims

1. Reactive dyestuffs of the formula 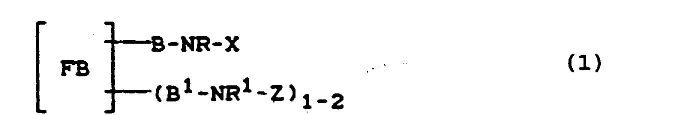 where
FB is the radical of a dyestuff from the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series,
B and B¹, independently of one another, are a direct bond or a bridging member on a ring C atom of an aromatic-carbocyclic or on a ring C atom or ring N atom of an aromatic-heterocyclic ring in FB,
X is 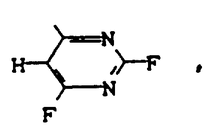
Z is a heterocyclic fibre-reactive radical and
R and R¹, independently of one another, are H, substituted or unsubstituted C₁-C₆-alkyl.

2. Dyestuffs of Claim 1 of the formula 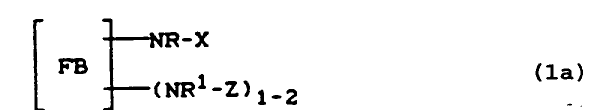 in which the individual groups have the meaning given in Claim 1.

3. Dyestuffs of Claim 1 of the formula 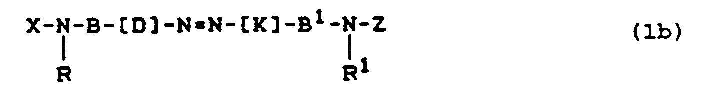 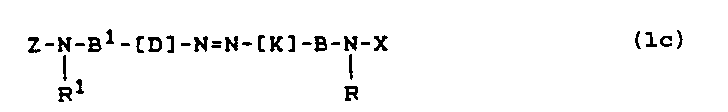 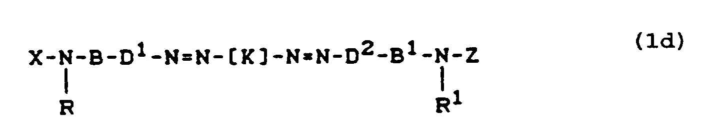 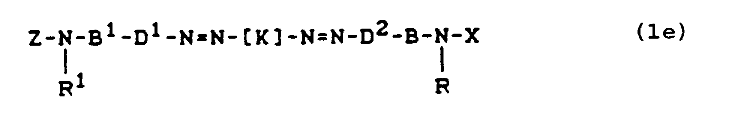 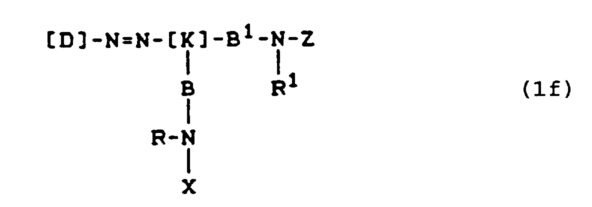 in which
-K- in formulae (1d) and (1e) is the radical of a dicoupling component,
D, D¹, D², independently of one another, are the radical of a diazo component from the benzene or naphthalene series,
K is the radical of a coupling component from the benzene, naphthalene, acetoacetic arylide or heterocyclic series.

4. Dyestuffs of Claim 1, in which Z is a fibre-reactive fluorine-containing 4-pyrimidyl radical or in which Z is 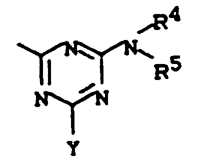 in which R⁴ and R⁵, independently of one another, are hydrogen, C₁₋₄-alkyl, which is unsubstituted or substituted by halogen, cyano, C₁₋₄-alkoxy, hydroxyl, carboxyl, sulpho or sulphato, or are benzyl, phenethyl, cyclohexyl, phenyl or -NHCH₂CH₂OCH₂CH₂-SO₂M (M is -CH=CH₂ or -CH₂CH₂V where V is a radical which can be eliminated by alkali), or are phenyl, which is unsubstituted or substituted by halogen, nitro, cyano, trifluoromethyl, sulphamoyl, carbamoyl, C₁₋₄-alkyl, C₁₋₄-alkoxy, C₁₋₄-alkanoylamino, benzoylamino, ureido, hydroxyl, carboxyl, sulphomethyl or sulpho, or are naphthyl, which is unsubstituted or substituted by halogen, nitro, C₁₋₄-alkoxy, C₁₋₄-alkanoylamino, hydroxyl, carboxyl or sulpho,
or in which R⁴ and R⁵ together with the amino nitrogen atom form a morpholino, piperidino or piperazino radical, and in which Y is Cl, F or a substituted or unsubstituted pyridinium radical.

5. Dyestuffs of Claim 4,
in which R⁴ and R⁵, independently of one another, are hydrogen, C₁₋₄-alkyl, which is unsubstituted or substituted by halogen, cyano, C₁₋₄-alkoxy, hydroxyl, carboxyl, sulpho or sulphato, or are benzyl, phenethyl, cyclohexyl, phenyl or -NHCH₂CH₂OCH₂CH₂-SO₂M (M is -CH=CH₂ or -CH₂CH₂V where V is a radical which can be eliminated by alkali) or are phenyl, which is unsubstituted or substituted by halogen, nitro, cyano, trifluoromethyl, sulphamoyl, carbamoyl, C₁₋₄-alkyl, C₁₋₄-alkoxy, C₁₋₄-alkanoylamino, benzoylamino, ureido, hydroxyl, carboxyl, sulphomethyl or naphthyl, which is unsubstituted or substituted by halogen, nitro, C₁₋₄-alkoxy, C₁₋₄-alkanoylamino, hydroxyl, carboxyl or sulpho,
or in which R⁴ and R⁵ together with the amino nitrogen atom form a morpholino, piperidino or piperazino radical, and in which Y is Cl.

6. Dyestuffs of Claim 4,
in which R⁴ and R⁵, independently of one another, are hydrogen, C₁₋₄-alkyl, which is unsubstituted or substituted by halogen, cyano, C₁₋₄-alkoxy, hydroxyl, carboxyl, sulpho or sulphato, or are benzyl, phenethyl, cyclohexyl, phenyl or -NHCH₂CH₂OCH₂CH₂-SO₂M (M is -CH=CH₂ or -CH₂CH₂V where V is a radical which can be eliminated by alkali), or are phenyl, which is unsubstituted or substituted by halogen, nitro, cyano, trifluoromethyl, sulphamoyl, carbamoyl, C₁₄-alkyl, C₁₋₄-alkoxy, C₁₋₄-alkanoylamino, benzoylamino, ureido, hydroxyl, carboxyl, sulphomethyl or sulpho, or are naphthyl, which is unsubstituted or substituted by halogen, nitro, C₁₋₄-alkoxy, C₁₋₄-alkanoylamino, hydroxyl, carboxyl or sulpho,
or in which R⁴ and R⁵ together with the amino nitrogen atom form a morpholino, piperidino or piperazino radical, and in which Y is F.

7. Dyestuffs of Claim 1, in which
Z represents 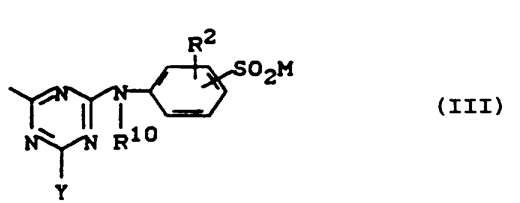 in which
Y is Cl, F or a substituted or unsubstituted pyridinium radical,
M is CH=CH₂ or CH₂CH₂-V, in which
V is a radical which can be eliminated by alkali and
R² is H, Cl, Br, C₁-C₄-alkyl, C₁-C₄-alkoxy, CO₂H or SO₃H,
R¹⁰ is H or substituted or unsubstituted C₁-C₆-alkyl.

8. Dyestuffs of Claim 1 of the formulae 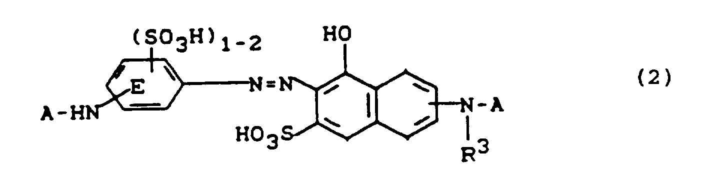 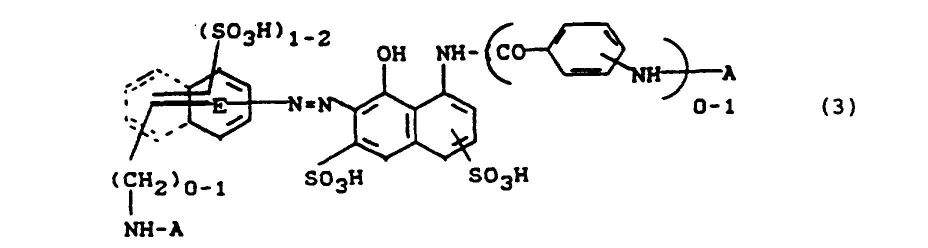 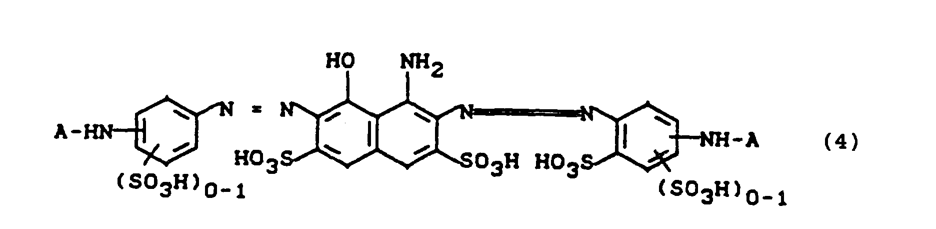 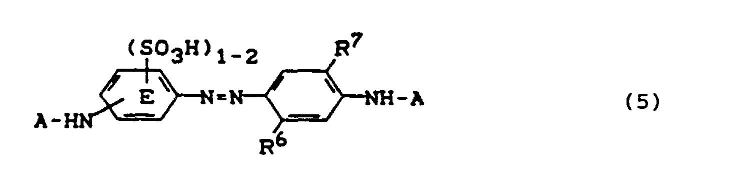 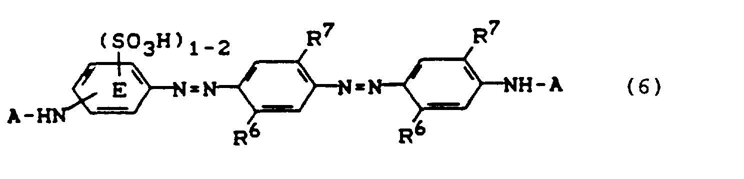 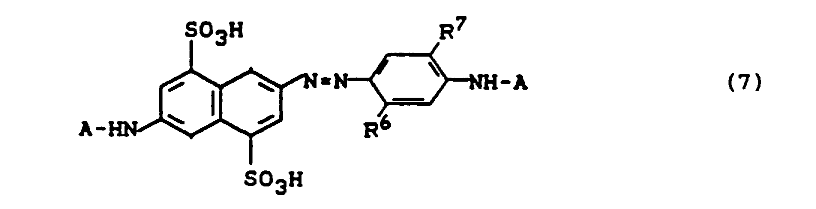 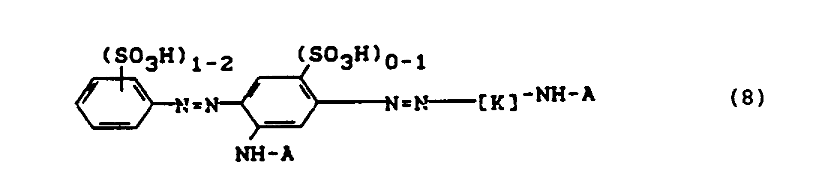 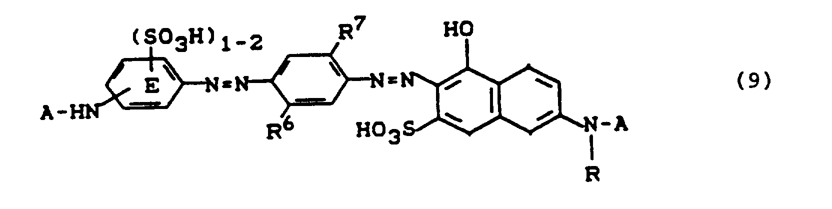 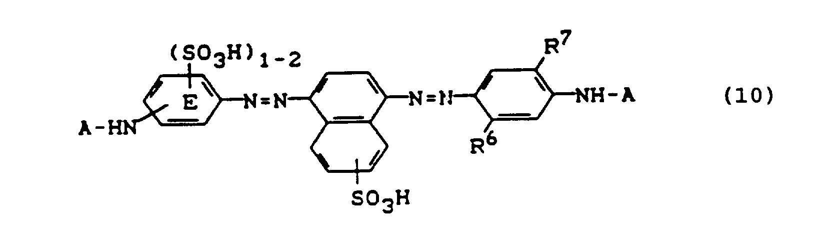 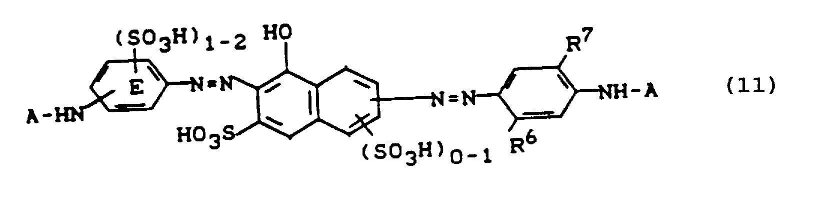 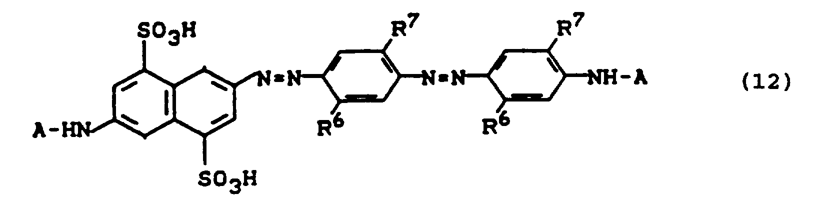 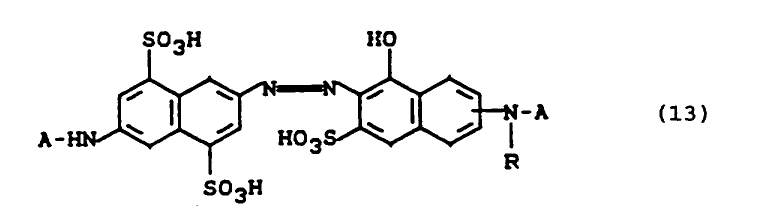 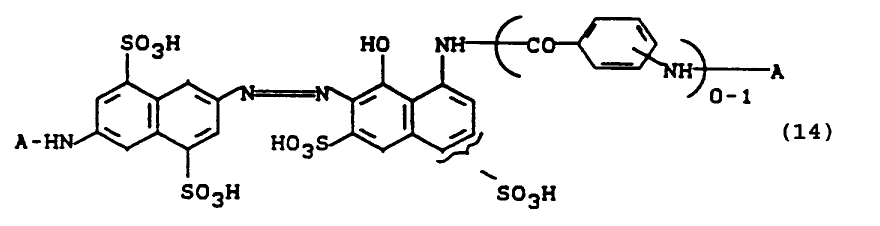 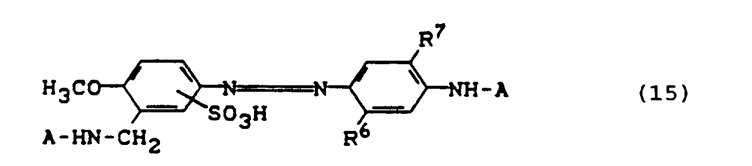 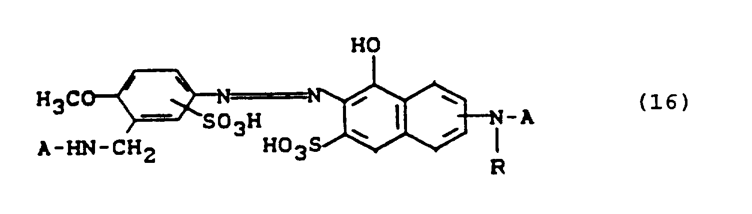 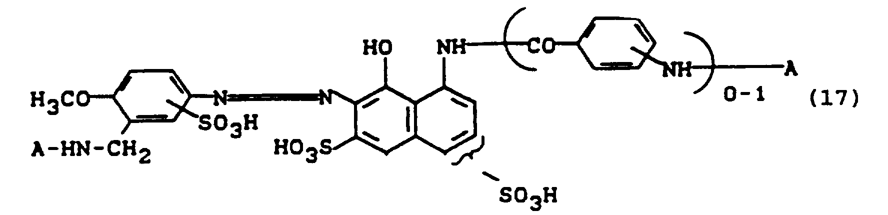 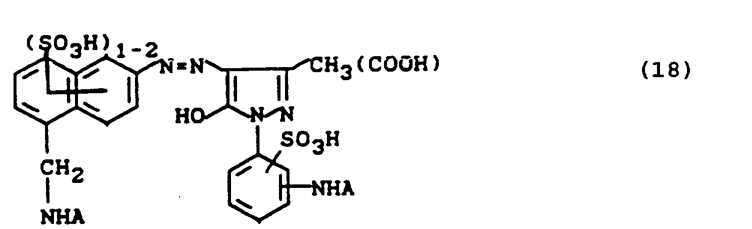 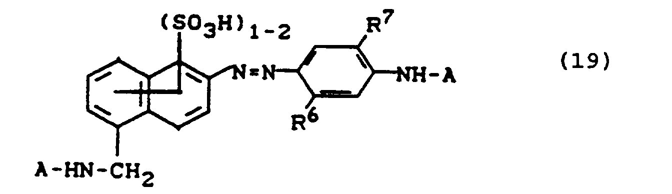 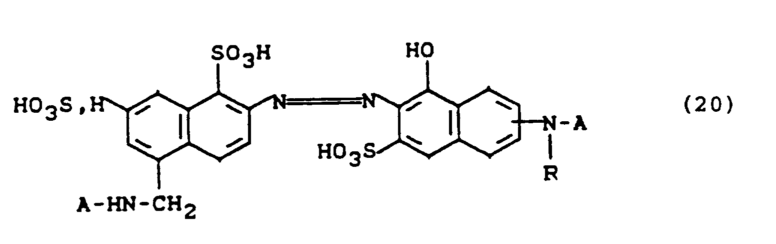 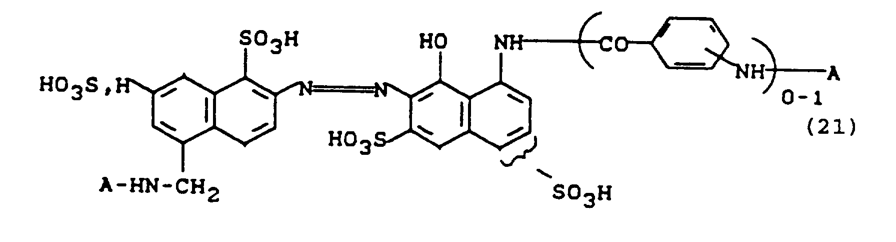 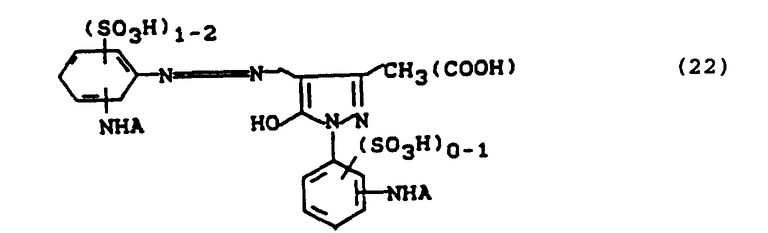 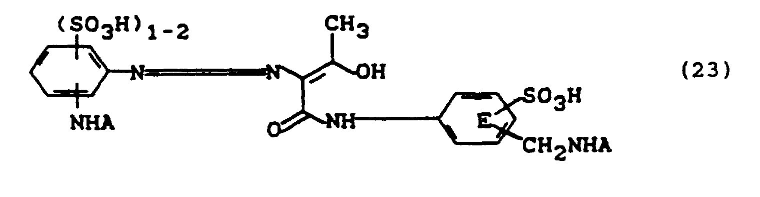 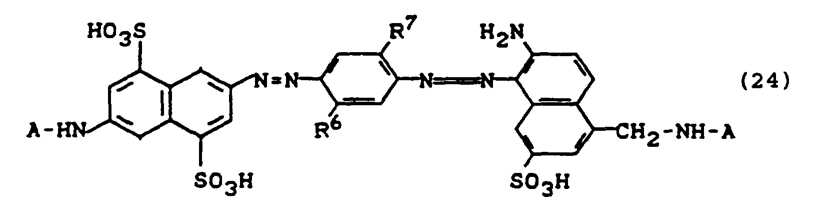 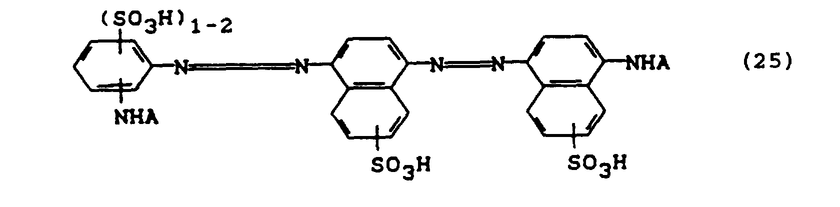 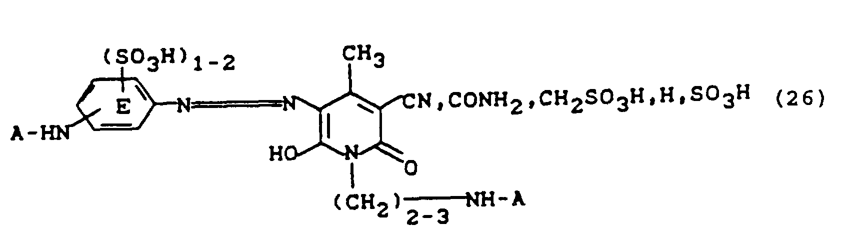 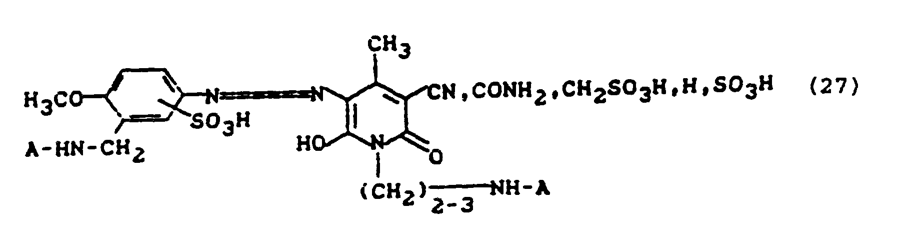 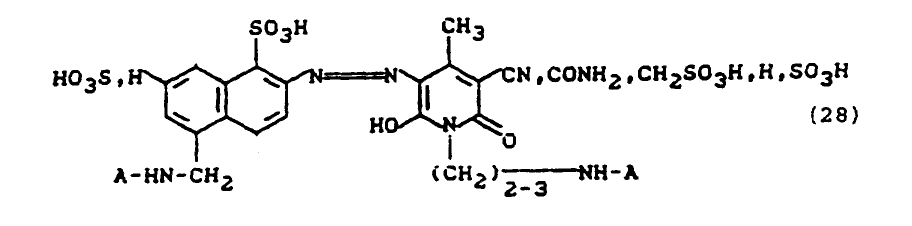 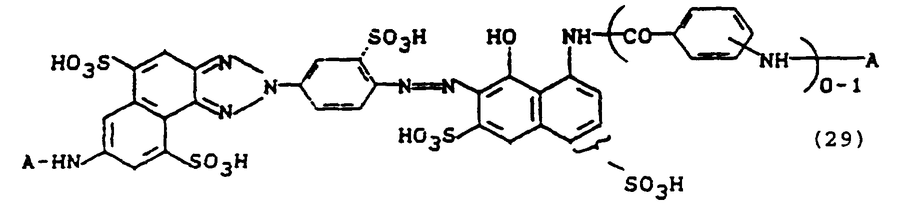 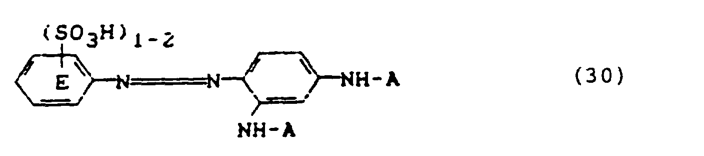 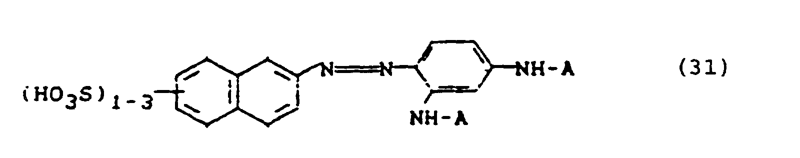 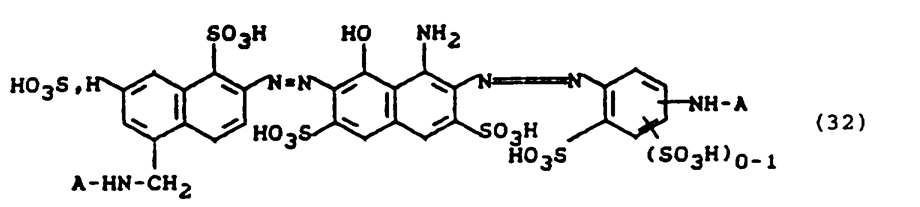 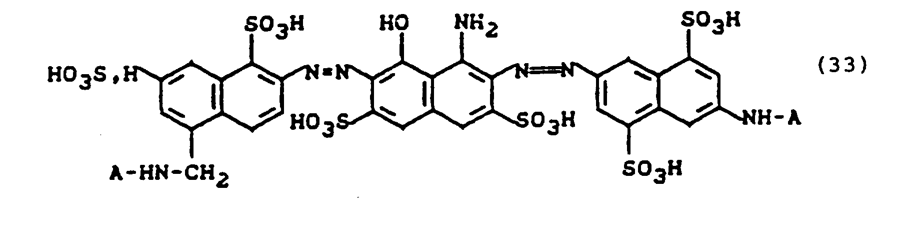 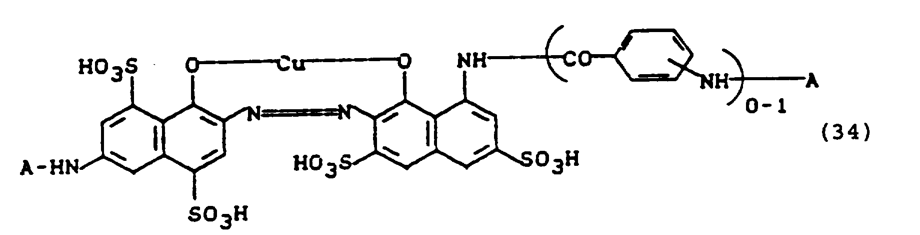 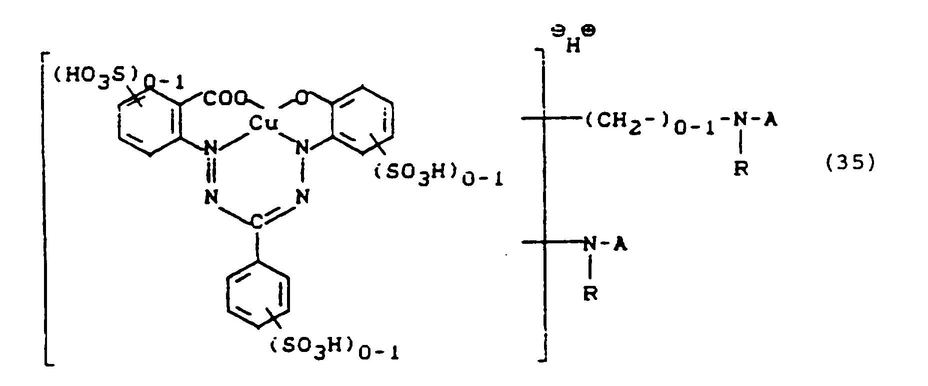 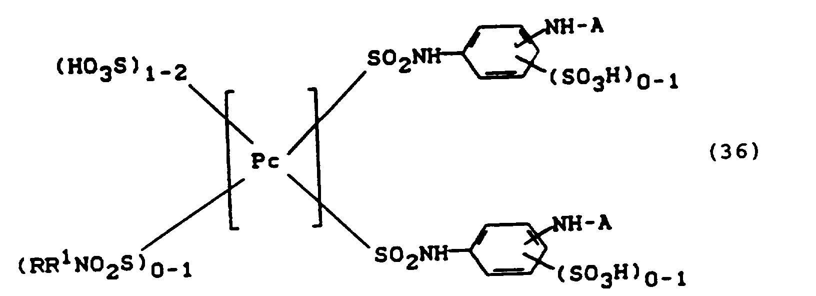 in which Pc represents a Cu phthalocyanine radical or an Ni phthalocyanine radical and the total number of substituents on the PC skeleton is at most 4; R and R¹ have the abovementioned meaning, 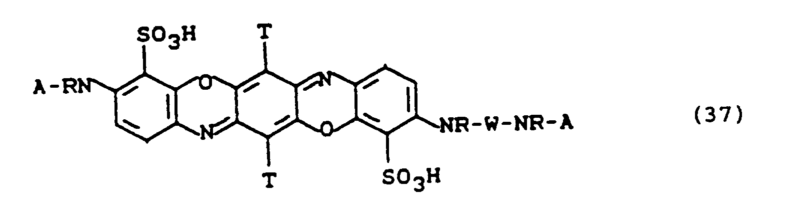 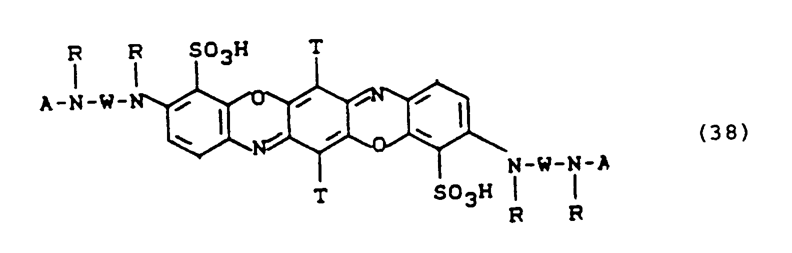 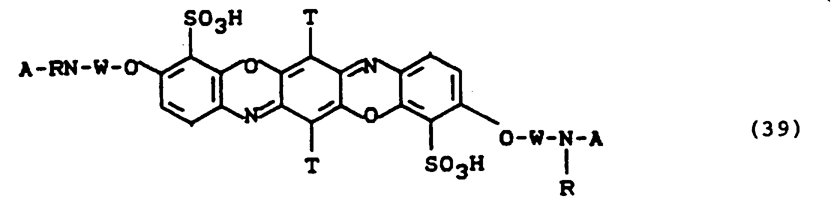 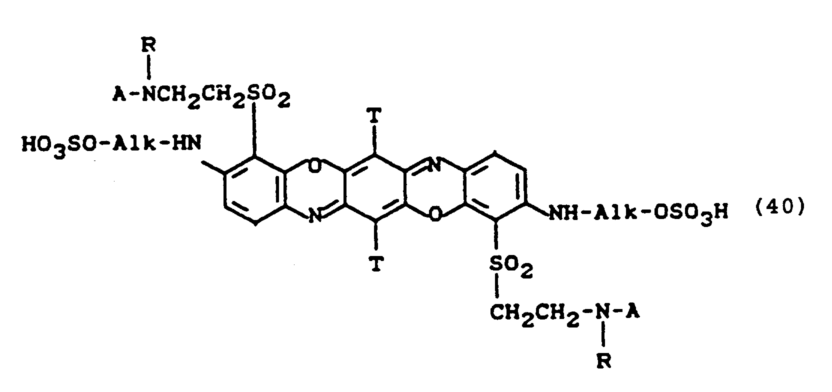 in which
both radicals A have the meaning X according to Claim 1 or one A is X and the other A is Z, Z having the meaning given in Claim 1,
T is Cl, Br or OCH₃,
R³ is H, CH₃ or C₂H₅,
R⁶ is H, C₁-C₄-alkyl, C₁-C₄-alkoxy, acylamino, C₁-C₄-alkylsulphonylamino, aminocarbonylamino, substituted or unsubstituted phenylcarbonylamino, Cl, Br,
R⁷ is H, C₁-C₄-alkyl, C₁-C₄-alkoxy, OH, SO₃H,
W is an aliphatic bridging member,
Alk is straight-chain or branched C₁-C₆-alkylene which may be interrupted by heteroatoms or groupings containing heteroatoms such as N, O or S, and in which either both A are X or one A represents X and the other A represents Z and in which the benzene rings E are, if desired, further substituted.

9. Dyestuffs of Claim 6 of the formula 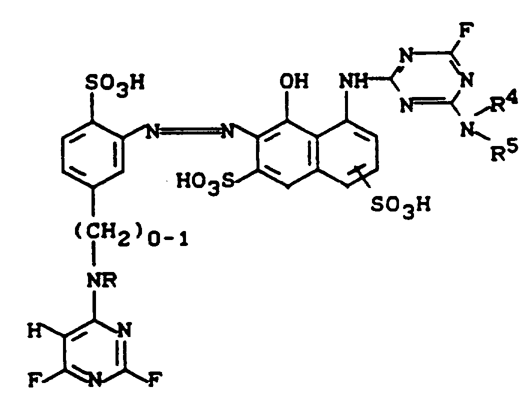 in which R⁴ and R⁵, independently of one another, are hydrogen, C₁₋₄-alkyl, which is unsubstituted or substituted by halogen, cyano, C₁₋₄-alkoxy, hydroxyl, carboxyl, sulpho or sulphato, or are benzyl, phenethyl; cyclohexyl, phenyl or -NHCH₂CH₂OCH₂CH₂-SO₂M (M is -CH=CH₂ or -CH₂CH₂-V where V is a radical which can be eliminated by alkali), or are phenyl, which is unsubstituted or substituted by halogen, nitro, cyano, trifluoromethyl, sulphamoyl, carbamoyl, C₁₋₄-alkyl, C₁₋₄-alkoxy, C₁₋₄-alkanoylamino, benzoylamino, ureido, hydroxyl, carboxyl, sulphomethyl or sulpho, or are naphthyl, which is unsubstituted or substituted by halogen, nitro, C₁₋₄-alkoxy, C₁₋₄-alkanoylamino, hydroxyl, carboxyl or sulpho,
or in which R⁴ and R⁵ together with the amino nitrogen atom form a morpholino, piperidino or piperazino radical and R represents H, CH₃ and C₂H₅.

10. Process for the dyeing and printing of hydroxyl- and amido-containing materials, characterized in that dyestuffs of Claims 1-9 are used.

## Revendications

1. Colorants réactifs de formule 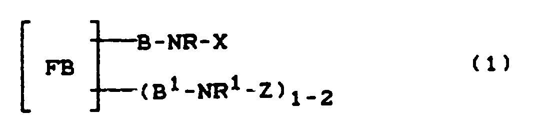 dans laquelle
FB représente le radical d'un colorant des séries mono- ou polyazoïques, azoïques-complexes métalliques, anthraquinoniques, de phtalocyanines, de formazanes, d'azométhines, de dioxazines, de phénazines, stilbéniques, du triphénylméthane, des xanthènes, des thioxanthones, nitroaryliques, de naphtoquinones, de pyrènequinones ou de pérylènetétracarbimides,
B et B¹ représentent chacun, indépendamment l'un de l'autre, une liaison directe ou un pont vers un atome de carbone cyclique d'un noyau aromatique carbocyclique ou vers un atome de carbone ou d'azote cyclique d'un noyau hétérocyclique aromatique de FB,
X = 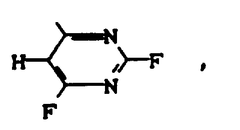
Z représente un radical hétérocyclique réactif avec les fibres et
R et R¹ représentent chacun indépendamment l'un de l'autre, H, un groupe alkyle en C₁-C₆ substitué ou non.

2. Colorants de la revendication 1, de formule 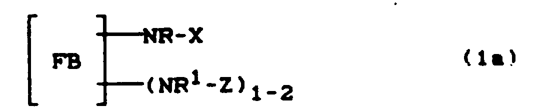 dans laquelle les divers symboles ont les significations indiquées dans la revendication 1.

3. Colorants de la revendication 1, de formules 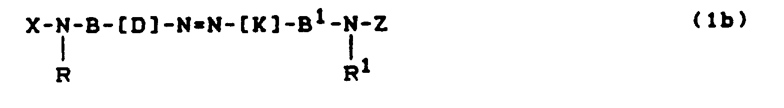 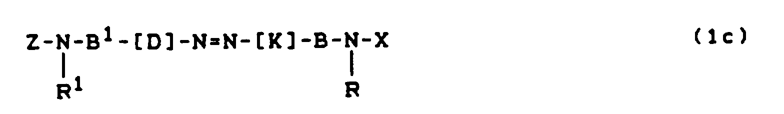 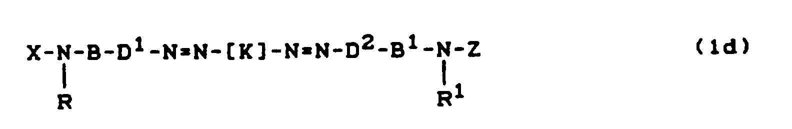 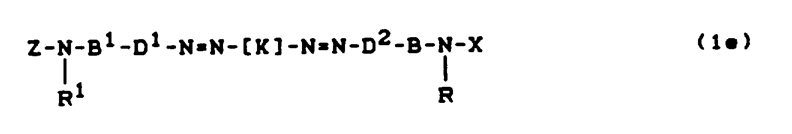 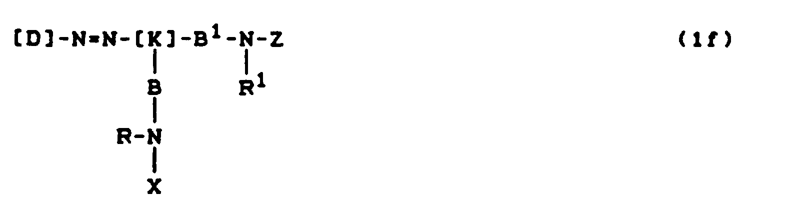 dans lesquelles
le symbole -K- des formules 1d et 1e représente le radical d'un copulant qui copule deux fois,
D, D¹ et D² représentent chacun, indépendamment les uns des autres, le radical d'un composant diazotable de la série benzénique ou naphtalénique,
K représente le radical d'un copulant de la série benzénique, naphtalénique, des acétoacétylarylides ou de la série hétérocyclique.

4. Colorants selon revendication 1 pour lesquels Z représente un radical pyrimidyle-4 fluoré réactif avec les fibres, ou bien Z = 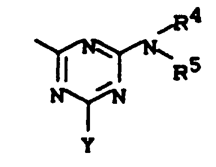 R⁴ et R⁵ représentent chacun, indépendamment l'un de l'autre, l'hydrogène, un groupe alkyle en C₁-C₄ éventuellement substitué par des halogènes, des groupes cyano, alcoxy en C₁-C₄, hydroxy, carboxy, sulfo ou sulfato, benzyle, phénéthyle, cyclohexyle, phényle ou -NHCH₂CH₂OCH₂CH₂-SO₂M (M = -CH₂=CH₂ ou -CH₂CH₂V avec V = groupe éliminable par les alcalis), un groupe phényle éventuellement substitué par des halogènes, des groupes nitro, cyano, trifluorométhyle, sulfamoyle, carbamoyle, alkyle en C₁-C₄, alcoxy en C₁-C₄, alcanoylamino en C₁-C₄, benzoylamino, uréido, hydroxy, carboxy, sulfométhyle ou sulfo ou un groupe naphtyle éventuellement substitué par des halogènes, de groupes nitro, alcoxy en C₁-C₄, alcanoylamino en C₁-C₄, hydroxy, carboxy ou sulfo,
ou bien R⁴ et R⁵ forment ensemble et avec l'atome d'azote aminé un cycle morpholino, pipéridino ou pipérazino, Y = Cl, F ou radical de pyridinium éventuellement substitué.

5. Colorants selon revendication 4
pour lesquels R⁴ et R⁵ représentent chacun, indépendamment l'un de l'autre, l'hydrogène, un groupe alkyle en C₁-C₄ éventuellement substitué par des halogènes, des groupes cyano, alcoxy en C₁-C₄, hydroxy, carboxy, sulfo ou sulfato, benzyle, phénéthyle, cyclohexyle, phényle ou -NHCH₂CH₂OCH₂CH₂-SO₂M (M = -CH=CH₂ ou -CH₂CH₂V avec V = groupe éliminable par les alcalis), un groupe phényle éventuellement substitué par des halogènes, des groupes nitro, cyano, trifluorométhyle, sulfamoyle, carbamoyle, alkyle en C₁-C₄, alcoxy en C₁-C₄, alcanoylamino en C₁-C₄, benzoylamino, uréido, hydroxy, carboxy, sulfométhyle ou un groupe naphtyle éventuellement substitué par des halogènes, des groupes nitro, alcoxy en C₁-C₄, alcanoylamino en C₁-C₄, hydoxy, carboxy ou sulfo,
ou bien R⁴ et R⁵ forment ensemble et avec l'atome d'azote aminé un cycle morpholino, pipéridino ou pipérazino, et Y = Cl.

6. Colorants selon revendication 4
pour lesquels R⁴ et R⁵ représentent chacun, indépendamment l'un de l'autre, l'hydrogène, un groupe alkyle en C₁-C₄ éventuellement substitué par des halogènes, des groupes cyano, alcoxy en C₁-C₄, hydroxy, carboxy, sulfo ou sulfato, benzyle, phénéthyle, cyclohexyle, phényle ou -NHCH₂CH₂OCH₂CH₂-SO₂M (M = -CH=CH₂ ou -CH₂CH₂V avec V = groupe éliminable par les alcalis), un groupe phényle éventuellement substitué par des halogènes, des groupes nitro, cyano, trifluorométhyle, sulfamoyle, carbamoyle, alkyle en C₁-C₄, alcoxy en C₁-C₄, alcanoylamino en C₁-C₄, benzoylamino, uréido, hydroxy, carboxy, sulfométhyle ou sulfo ou un groupe naphtyle éventuellement substitué par des halogènes, des groupes nitro, alcoxy en C₁-C₄, alcanoylamino en C₁-C₄, hydroxy, carboxy ou sulfo,
ou bien R⁴ et R⁵ forment ensemble et avec l'atome d'azote aminé un cycle morpholino, pipéridino ou pipérazino, et Y = F.

7. Colorants selon revendication 1, pour lesquels
Z représente 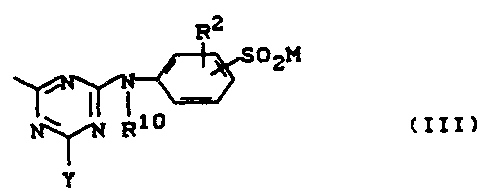
Y = Cl, F ou groupe pyridinium éventuellement substitué,
M = CH=CH₂ ou CH₂CH₂-V avec
V = groupe éliminable par les alcalis et
R² = H, Cl, Br, alkyle en C₁-C₄, alcoxy en C₁-C₄, CO₂H ou SO₃H,
R¹⁰ = H, alkyle en C₁-C₆ éventuellement substitué.

8. Colorants selon revendication 1, de formules 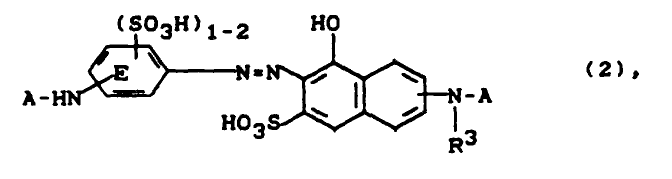 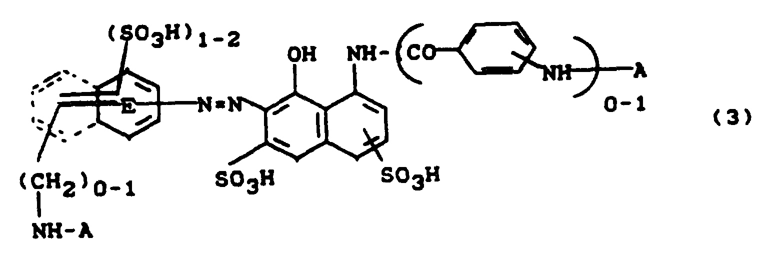 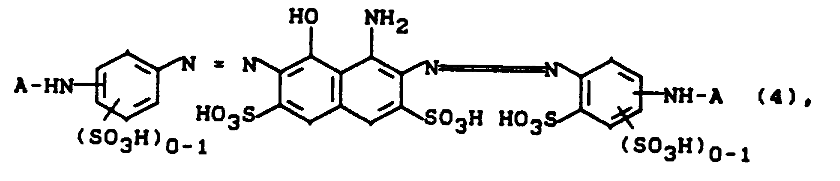 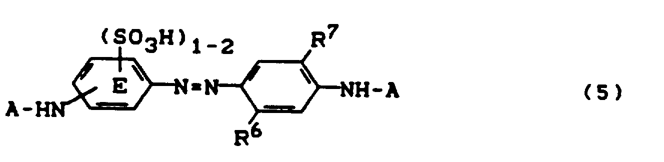 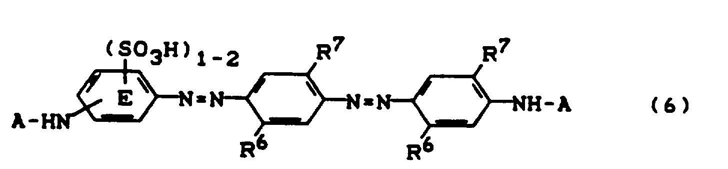 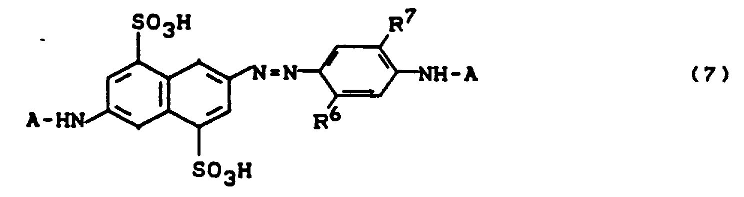 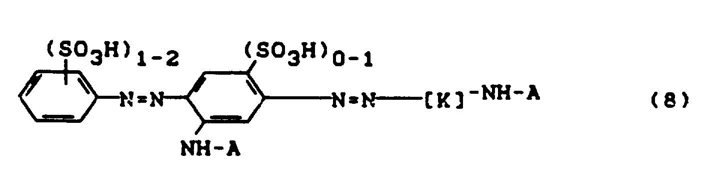 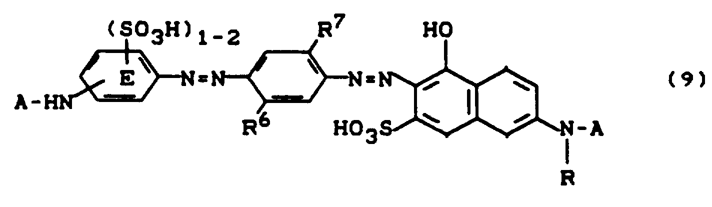 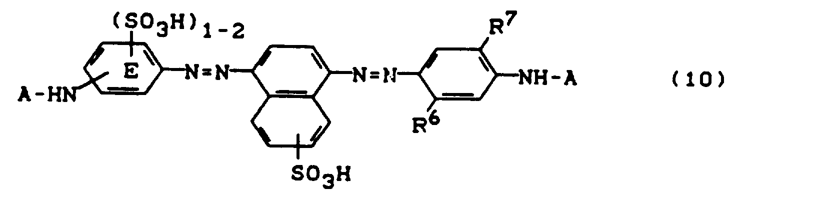 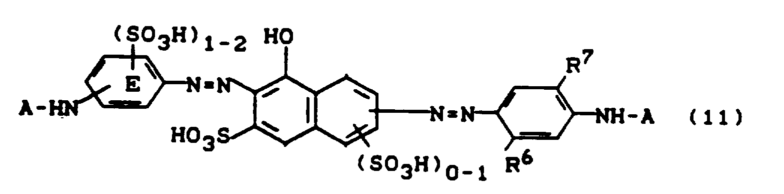 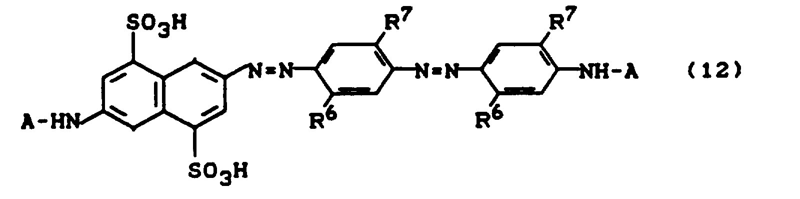 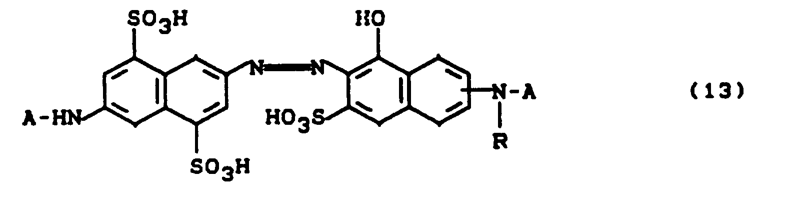 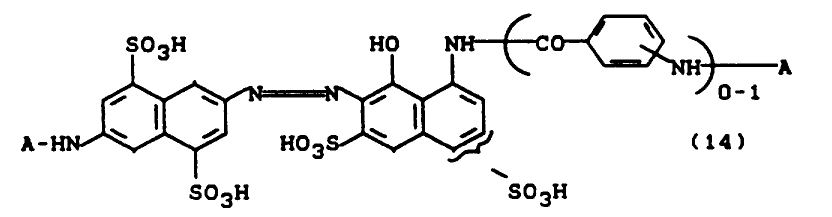 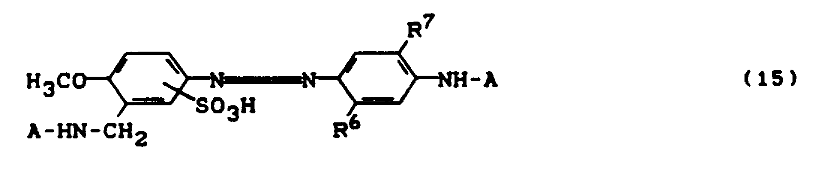 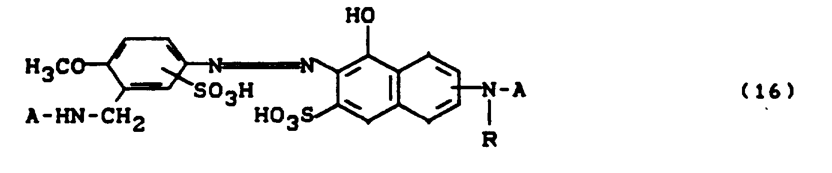 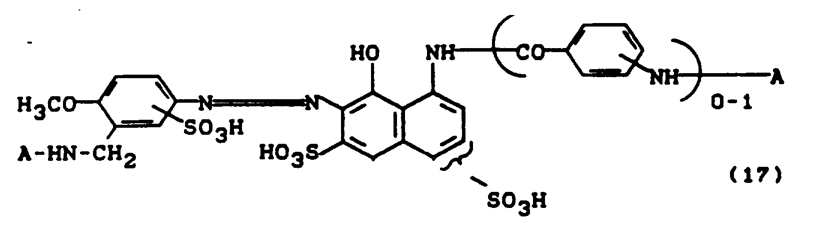 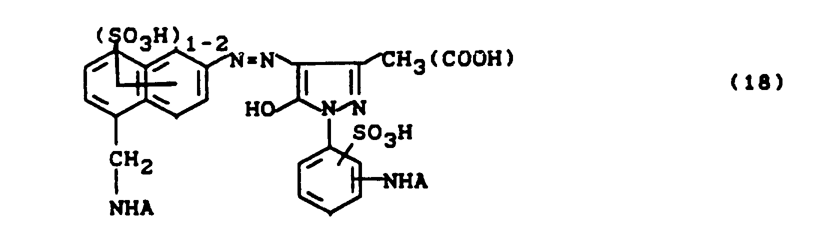 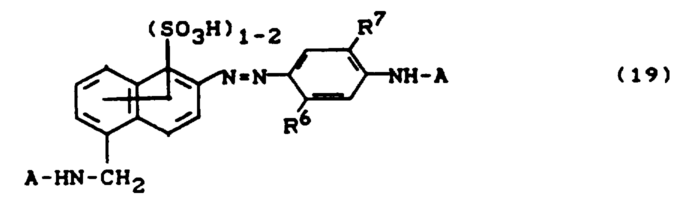 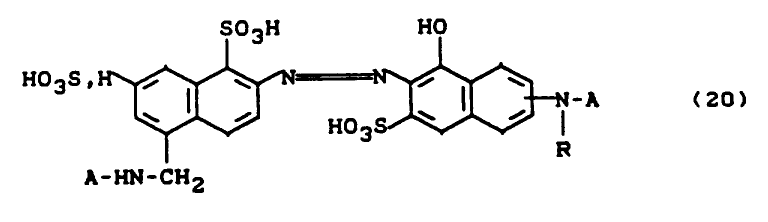 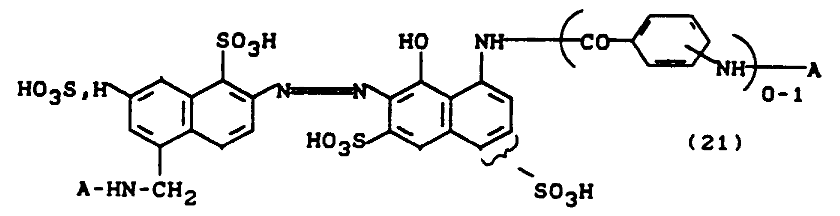 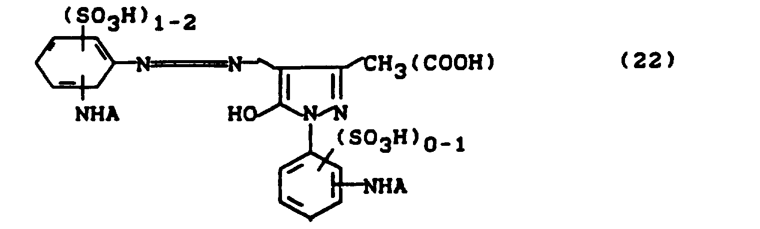 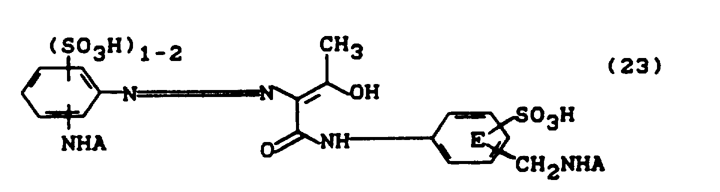 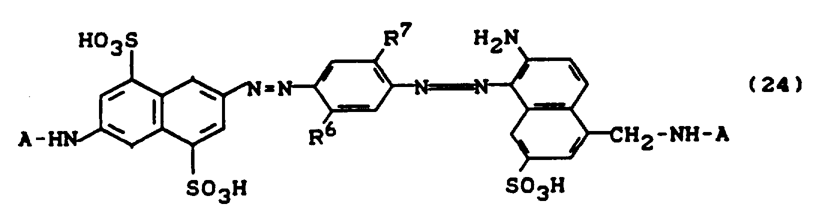 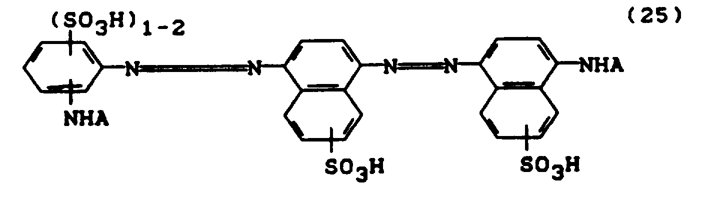 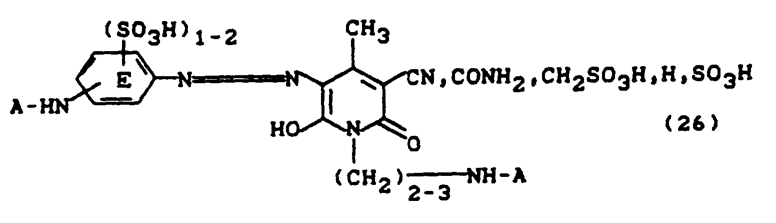 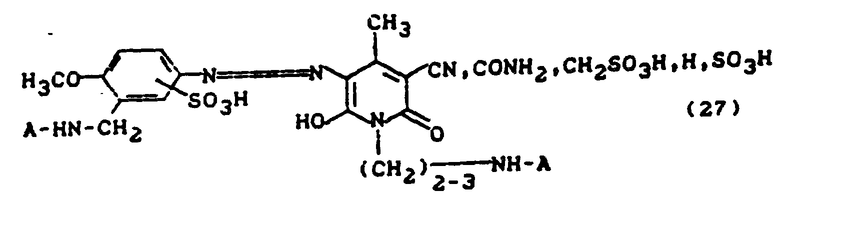 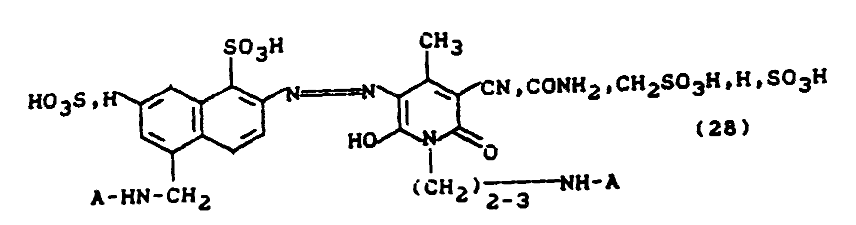 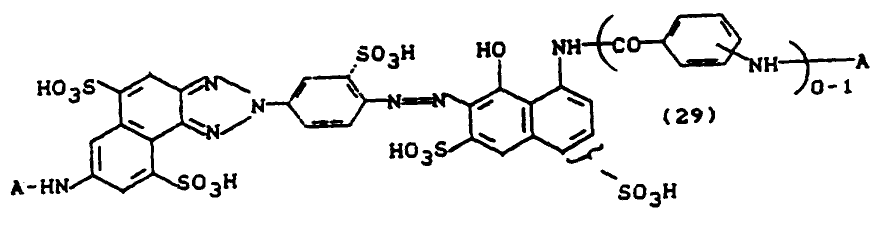 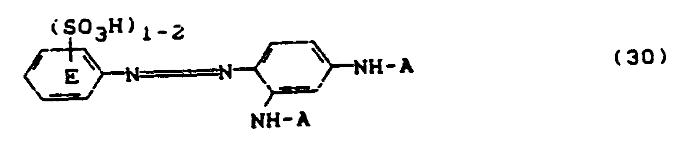 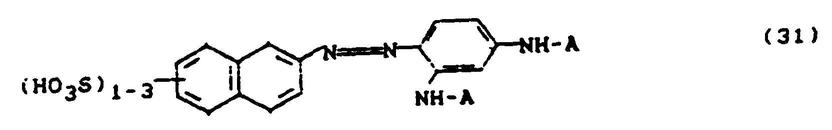 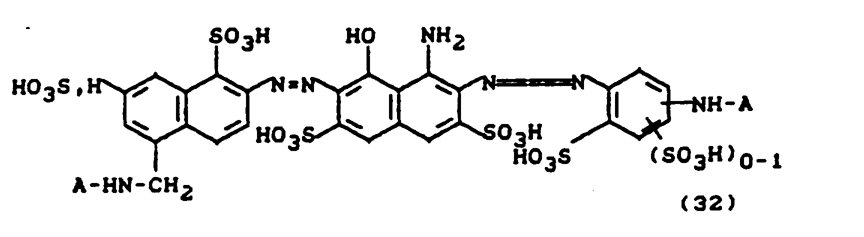 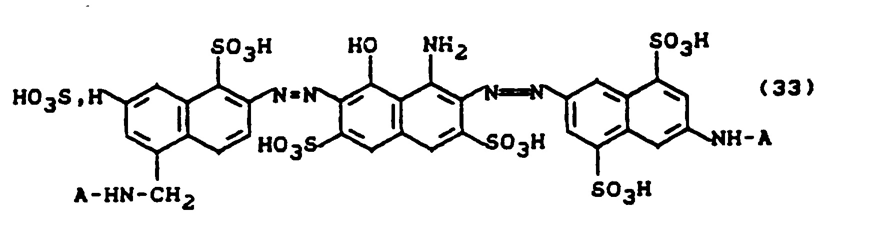 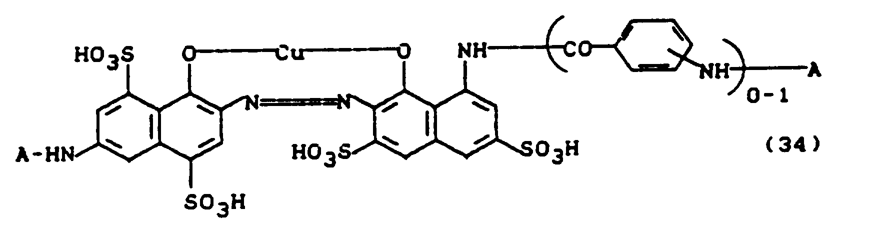 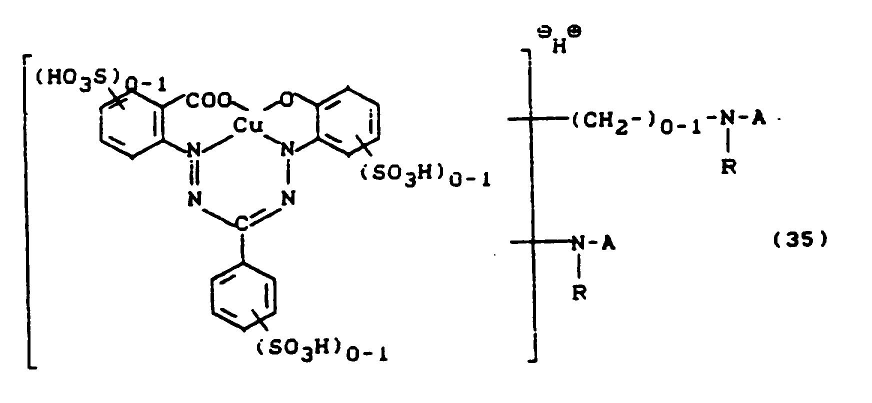 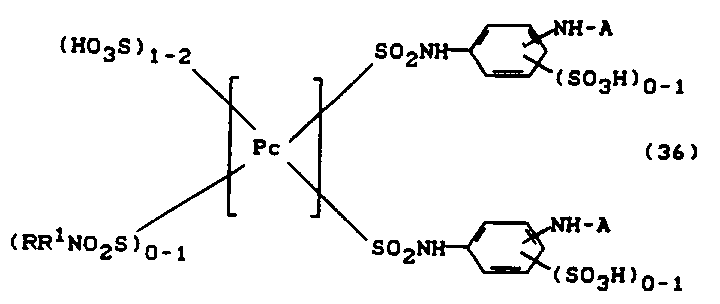 dans laquelle Pc représente un radical de phtalocyanine de cuivre ou de nickel et le nombre total des substituants du squelette Pc est de 4 au maximum ; et R et R¹ ont les significations indiquées ci-dessus, 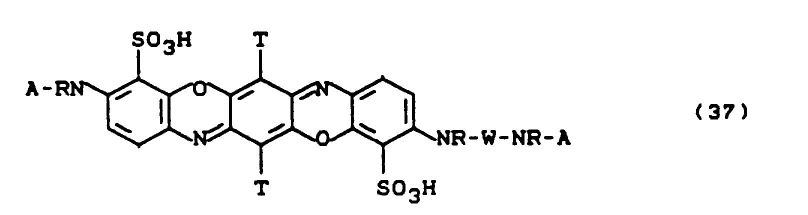 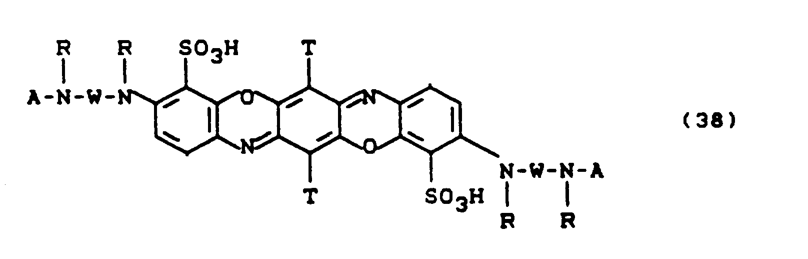 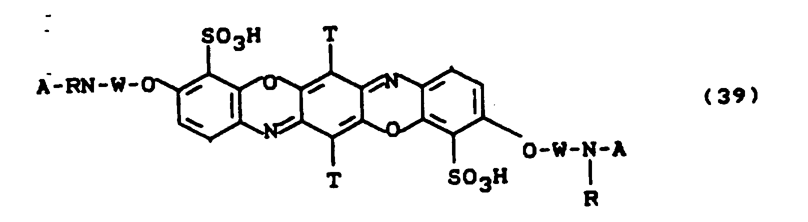 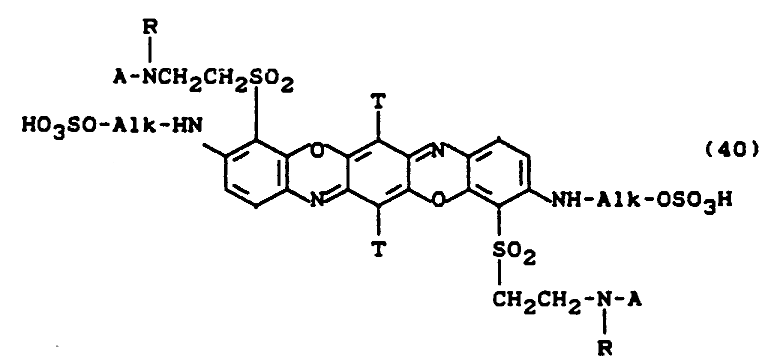 dans lesquelles
les deux symboles A ont les significations de X selon revendication 1 ou bien l'un des symboles A a les significations de X et l'autre les significations de Z, Z ayant les significations indiquées dans la revendication 1,
T = Cl, Br, OCH₃,
R³ = H, CH₃ ou C₂H₅,
R⁶ = H, alkyle en C₁-C₄, alcoxy en C₁-C₄, acylamino, (alkyle en C₁-C₄)sulfonylamino, aminocarbonylamino, phénylcarbonylamino éventuellement substitué, Cl, Br
R⁷ = H, alkyle en C₁-C₄, alcoxy en C₁-C₄, OH, SO₃H,
W = pont aliphatique,
Alk = alkylène à chaîne droite ou ramifiée en C₁-C₆ éventuellement interrompu par des hétéroatomes ou par des groupements contenant des hétéroatomes tels que N, O ou S,
et les deux symboles A ont les significations indiquées pour X ou bien l'un des symboles A a les significations indiquées pour X et l'autre les significations indiquées pour Z,
les cycles benzéniques E pouvant le cas échéant porter d'autres substituants.

9. Colorants selon revendication 6, de formule 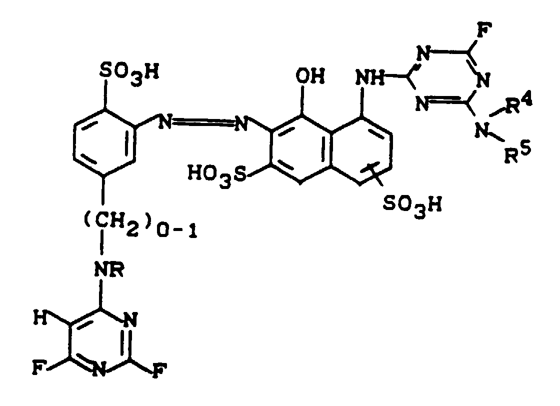 pour lesquels R⁴ et R⁵ représentent chacun, indépendamment l'un de l'autre, l'hydrogène, un groupe alkyle en C₁-C₄ éventuellement substitué par des halogènes, des groupes cyano, alcoxy en C₁-C₄, hydroxy, carboxy, sulfo ou sulfato, benzyle, phénéthyle, cyclohexyle, phényle ou -NHCH₂CH₂OCH₂CH₂-SO₂M (M = -CH=CH₂ ou -CH₂CH₂V avec V = groupe éliminable par les alcalis), un groupe phényle éventuellement substitué par des halogènes, des groupes nitro, cyano, trifluorométhyle, sulfamoyle, carbamoyle, alkyle en C₁-C₄, alcoxy en C₁-C₄, alcanoylamino en C₁-C₄, benzoylamino, uréido, hydroxy, carboxy, sulfométhyle ou sulfo, ou un groupe naphtyle éventuellement substitué par des halogènes, des groupes nitro, alcoxy en C₁-C₄, alcanoylamino en C₁-C₄, hydroxy, carboxy ou sulfo,
ou bien R⁴ et R⁵ forment ensemble et avec l'atome d'azote aminé un cycle morpholino, pipéridino ou pipérazino, et R représente H, CH₃ ou C₂H₅.

10. Procédé pour teindre et imprimer des matières contenant des groupes hydroxy et des agroupes amides, caractérisé en ce que l'on utilise des colorants selon revendications 1 à 9.
